# EUROPEAN PATENT APPLICATION

(11) **EP 4 714 509 A1**
(43) Date of publication of application: **25.03.2026**
(21) Application number: 24806704.3
(22) Date of filing: 15.07.2024
(51) Int. Cl.: A63B 26/00

(54) **FIXING SET**

(30) Priority: 15.05.2023 CN 202310546031; 29.05.2023 CN 202321318359 U; 12.10.2023 CN 202311326313; 21.12.2023 CN 202323493137 U; 22.12.2023 CN 202323528681 U; 09.01.2024 CN 202420048001 U; 19.03.2024 CN 202420539540 U; 26.04.2024 CN 202420890130 U; 05.06.2024 CN 202421277069 U; 06.06.2024 CN 202421292866 U
(71) Applicant: Beyond Power Inc., Shenzhen, Guangdong 518129 (CN)
(72) Inventor: ZHOU, Changxing, Shenzhen, Guangdong 518129 (CN); HUANG, Sirong, Shenzhen, Guangdong 518129 (CN); CHEN, Juncheng, Shenzhen, Guangdong 518129 (CN); PAN, Hongtao, Shenzhen, Guangdong 518129 (CN); ZUO, Qianbin, Shenzhen, Guangdong 518129 (CN); LIANG, Junjie, Shenzhen, Guangdong 518129 (CN); CAI, Xing, Shenzhen, Guangdong 518129 (CN); LAN, Qiu, Shenzhen, Guangdong 518129 (CN); HE, Jinheng, Shenzhen, Guangdong 518129 (CN); CHANG, Wenxin, Shenzhen, Guangdong 518129 (CN)
(74) Representative: De Arpe Tejero, Manuel
(86) International application number: PCT/CN2024/105558
(87) International publication number: WO 2024/235356

(57) **Abstract**

A fixing set is provided. The fixing set includes: a first type fixing member, wherein the first type fixing member is configured to establish a connection with an installation environment, and the first type fixing member is provided with a first coupling seat; a second type fixing member, wherein the second type fixing member is provided with a first coupling seat and a second coupling seat, and the first coupling seat and the second coupling seat are in different positions or different angles, and/or a third type fixing member, wherein the third type fixing member is provided with an installation environment for connection with the first type fixing member, and the third type fixing member is provided with a first coupling seat and/or a second coupling seat; and wherein, the first coupling seat is configured to connect the second coupling seat, a fitness device or a massage device. When used with the fitness device or massage device, the fixing set can adapt to increasingly diverse fitness needs of users.

## Description

### Technical Field

The present disclosure relates to the technical field of fitness device accessories, and in particular, to a fixing set.

### Background Art

When a fitness device is in use, a user interacts with the fitness device, utilizing the power of the fitness device or overcoming the resistance of the fitness device to perform exercise. In the related art, the device usually needs to be fixed. The fixation of the device in the related art is relatively rigid, requiring a base to be provided for the fitness device, or the fitness device to be fixed on a dedicated gantry.

However, any mounting method can only accommodate a single mounting scenario or a limited number of mounting scenarios. For example, the installation of a gantry can be performed only within a frame of the gantry and cannot be performed away from the gantry. The installation expansion of the fitness device is limited and does not meet the increasingly diverse fitness needs of users.

### Summary of the Invention

The present disclosure provides a fixing set capable that can adapt to increasingly diverse fitness needs of users.

A fixing set according to an embodiment of the present disclosure includes:
a first type fixing member, wherein the first type fixing member is configured to establish a connection with an installation environment, and the first type fixing member is provided with a first coupling seat;
a second type fixing member, wherein the second type fixing member is provided with a first coupling seat and a second coupling seat, and the first coupling seat and the second coupling seat are in different positions or different angles, and/or
a third type fixing member, wherein the third type fixing member is provided with an installation environment for connection with the first type fixing member, and the third type fixing member is provided with a first coupling seat and/or a second coupling seat; and
wherein, the first coupling seat is configured to connect the second coupling seat, a fitness device or a massage device.

Additional aspects and advantages of the present disclosure will be partly given in the following description, and partly will become apparent from the following description, or will be learned through the practice of the present disclosure.

### Brief Description of the Drawings

The above and/or additional aspects and advantages of the present disclosure will become apparent and easily understood from the description of the embodiments in conjunction with the following accompanying drawings.
FIG. 1 is a schematic diagram of a ground fixing member according to an embodiment of the present disclosure.
FIG. 2 is a schematic diagram of a fitness device according to an embodiment of the present disclosure.
FIG. 3 is a schematic diagram of a combined state of a ground fixing member and a fitness device according to an embodiment of the present disclosure.
FIG. 4 is a schematic diagram of another combined state of a ground fixing member and a fitness deviceaccording to an embodiment of the present disclosure.
FIG. 5 is a schematic diagram of a heightening plate provided around a quick-plug base in a ground fixing member according to an embodiment of the present disclosure.
FIG. 6 is a schematic diagram of a plurality of installation positions on a base plate main body of a ground fixing member according to an embodiment of the present disclosure.
FIG. 7 is a schematic diagram of a folding mechanism of a folding base plate main body and a heightening plate of a ground fixing member according to an embodiment of the present disclosure.
FIG. 8 is a schematic diagram of a storage space and a handle rod on a base plate main body of a ground fixing member according to an embodiment of the present disclosure.
FIG. 9 is a schematic structural diagram of a top bracket of a wall fixing member in an extended state according to some embodiments.
FIG. 10 is a schematic structural diagram of a bracket of a wall fixing member in a folded state according to some embodiments.
FIG. 11 is a schematic structural diagram of a movable member connected to a guide member according to some embodiments.
FIG. 12 is a top view of a movable member connected to a guide member according to some embodiments.
FIG. 13 is a schematic structural diagram of a movable member according to some embodiments.
FIG. 14 is a side view of a movable member according to some embodiments.
FIG. 15 is a schematic structural diagram of a first locking member according to some embodiments.
FIG. 16 is an exploded schematic diagram of a bracket and a second locking member according to some embodiments.
FIG. 17 is a schematic structural diagram of a rotating seat and an installation structure provided at a second end of a bracket according to some embodiments, in which the rotating seat is rotated to face downward.
FIG. 18 is a schematic structural diagram of a rotating seat and an installation structure provided at a second end of a bracket according to some embodiments, in which the rotating seat is rotated to face upward.
FIG. 19 is a schematic structural diagram of a modified manner of a second locking member according to some embodiments, showing an unlocked state of the second locking member.
FIG. 20 is a schematic structural diagram of a modified manner of a second locking member according to some embodiments, showing an intermediate state of the second locking member.
FIG. 21 is a schematic structural diagram of a modified manner of a second locking member according to some embodiments, showing the critical locked state of the second locking member.
FIG. 22 is a perspective structural view of a hole fixing member according to an embodiment of the present disclosure.
FIG. 23 is an exploded structural view of a hole fixing member according to an embodiment of the present disclosure.
FIG. 24 is an assembly schematic diagram of a hole fixing member according to an embodiment of the present disclosure.
FIG. 25 is a sectional structural view of a nut according to an embodiment of the present disclosure.
FIG. 26 is a schematic diagram of a thread angle of a screw according to an embodiment of the present disclosure.
FIG. 27 is a perspective structural view of a positioning pin according to an embodiment of the present disclosure.
FIG. 28 is a sectional structural view of a positioning pin according to an embodiment of the present disclosure.
FIG. 29 is a perspective structural view of a fixing base of a clamping or bracing fixing member according to an embodiment of the present disclosure.
FIG. 30 is a perspective structural view of a back of a fixing base of a clamping or bracing fixing member according to an embodiment of the present disclosure.
FIG. 31 is a perspective structural view of a fixing base of a clamping or bracing fixing member according to another embodiment of the present disclosure.
FIG. 32 is a perspective structural view of a back of a fixing base of a clamping or bracing fixing member according to another embodiment of the present disclosure.
FIG. 33 is a schematic diagram of a locking plane or a locking hook of a fixing column of a clamping or bracing fixing member according to an embodiment of the present disclosure.
FIG. 34 is a perspective structural view of a fixing base of a clamping or bracing fixing member according to yet another embodiment of the present disclosure.
FIG. 35 is a perspective structural view of a back of a fixing base of a clamping or bracing fixing member according to yet another embodiment of the present disclosure.
FIG. 36 is a schematic structural diagram of a fixing member according to an embodiment of the present disclosure.
FIG. 37 is a schematic diagram of a fixing member fixed on a large-sized frame according to an embodiment of the present disclosure.
FIG. 38 is a schematic diagram of a fixing member fixed on a small-sized frame according to an embodiment of the present disclosure.
FIG. 39 is a schematic diagram of a fixing member fixed on a non-square rectangular frame according to an embodiment of the present disclosure.
FIG. 40 is a schematic diagram of a quick-release structure (fastening structure) according to an embodiment of the present disclosure.
FIG. 41 and FIG. 42 are schematic structural diagrams of a gasket according to an embodiment of the present disclosure.
FIG. 43 is a schematic structural diagram of an adjusting link according to an embodiment of the present disclosure.
FIG. 44 is a schematic structural diagram of a fixing frame according to an embodiment of the present disclosure.
FIG. 45 is another schematic structural diagram of a fixing frame according to an embodiment of the present disclosure.
FIG. 46 is a schematic structural diagram of a temporary fastening apparatus according to an embodiment of the present disclosure.
FIG. 47 is a schematic diagram of an internal structure of a temporary fastening apparatus according to an embodiment of the present disclosure.
FIG. 48 is a reference schematic diagram of a first state of a fixing member when in use according to an embodiment of the present disclosure.
FIG. 49 is a reference schematic diagram of a second state of a fixing member when in use according to an embodiment of the present disclosure.
FIG. 50 is a reference schematic diagram of a third state of a fixing member when in use according to an embodiment of the present disclosure.
FIG. 51 is a perspective structural view of a column fixing member according to an embodiment of the present disclosure.
FIG. 52 is a perspective structural view of a column fixing member according to another embodiment of the present disclosure.
FIG. 53 is a schematic diagram of a clamping block according to an embodiment of the present disclosure.
FIG. 54 is a connection schematic diagram of a frame unit according to an embodiment of the present disclosure.
FIG. 55 is an exploded structural view of a column fixing member according to an embodiment of the present disclosure.
FIG. 56 is a sectional schematic diagram of a region of a quick-release structure according to an embodiment of the present disclosure.
FIG. 57 is a perspective structural view of an unlocking press button according to an embodiment of the present disclosure.
FIG. 58 is an exploded schematic diagram of an unlocking press button relative to a column fixing member according to an embodiment of the present disclosure.
FIG. 59 is a schematic diagram of the cooperation between a locking elastic piece and a locking groove according to an embodiment of the present disclosure.
FIG. 60 is a side view of a locking elastic piece direction of a column fixing member according to an embodiment of the present disclosure.
FIG. 61 is a horizontal sectional schematic diagram of a column fixing member according to an embodiment of the present disclosure.
FIG. 62 is a schematic diagram of the cooperation between an unlocking button and a preloading block according to an embodiment of the present disclosure.
FIG. 63 is a horizontal sectional schematic diagram of a column fixing member according to another embodiment of the present disclosure.
FIG. 64 is an exploded schematic diagram of an adjusting and locking mechanism according to an embodiment of the present disclosure.
FIG. 65 is a perspective structural view of another column fixing member according to an embodiment of the present disclosure.
FIG. 66 is an exploded structural view of another column fixing member according to an embodiment of the present disclosure.
FIG. 67 is a sectional structural view of another column fixing member according to an embodiment of the present disclosure.
FIG. 68 is a perspective structural view of a flexible fixing member and a connecting seat when not tightened according to an embodiment of the present disclosure.
FIG. 69 is a perspective structural view of a flexible fixing member and a connecting seat when tightened according to an embodiment of the present disclosure.
FIG. 70 is a perspective structural view of a flexible fixing member and a connecting seat according to another embodiment of the present disclosure.
FIG. 71 is a partial schematic diagram of a one-way transmission mechanism of a flexible fixing member according to another embodiment of the present disclosure.
FIG. 72 is a partial schematic diagram of a clutch apparatus of a flexible fixing member according to another embodiment of the present disclosure.
FIG. 73 is a schematic diagram of a flexible fixing member according to yet another embodiment of the present disclosure.
FIG. 74 is a schematic diagram of a flexible fixing member and a fixing block according to yet another embodiment of the present disclosure.
FIG. 75 is a schematic structural diagram of a cam wrench of a flexible fixing member when not unlocked according to yet another embodiment of the present disclosure.
FIG. 76 is a schematic structural diagram of a cam wrench of a flexible fixing member when unlocked according to yet another embodiment of the present disclosure.
FIG. 77 is a schematic structural diagram of a four-bar linkage tightening mechanism of yet another flexible fixing member according to the present disclosure.
FIG. 78 is a schematic structural diagram of a wearable training assembly according to an embodiment of the present disclosure.
FIG. 79 is a schematic structural diagram of a wearable fixing member according to an embodiment of the present disclosure.
FIG. 80 is a perspective structural view of a rotating fixing member according to an embodiment of the present disclosure.
FIG. 81 is a perspective structural view of another rotating fixing member according to an embodiment of the present disclosure.
FIG. 82 is a perspective structural view of yet another rotating fixing member according to an embodiment of the present disclosure.
FIG. 83 is an exploded structural view of the rotating fixing member in FIG. 81.
FIG. 84 is an exploded structural view of the rotating fixing member in FIG. 88.
FIG. 85 is a sectional schematic diagram of a pin shaft and a locking disc.
FIG. 86 is a perspective structural view of a cam wrench according to an embodiment of the present disclosure.
FIG. 87 is a schematic diagram of a second coupling seat.
FIG. 88 is a sectional structural view of a second coupling seat.
FIG. 89 is a schematic structural diagram of the interaction between a latching member and a hook.
FIG. 90 is a schematic diagram of a first locking part and a second locking part according to an embodiment.
FIG. 91 is another schematic diagram of a first locking part and a second locking part according to an embodiment.
FIG. 92 is a schematic diagram of a first locking part and a second locking part according to yet another embodiment.
FIG. 93 is another schematic diagram of a first locking part and a second locking part according to yet another embodiment.
FIG. 94 is a perspective structural view of an extension fixing member according to an embodiment of the present disclosure.
FIG. 95 is a schematic diagram of a connection structure of an extension fixing member according to an embodiment of the present disclosure.
FIG. 96 is a schematic diagram of an extension fixing member of a first type fixing member according to an embodiment of the present disclosure.
FIG. 97 is a schematic diagram of an extension fixing member of a second type fixing member according to an embodiment of the present disclosure.
FIG. 98 is a schematic diagram of an extension fixing member of a third type fixing member according to an embodiment of the present disclosure.

### List of Reference Signs:

first coupling seat 11; second coupling seat 12;
21-first type fixing member;
a100-fitness base plate; a110-base plate main body; a111-mounting position; a130-heightening plate; a140-folding mechanism; a150-storage space; a160-hand lever; a170-base plate handle;
a200-fitness device; a210-housing; a230-power output device; a240-resistance output device; a250-reel; a260-cordage;
b100-wall fixing member;
b10-guide member; b11-fixing hole; b12-first side wall; b13-second side wall; b14-sliding groove; b15-third side wall; b16-fourth side wall; b17-fifth side wall; b18-sixth side wall;
b20-movable member; b20a-sliding member; b211-sliding portion; b212-mounting portion; b213-first extension portion; b214-second extension portion; b22-first rolling assembly; b221-first rolling member; b23-second rolling assembly; b231-second rolling member; b24-third rolling assembly; b241-third rolling member;
b30-first locking member; b31-first cam portion; b32-first operating portion;
b40-bracket; b41-first end; b42-second end;
b50-second locking member; b51-support base; b511-mounting groove; b52-support rod; b53-locking structure; b531-second cam portion; b532-second operating portion; b54-first link; b55-second link; b56-top block; b57-wall fixing member handle;
b60-rotating seat; b70-limiting structure; b80-damping structure; b90-installation structure.
c100-hole fixing member;
c10-hole fixing base; c12-sliding slot;
c20-screw;
c30-nut; c31-rotating seat; c311-through hole; c312-mounting cavity; c32-half nut; c33-elastic member; c34-unlocking apparatus;
c40-positioning pin; c41-pin rod; c411-positioning shoulder; c42-pin sleeve; c421-mounting space; c422-positioning groove; c43-anti-loosening sleeve.
d100-clamping or bracing base body;
d110-first coupling seat;
d120-first fastening mechanism; d121-first transmission mechanism; d122-fixing column; d1221-notch; d1222-locking plane;
d130-second fastening mechanism; d131-second transmission mechanism; d132-connecting rod; d133-first tightening block;
d140-third fastening mechanism; d141-third transmission mechanism; d142-second tightening block; d143-second tightening surface;
d150-handle;
f100-fixing frame; f101-fixing plane; f110-first structural block; f111-first notch; f120-second structural block; f121-second notch; f131-fixing through hole; f132-fixing pin; f140-anti-slip pad; f150-elastic pad;
f200-adjusting link; f210-adjusting shaft; f220-adjusting bolt; f230-connecting block; f231-strip-shaped hole; f240-adjusting handle;
f300-quick-release structure; f310-fixing hook; f320-connecting shaft; f330-quick-release cam; f340-rotating handle; f350-gasket; f360-floating frame; f361-floating hole;
f400-fastening structure; f410-fixing groove; f420-fastening shaft; f430-fastening cam; f440-fastening handle; f401-first part; f402-second part;
f500-temporary fastening apparatus; f501-mounting groove; f510-elastic block; f520-unlocking block; f530-wedge structure;
f900-frame.
g100-column fixing member; g10-outer frame; g110-accommodating space; g11-frame unit; g111-mounting portion; g1111-mounting hole; g112-avoidance position; g12-locking elastic piece; g13-locking groove; g14-outer frame handle; g15-sliding slot; g16-guide groove;
g20-clamping block; g21-pressing seat; g22-replacement block;
g30-adjusting and locking mechanism; g31-adjusting handle; g311-outer handle; g312-protection block; g32-adjusting screw; g33-adjusting nut; g341-first slope; g342-second slope; g343-first step; g344-second step; g345-positioning bead; g346-positioning slot;
g41-hinge structure; g42-quick-release structure; g421-telescopic pin; g42g11-guide slope; g422-insertion hole; g423-unlocking press button; g4231-locking flange; g4232-compression groove; g4233-rotation groove;
g50-preloading apparatus; g51-preloading block; g512-slider; g511-pressing block; g52-preloading spring; g53-unlocking handle; g54-unlocking button;
h100-column fixing member; h11-first main body; h12-second main body; h13-outer through hole; h14-enclosure; h15-mounting groove; h21-cushion block; h22-inner through hole.
i100-connecting seat; i110-first coupling seat;
i200-cordage or cable; i210-length adjusting apparatus; i220-fixing block;
i300-tightening apparatus;
i310-reel; i320-tightening member; i330-first one-way transmission mechanism; i331-outer ratchet; i332-outer pawl; i340-clutch apparatus; i341-unlocking bar; i350-second one-way transmission mechanism; i351-inner ratchet; i352-inner pawl;
i400-handle; i410-cam wrench; i420-link; i430-handle locking mechanism;
j200-wearable training assembly; j201-fitness device; j202-training belt;
j100-wearable fixing member;
j10-body fixing belt; j11-waist belt; j12-shoulder belt; j13-adjusting structure; j14-quick connection structure; j15-sliding seat; j16-handle;
e100-rotating fixing member;
e10-first seat; e11-first connecting rib; e12-first connecting groove; e13-rotating shaft hole; e14-reinforcing rib;
e20-second seat; e21-second connecting rib; e22-second connecting groove;
12-first coupling seat; e31-hook groove;
e40-damping rotating shaft; e41-damping sheet;
e50-angle locking apparatus; e51-locking disc; e52-pin shaft; e53-cam wrench;
11-second coupling seat; e61-hook;
e70-latching member; e71-handle; e72-first locking part; e73-second locking part; e74-second elastic member;
k100-extension base; k110-protective plate;
k200-extension rod; k210-through hole; k211-first through hole; k212-second through hole;
k300-connecting pin.

### Detailed Description of Embodiments

Embodiments of the present disclosure are described in detail below, and examples of the embodiments are shown in accompanying drawings, wherein the same or similar reference numerals represent the same or similar elements or elements having the same or similar functions. The embodiments described below with reference to the accompanying drawings are illustrative and are intended to explain the present disclosure and should not be construed as limiting the present disclosure.

In the description of the present disclosure, it should be understood that terms such as "center", "longitudinal", "transverse/lateral", "length", "width", "thickness", "up", "down", "front", "back", "left", "right", "vertical", "horizontal", "top", "bottom", "inner", "outer", "clockwise", "counterclockwise", etc., indicate orientations or positional relationships based on orientations or positional relationships shown in the accompanying drawings. These terms are used only for the convenience of describing the present disclosure and simplifying the description, and are not intended to indicate or imply that an apparatus or an element must have a specific orientation, be constructed and operated in a specific orientation, and therefore should not be construed as limiting the present disclosure. Additionally, terms such as "first" and "second" are used for descriptive purposes only and should not be construed as indicating or implying relative importance or implicitly indicating the number of technical features. Thus, features defined by "first" and "second" may explicitly or implicitly include one or more of the features. **In** the description of the present disclosure, the term "plurality of" means two or more, unless otherwise clearly and specifically defined.

In the description of the present disclosure, it should be noted that unless otherwise defined explicitly and specifically, terms such as "mount", "couple", "connect" should be understood broadly. For example, they may be a fixed connection, a detachable connection, or an integral connection; or may be a mechanical connection, an electrical connection, or mutual communication; or may be a direct connection or an indirect connection through an intermediate media, or may be an internal connection of two elements or an interaction relationship between two elements. For those having ordinary skill in the art, specific meanings of the foregoing terms in the present disclosure may be understood according to specific situations.

In the present disclosure, unless otherwise defined explicitly and specifically, a first feature being "above" or "below" a second feature may include the first feature and the second feature being in direct contact, or may include the first and second features not being in direct contact but being in contact through an additional feature between them. Moreover, a first feature being "above" , "upward", and "on" a second feature may include the first feature being directly above and obliquely above the second feature, or may only indicate that the first feature has a higher horizontal height than the second feature. A first feature being "below" , "beneath" and "underneath" the second feature includes the first feature being directly below and obliquely below the second feature, or only indicate that the first feature has a smaller horizontal height than the second feature.

The following disclosure provides many different embodiments or examples to implement different structures of the present disclosure. To simplify the disclosure of the present disclosure, components and arrangements of specific embodiments are described below. Of course, these are only examples and are not intended to limit the present disclosure. Additionally, the present disclosure may repeat reference numerals and/or reference letters in different embodiments for the purpose of simplicity and clarity, which does not indicate a relationship between the various embodiments and/or arrangements discussed. Furthermore, the present disclosure provides embodiments of various specific processes and materials, but those having ordinary skill in the art may be aware of the application of other processes and/or the use of other materials.

The present disclosure discloses a fixing set, which addresses technical problems of inconvenient installation, excessive installation restrictions or insufficient installation flexibility of a fitness device. Specifically, the fixing set includes a first type fixing member, which is configured to establish a connection with an installation environment and provide a first coupling seat **11;** and also includes a second type fixing member and/or a third type fixing member. Both the second type fixing member and the third type fixing member include at least one second coupling seat 12 for coupling with the first coupling seat 11. The second type fixing member further includes at least one first coupling seat 11, and the third type fixing member can provide an installation environment for the first type fixing member to facilitate coupling with another first type fixing member.

The first coupling seat 11 is configured to be connected to the second coupling seat 12 or to be connected to a fitness device or a massage device. The specific combination form of the fixing set can be connected to the installation environment via the first type fixing member, and then the fitness device or the massage device is directly connected to the first coupling seat 11 of the first type fixing member; or after the first type fixing member is provided, the second coupling seat 12 of the second type fixing member is connected via the first coupling seat 11, and then the fitness device or massage device is directly connected to the first coupling seat 11 of the second type fixing member; or after the first type fixing member is provided, the third type fixing member is connected via the first coupling seat 11, and then another first type fixing member is provided on an installation environment of the third type fixing member. At this time, the fitness device or the massage device can be directly connected to the first type fixing member fixed on the third type fixing member. Of course, since the second type fixing member includes the first coupling seat 11 and the second coupling seat 12, the second type fixing member can be infinitely combined and extended. Similarly, the combination of the third type fixing member connected to the first type fixing member also includes the first coupling seat 11 and the second coupling seat 12, and the combination can be infinitely extended. Further, the second type fixing member and the combinations of the third type fixing member connected to the first type fixing member can be arbitrarily combined and extended.

By flexibly adapting three types of fixing members, a user can adjust the fixing set according to their needs to meet current usage requirements. The fixing set can also be configured for the massage device when necessary, such as a fascia gun, a massager, etc. When the user completes training, the fixing set can be adjusted and the massage device can be fixed on the first coupling seat 11, so that the massage device can be fixed in a suitable position, freeing both hands for complete relaxation and optimizing the user experience.

In some embodiments, the first coupling seat 11 and the second coupling seat 12 can be quickly connected or disassembled. For example, the first coupling seat 11 and the second coupling seat 12 can refer to the connection structure in PCT/CN2024/100653. Of course, any quick connection structure in another related technology can be applied in the present disclosure, which is not limited here.

In some embodiments, the first type fixing member includes a ground fixing member for establishing a connection with the ground or a horizontal surface, a wall fixing member for establishing a connection with a wall or a vertical surface, a clamping or bracing fixing member for clamping or bracing an installation environment, a column fixing member for establishing a connection with a column, a flexible fixing member for establishing a connection with an irregular object, and/or a wearable fixing member for establishing a connection with a human body.

In some embodiments, the second type fixing member includes an angle changing fixing member for changing an angle, an angle adjusting fixing member for adjusting an angle, a position changing fixing member for changing a position, and/or a position adjusting fixing member for adjusting a position.

In some embodiments, the third type fixing member includes an extension fixing member for providing a column as an installation environment and/or a hole fixing member for providing a hole as an installation environment.

In some embodiments, the three types of fixing members can be combined with each other. For example, a position changing fixing member is connected to a ground fixing member to raise an installation position, and then the fitness device or massage device is coupled to the fixing set; or an angle changing fixing member is connected to a wall fixing member, and fitness device or massage device is coupled to the angle changing fixing member; or after the fitness is completed, the fitness device is removed, and then an angle changing fixing member is removed, and the massage device is connected to an angle adjusting fixing member, and the massage device is directly fixed with the fixing set to free hands, and a massage angle is adjusted by the angle adjusting fixing member to perform massage; or an extension fixing member can be connected to a column fixing member, and at the same time, another column fixing member is fixed on the extension fixing member, and then the massage device or fitness device is fixed, thereby extending the installation position. Of course, those having ordinary skill in the art know that when fixing members with a limited number of types and a small number of combinations are combined, the combination modes can be enumerated, but due to the length of the present disclosure, they will not be repeated here. Any combination is within the protection scope of the present disclosure.

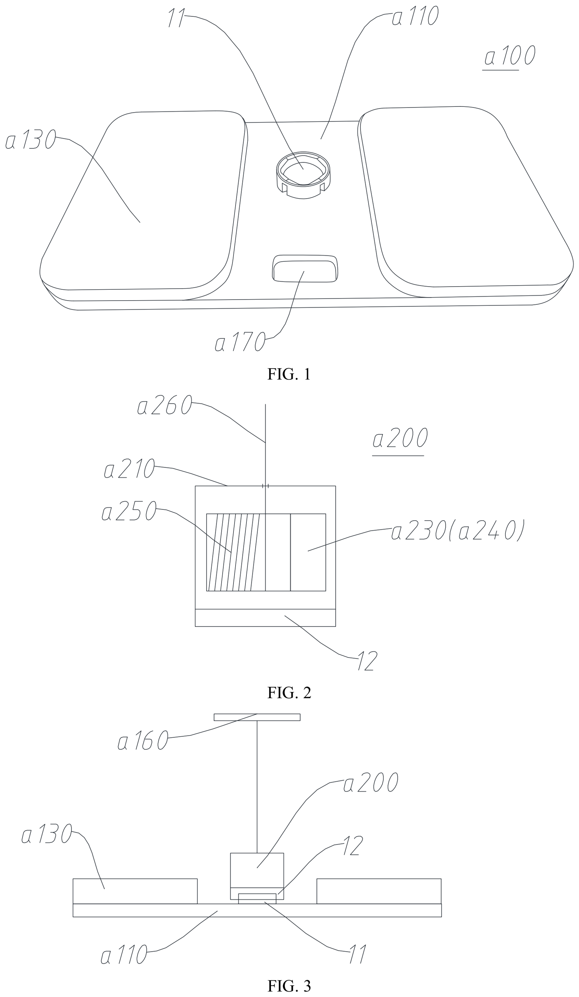

Referring to FIGS. 1 to 4, in some embodiments, a first type fixing member is disclosed. The first type fixing member is a ground fixing member for establishing a connection with the ground or a horizontal surface, specifically a fitness base plate a100 used in conjunction with a fitness device a200, including a base plate main body a110 and a first coupling seat 11. The first coupling seat 11 is provided on the base plate main body a110 and is configured to couple to or lock with the fitness device a200, a massage device, or the second coupling seat 12 of the second type fixing member. The fitness device a200 used in conjunction with the fitness base plate a100 includes a housing a210, a second coupling seat 12 connected to the housing a210, a power output device a230 or a resistance output device a240, a reel a250 connected to the power output device a230 or the resistance output device a240, and a cordage a260 connected to the reel a250. The user can perform strength training through the cordage a260 coiled on the reel a250, and the power output device a230 or the resistance output device a240 can provide power or resistance to the user through the cordage a260.

During installation, the user can place the fitness base plate a100 on a horizontal surface, and install the fitness device a200, the massage device, or the second type fixing member on the fitness base plate a100. When fixing the fitness device a200, the second coupling seat 12 of the fitness device a200 is locked with the first coupling seat 11 to complete the fixation. Then the user can exercise with the assembled fitness device a200 and the fitness base plate a100. For example, the user can put both feet on the fitness base plate and use both hands to repeatedly pull the cordage a260 of the fitness device a200 to exercise upper limb strength. In addition, the user can also exercise waist and leg muscles in this way. When the user finishes exercising and stores the device, the user can remove the fitness device a200 from the fitness base plate a100, and store the fitness device a200 and the fitness base plate a100 separately. Since the fitness base plate a100 is not equipped with accessories such as a motor, a battery, etc., the fitness base plate a100 is lighter and thinner, making the fitness base plate a100 easier to store. The removed fitness device a200 is smaller in size because it is not connected to the base plate, and is also easier to store. The fitness device a200 can also be used in combination with other accessories or racks, which is more flexible. The user can realize multiple uses of one fitness device a200 without having to purchase more fitness devices a200.

In addition, the second coupling seat 12 on the fitness base plate a100 can also be configured to couple to the second type fixing member. For example, the second coupling seat 12 can be coupled to a position changing fixing member for changing the position, and then the fitness device a200 is fixed on the position changing fixing member, thereby increasing the height of the fitness device a200. The second coupling seat 12 can also be coupled to an angle changing fixing member for changing the angle, and then the fitness device a200 or the massage device is fixed on the angle changing fixing member, thereby changing the angle of the fitness device or the massage device.

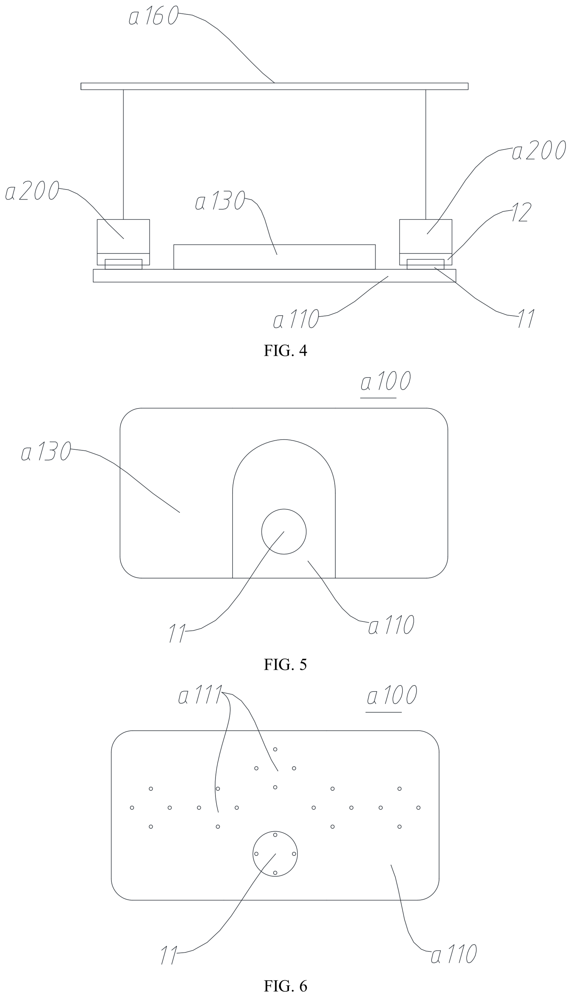

Referring to FIG. 6, in some embodiments, the base plate main body a110 is provided with at least two mounting positions a111, and the first coupling seat 11 is detachably connected to any mounting position a111. For example, a quick-plug base is connected to the base plate main body a110 via a bolt to achieve a detachable connection. By providing a plurality of mounting positions a111 on the base plate main body a110, the first coupling seat 11 on the fitness base plate a100 can be installed at different positions, thereby meeting more needs of users. For example, when the user is standing on the fitness base plate a100, the fitness device a200 needs to be installed at different positions when performing certain different fitness movements (for example, it is best to fix the fitness device a200 at the front side for front raises, and to fix the fitness device a200 at the left and right sides for lateral raises). At this time, the user can adjust the position of the first coupling seat 11 on the base plate main body a110, so that the fitness device a200 is configured in an optimal position to achieve the optimal fitness needs.

Furthermore, a plurality of first coupling seats 11 can also be provided to achieve the fixation of a plurality of fitness devices a200 on a single fitness base plate a100, so as to meet the fitness needs of more users. As shown in FIG. 4, when the user wants to exercise weightlifting, two first coupling seats 11 can be fixed on the left and right sides of the fitness base plate a100 respectively, and two fitness devices a200 can be installed on the fitness base plate a100 respectively. At this time, the user can connect two ends of a weightlifting bar to the cordages a260 of the two fitness devices a200 respectively to realize the assembly of the fitness device a200.

Referring to FIG. 1 and FIGS. 3 to 5, the base plate main body a110 is provided with a heightening plate a130. The height of the heightening plate a130 is 0.5-1.5 times the height of the fitness device a200 or the first coupling seat 11. Since the fitness device a200 or the first coupling seat 11 has a certain thickness, it may interfere with some fitness movements of the user. Therefore, a heightening plate a130 is provided on the base plate main body a110 to raise the user, which can eliminate the impact of the thickness of the fitness device a200 or the first coupling seat 11 on the user. In addition, as an alternative, a recessed portion can also be provided on the base plate main body a110, and the first coupling seat 11 is located in the recessed portion. The recessed portion is configured to accommodate the fitness device a200. The depth of the recessed portion is 0.5-1.5 times the height of the fitness device a200, so as to achieve the same effect. At the same time, in the above scheme, the heightening plate a130 and the recessed portion can make the thickness variation of the fitness base plate a100 smaller, make the shape of the fitness base plate a100 more regular, and facilitate the storage of the base plate.

Furthermore, as shown in FIG. 1 or FIG. 3, when the first coupling seat 11 is located in the middle, there are two heightening plates a130 respectively located on both sides of the first coupling seat 11, which can respectively raise the user's feet, and this form is more stable. As shown in FIG. 5, the heightening plate a130 can be arranged around the first coupling seat 11, and the heightening plate a130 in this form can also raise the user's feet. As shown in FIG. 4, at this time there are two first coupling seats 11, which will be connected to the fitness device a200 when in use, and the heightening plate a130 is located between the two first coupling seats 11. The user stands on the heightening plate a130 in the middle and interacts with the fitness device a200 on the left and right sides separately or simultaneously to perform fitness.

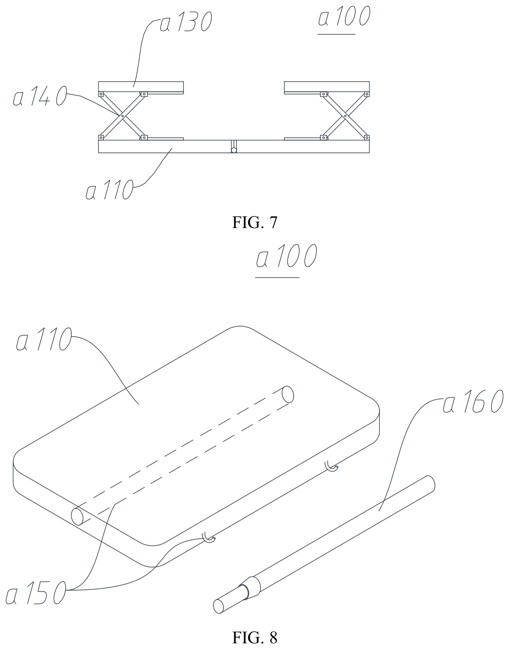

Furthermore, as shown in FIG. 7, a folding mechanism a140 can also be provided between the heightening plate a130 and the first coupling seat 11, so that the heightening plate a130 can have a folded state and a use state. In the folded state, the height of the heightening plate a130 is lower, which is more convenient for storing the fitness base plate a100. The exemplary figure shows a folding mechanism a140. The folding mechanism a140 includes two connecting rods hinged to each other at the middle. One end of the two connecting rods is hinged to the heightening plate a130 and the base plate main body a110 respectively, and the opposite end slides on the sliding rails on the heightening plate a130 and the base plate main body a110 respectively. By adjusting sliding ends of the two connecting rods, the heightening plate a130 can have the folded state and the use state. The folding mechanism a140 is locked by the self-locking friction between the sliding end and the sliding rail. The above only shows a relatively simple implementation method. Any folding mechanism a140 in other related technologies that can change the state of the heightening plate a130 so that the heightening plate can switch between the folded state and the use state can be used here, which will not be repeated in the present disclosure.

Furthermore, an anti-slip layer can be provided on the heightening plate a130. The anti-slip layer can increase the force of the heightening plate on the user's feet, prevent the user from slipping, and improve the contact feeling when the user steps on the heightening plate a130 and the safety when the user uses the fitness device a200. For example, the anti-slip layer is sandpaper.

As shown in FIG. 8, in an embodiment, a storage space a150 is provided on the base plate main body a110, and a hand lever a160 or a handle is placed in the storage space a150. The hand lever a160 or the handle can be connected to the cordage a260 of the fitness device a200, facilitating the user to apply force to pull the cordage a260 of the fitness device a200. At the same time, some fitness movements completed by the user must be coordinated with the hand lever a160 or the handle. For example, as shown in FIG. 4, when the user performs weightlifting, the left and right ends of the hand lever a160 need to be respectively connected to the cordages a260 of two fitness devices a200. A storage space a150 is provided on the base plate main body a110 and these accessories are configured in the storage space a150, so as to further meet various fitness needs of the user. For example, the storage space a150 can be a storage hole opened in the base plate main body a110, a storage groove opened on the base plate main body a110, or a hook provided on a side of the base plate main body a110, which is not limited in the present disclosure.

Further, the hand lever a160 is a telescopic rod that can be changed in length and locked, which can meet the need of users to adjust the length according to their needs.

In some embodiments, the base plate main body a110 can be folded for easy storage.

As shown in FIG. 1, in some embodiments, the base plate main body a110 is provided with a base plate handle a170, and the user can lift the fitness base plate a100 by the base plate handle a170, which is convenient for storage.

As shown in FIG. 7, in some embodiments, the base plate main body a110 can be folded. In an embodiment, the base plate main body a110 can be divided into a plurality of sections, and each section is connected via a hinge. When in use, the sections of the base plate main body a110 can be laid flat to form a whole. When stored, the base plate main body a110 can be folded to further reduce the occupied space.

As shown in FIG. 2, in some embodiments, the fitness device a200 includes:
a housing a210, a second coupling seat 12 connected to the housing a210, a power output device a230 or a resistance output device a240, a reel a250 connected to the power output device a230 or the resistance output device a240, and a cordage a260 connected to the reel a250. The user can perform strength training with the cordage a260 coiled on the reel a250. The power output device a230 or the resistance output device a240 can provide power or resistance to the user through the cordage a260.

Furthermore, a hand lever a160, a base plate handle a170, a handle or a fixing belt is connected to one end of the cordage a260 to facilitate the user to hold the cordage a260 or to facilitate the user to pull the cordage a260 through limbs or torso, so as to better meet various fitness needs of the user.

Furthermore, the power output device a230 or the resistance output device a240 is a servo motor, which uses electric control to more accurately control the generation of power or resistance, and can adjust the output of power and resistance according to the user's needs to simulate various fitness scenarios, such as simulating water resistance, or adjusting power or resistance according to speed and line length.

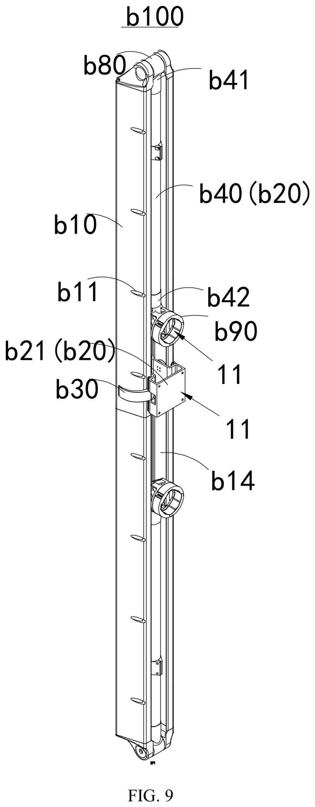

In some embodiments, a wall fixing member b100 is provided, as shown in FIGS. 9-11, which includes a guide member b10, at least one movable member b20 and a locking member. The guide member b10 is configured to be mounted at a preset position on a vertical surface. At least one movable member b20 is connected to the guide member b10 and can rotate or move relative to the guide member b10. The movable member b20 is provided with a first coupling seat 11, and the first coupling seat 11 is configured for installing a fitness device, a massage device, the second type fixing member, or the third type fixing member. Taking the fitness device as an example below, the locking member is configured to be operated by the user to switch between a first state and a second state. When the locking member is in the first state, the movable member b20 is locked to the guide member b10 to limit the rotation or movement of the movable member b20. When the locking member is in the second state, the movable member b20 can rotate or move along the guide member b10 to adjust the position of the first coupling seat 11.

In some embodiments, the wall fixing member b100 for the fitness device includes a guide member b10, a movable member b20 and a locking member. The wall fixing member has a simple structure and small volume, and can be suitable for most household scenarios. The fitness device can be installed on the first coupling seat 11 of the movable member b20, and the position of the fitness device can be adjusted by the cooperation of the movable member b20 and the guide member b10 without disassembling the fitness device. When adjusted to an appropriate position, the movable member b20 can be locked by the locking member, which facilitates operation and improves convenience.

When in use, the locking member can be first operated to be in the second state, which is an unlocked state, so that the movable member b20 can rotate or move along the guide member b10 to adjust the position of the movable member b20 on the guide member b10, thereby adjusting the position of the fitness device located on the first coupling seat 11, so that the fitness device can be adjusted to the required appropriate position. Then, the locking member can be operated to be in the first state, which is a locked state, to lock the movable member b20 to the guide member b10, thereby limiting the rotation or movement of the movable member b20 and preventing the fitness device on the first coupling seat 11 from shifting, so that exercise can be performed with the fitness device in the appropriate position.

In specific applications, the fitness device may include but is not limited to a cordage-type fitness device. The cordage-type fitness device can apply power or resistance to the cordage, so that the user can exercise by pulling the cordage back and forth or being driven by the cordage during use. By arranging this type of fitness device at different positions, different parts of the user's body can be exercised.

In some usage scenarios, a preset position can be a wall or another suitable first coupling seat 11. The guide member b10 can be a sliding rail with several fixing holes b11, so that the sliding rail can be fixed to the wall by passing fixing members such as a bolt through the fixing holes b11. Of course, other installation methods can also be used to install the guide member b10, which is not limited here.

Exemplarily, the fixing holes b11 on the sliding rail can be arranged in two rows. The two rows of fixing holes b11 can be respectively provided on opposite sides of the guide member b10, and each row includes a plurality of fixing holes b11 arranged at intervals along a sliding direction of the movable member b20. The plurality of fixing holes b11 are respectively penetrated by a plurality of bolts to fix the sliding rail to the wall.

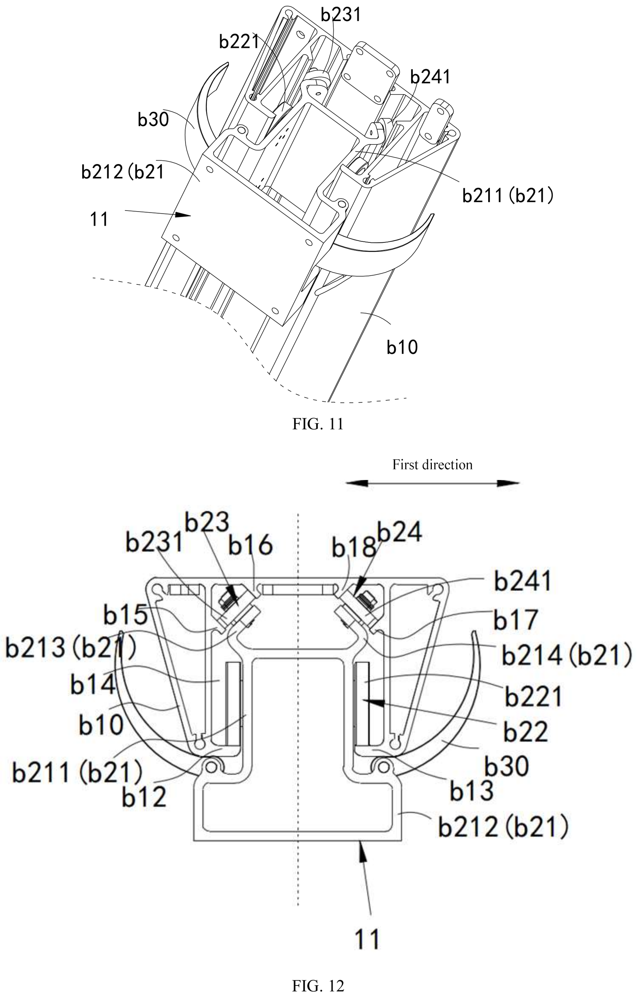

In some embodiments, as shown in FIGS. 11-13, the movable member b20 includes a sliding member b21 and at least two sets of rolling assemblies. The sliding member b21 is slidably connected to the guide member b10, and the first coupling seat 11 is provided on the sliding member b21. Each set of rolling assemblies includes at least one rolling member, the rolling member is provided between the sliding member b21 and the guide member b10, and the rolling member can rotate along its own axial direction to reduce the friction between the sliding member b21 and the guide member b10. The axial directions of the rolling members of at least two sets of rolling assemblies intersect or are skewed. Exemplarily, the rolling member can be a roller, which are rotatably connected to the sliding member b21 via a pin shaft. The arrangement of the rolling member can reduce friction when the sliding member b21 moves along the guide member b10. The axial directions of the rolling members of at least two sets of rolling assemblies are arranged to intersect or be skewed, so that the rolling members of the two sets of rolling assemblies face different directions, so as to abut against at least two side walls of the guide member b10 in different directions, which is conducive to eliminating a gap between each other, thereby eliminating a gap between the sliding member b21 and the guide member b10 as much as possible, so that the relative movement between the sliding member b21 and the guide member b10 is more stable, reducing vibration and lowering noise.

In some embodiments, the number of rolling assemblies can be two, three or more. When the number of rolling assemblies is two, at least two sets of rolling assemblies include at least two of a first rolling assembly b22, a second rolling assembly b23 and a third rolling assembly b24. Exemplarily, at least two sets of rolling assemblies can include a first rolling assembly b22 and a second rolling assembly b23, or can include a second rolling assembly b23 and a third rolling assembly b24, or can include a first rolling assembly b22 and a third rolling assembly b24. When the number of rolling assemblies is three, at least two sets of rolling assemblies can include a first rolling assembly b22, a second rolling assembly b23 and a third rolling assembly b24.

In some embodiments, the first rolling assembly b22 includes at least two first rolling members b221 arranged opposite to each other along a first direction. At least two first rolling members b221 are rotatably connected to the sliding member b21 and are in rolling contact with a first side wall b12 and a second side wall b13 of the guide member b10 respectively. In specific applications, the first direction may be an axial direction of the first rolling member b221 and perpendicular to a moving direction of the sliding member b21. When the sliding member b21 moves up and down along a vertical direction, the first direction is a horizontal direction. The number of the first rolling members b221 can be two, three or more.

Exemplarily, two sets of first rolling members b221 are provided, and each set includes two first rolling members b221 arranged in the vertical direction. The two sets of first rolling members b221 are respectively rotatably connected to two sides of the sliding member b21 in the first direction. The guide member b10 includes a first side wall b12 and a second side wall b13 extending to two sides of the sliding member b21 in the first direction, so that the two sets of rolling members can be in rolling contact with the first side wall b12 and the second side wall b13 respectively, thereby reducing friction between the sliding member b21 and the guide member b10.

In some embodiments, the guide member b10 is provided with a sliding groove b14 for the movement of the sliding member b21. The sliding member b21 includes a sliding portion b211 slidably disposed in the sliding groove b14 and a mounting portion b212 that is connected to the sliding portion b211 and extends out of the sliding groove b14. The first coupling seat 11 is provided on a side of the mounting portion b212 that is away from the sliding groove b14, so as to facilitate the installation of the fitness device without affecting the movement of the sliding member b21. The sliding portion b211 and the mounting portion b212 may be integrally formed or assembled separately.

In some embodiments, the mounting portion b212 may extend along the first direction and connect with the sliding portion b211 to form a T-shaped structure. Two sides of the mounting portion b212 in the first direction are respectively arranged opposite to the first side wall b12 and the second side wall b13.

In some embodiments, the sliding member b21 can cooperate with two locking members to achieve stable locking. The two locking members are respectively connected to the two sides of the mounting portion b212 in the first direction, and correspond to the positions of the first side wall b12 and the second side wall b13 respectively. The user can rotate the two locking members to make the two locking members respectively abut against the first side wall b12 and the second side wall b13 to achieve locking, or make the two locking members respectively move away from the first side wall b12 and the second side wall b13 to achieve unlocking. Of course, the number of locking members that cooperate with one sliding member b21 can also be one, three or more.

In some embodiments, the second rolling assembly b23 includes at least one second rolling member b231. The at least one second rolling member b231 is rotatably connected to the sliding member b21, and the second rolling member b231 is in rolling contact with a third side wall b15 and/or a fourth side wall b16 of the guide member b10. The number of the second rolling members b231 can be one, two, three or more. When there is one second rolling member b231, the second rolling member b231 can be in rolling contact with the third side wall b15 or the fourth side wall b16. When there are a plurality of second rolling members b231, some of the second rolling members b231 can be in rolling contact with the third side wall b15, and another part of the second rolling members b231 can be in rolling contact with the fourth side wall b16.

In some embodiments, an axial direction of the second rolling member b231 intersects or is skewed with the axial direction of the first rolling elements b221, so as to make the first rolling member b221 and the second rolling member b231 face different directions, so that the first rolling member b221 and the second rolling member b231 can abut against a plurality of side walls of the guide member b10 in different directions, thereby eliminating the gap between the sliding member b21 and the guide member b10 as much as possible, making the relative movement between the sliding member b21 and the guide member b10 more stable, reducing vibration and lowering noise.

In some embodiments, in order to make the axial direction of the second rolling member b231 intersect or be skewed with the axial direction of the first rolling member b221, the sliding member b21 can be bent inward to extend to form a first extension portion b213. The second rolling member b231 can be rotatably mounted on the first extension portion b213. An inner wall of the sliding groove b14 of the guide member b10 extends to form the third side wall b15 and the fourth side wall b16 opposite to two sides of the second rolling member b231, so as to eliminate the gap between the sliding member b21 and the guide member b10 as much as possible, so that the relative movement between the sliding member b21 and the guide member b10 is more stable, reducing vibration and lowering noise.

In some embodiments, the third rolling assembly b24 includes at least one third rolling member b241. At least one third rolling member b241 is rotatably connected to the sliding member b21, and the third rolling member b241 is in rolling contact with a fifth side wall b17 and/or a sixth side wall b18 of the guide member b10. The number of the third rolling members b241 may be one, two, three or more. When there is one third rolling member b241, the third rolling member b241 can be in rolling contact with the fifth side wall b17 or the sixth side wall b18. When there are a plurality of third rolling members b241, some of the third rolling members b241 can be in rolling contact with the fifth side wall b17, and another part of the third rolling members b241 can be in rolling contact with the sixth side wall b18.

In some embodiments, an axial direction of the third rolling member b241 is perpendicular to the axial direction of the second rolling members b231, and the axial directions of the second rolling member b231 and the third rolling member b241 both intersect or are skewed with the axial direction of the first rolling member b221. Thus, the first rolling member b221, the second rolling member b231, and the third rolling member b241 face different directions, so that they can abut against a plurality of side walls of the guide member b10 in different directions, thereby eliminating the gap between the sliding member b21 and the guide member b10 as much as possible, making the relative movement between the sliding member b21 and the guide member b10 more stable, reducing vibration and lowering noise.

In some embodiments, the axial direction of the third rolling member b241 may not be perpendicular to the axial direction of the second rolling member b231. The third rolling member b241 and the second rolling member b231 may be axially symmetrical with respect to a center line of the sliding member b21.

In some embodiments, a position of the sliding member b21 corresponding to the installation of the third rolling member b241 can also be bent inward to extend to form a second extension portion b214. The third rolling member b241 can be rotatably mounted on the second extension portion b214. The inner wall of the sliding groove b14 of the guide member b10 extends to form the fifth side wall b17 and the sixth side wall b18 opposite to two sides of the third rolling member b241, so as to eliminate the gap between the sliding member b21 and the guide member b10 as much as possible, making the relative movement between the sliding member b21 and the guide member b10 more stable, reducing vibration and lowering noise.

In some embodiments, the first extension portion b213 and the second extension portion b214 may be axially symmetrical with respect to the center line of the sliding member b21, and the entire sliding member b21 may be axially symmetrical with respect to the center line of the sliding member b21.

It should be noted that the number of rolling assemblies is not limited to at least two sets. For example, in other embodiments, the movable member b20 includes a sliding member b21 and at least one set of rolling assemblies. The sliding member b21 is slidably connected to the guide member b10, and the first coupling seat 11 is provided on the sliding member b21. The at least one set of rolling assemblies includes at least two rolling members arranged at intervals along the moving direction of the sliding member b21. The rolling member is provided between the sliding member b21 and the guide member b10, and the rolling member can rotate along its own axial direction to reduce friction between the sliding member b21 and the guide member b10. Exemplarily, the movable member b20 can be provided with one set of rolling assemblies, or a plurality of sets of rolling assemblies. The rolling assemblies can include a first rolling assembly b22 and/or a second rolling assembly b23 and/or a third rolling assembly b24. When the rolling assembly includes the first rolling assembly b22, the first rolling assembly b22 includes at least two first rolling members b221 arranged at intervals along the vertical direction. When the rolling assembly includes the second rolling assembly b23, the second rolling assembly b23 includes at least two second rolling members b231 arranged at intervals along the vertical direction. When the rolling assembly includes the third rolling assembly b24, the third rolling assembly b24 includes at least two third rolling members b241 arranged at intervals along the vertical direction.

In some embodiments, at least two rolling members of the rolling assembly are arranged in a staggered manner, so that an arrangement direction of two adjacent rolling members intersects or is skewed with the moving direction of the sliding member b21. Exemplarily, the two first rolling members b221 of the first rolling assembly b22 may be arranged in a staggered manner, and/or the two second rolling members b231 of the second rolling assembly b23 may be arranged in a staggered manner, and/or the two third rolling members b241 of the third rolling assembly b24 may be arranged in a staggered manner.

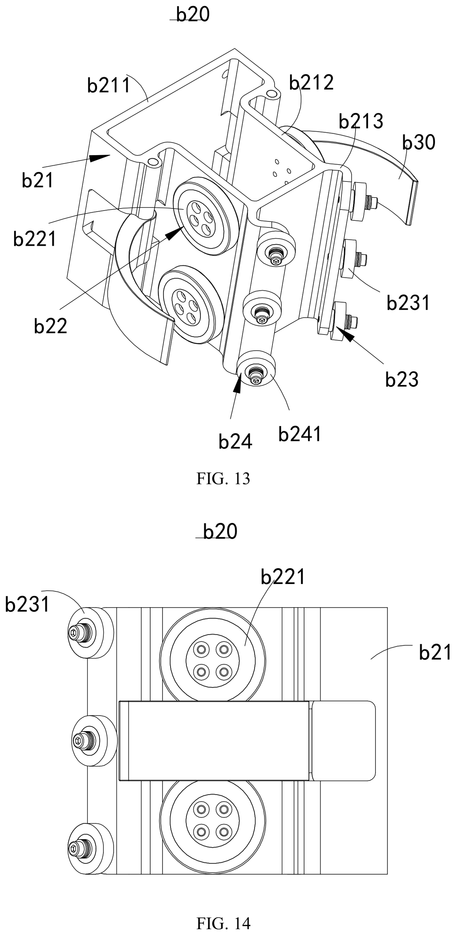

In some embodiments, as shown in FIG. 13 and FIG. 14, the number of second rolling members b231 may be three. The three second rolling members b231 are arranged at intervals in the vertical direction. An arrangement direction of the two second rolling members b231 located at the upper and lower positions is parallel to the moving direction of the sliding member b21, and the second rolling member b231 located in the middle is arranged in a staggered manner with the remaining second rolling members b231 in the horizontal direction, so that the two second rolling members b231 located at the upper and lower positions are both in rolling contact with one of the third side wall b15 and the fourth side wall b16, and the second rolling member b231 located in the middle is in rolling contact with the other of the third side wall b15 and the fourth side wall b16, so that the second rolling members b231 can abut against a plurality of side walls of the guide member b10, which is conducive to eliminating the gap between the guide member b10 and the sliding member b21.

In some embodiments, the number of third rolling members b241 may be three. The three third rolling members b241 are arranged at intervals in the vertical direction. An arrangement direction of the two third rolling members b241 located at the upper and lower positions is parallel to the moving direction of the sliding member b21, and the third rolling member b241 located in the middle is arranged in a staggered manner with the remaining third rolling members b241 in the horizontal direction, so that the two third rolling members b241 located at the upper and lower positions are both in rolling contact with one of the fifth side wall b17 and the sixth side wall b18, and the third rolling member b241 located in the middle is in rolling contact with the other of the fifth side wall b17 and the sixth side wall b18, so that the third rolling members b241 can abut against a plurality of side walls of the guide member b10, which is conducive to eliminating the gap between the guide member b10 and the sliding member b21.

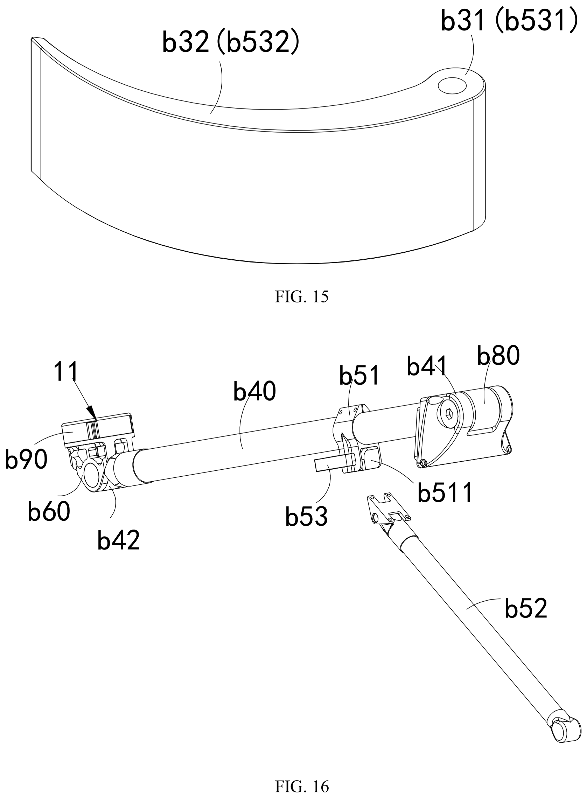

In some embodiments, as shown in FIG. 13 and FIG. 15, the locking member may include a first locking member b30. The first locking member b30 includes a first cam portion b31 and a first operating portion b32. The first cam portion b31 is movably disposed on the sliding member b21. The first operating portion b32 is connected to the first cam portion b31, and the first operating portion b32 is configured to be operated by the user to drive the first cam portion b31 to rotate to abut against or be away from the guide member b10. When the first locking member b30 is in the first state, the first cam portion b31 abuts against the guide member b10 to limit the movement of the sliding member b21. When the first locking member b30 is in the second state, there is a gap between the first cam portion b31 and the guide member b10, so that the sliding member b21 can move along the guide member b10. Exemplarily, the user can apply an external force to rotate the first operating portion b32, so that the first cam portion b31 abuts against or moves away from the guide member b10, thereby achieving locking and unlocking, which is simple to operate and improves convenience.

In some embodiments, the first cam portion b31 can be a variable-diameter cam, so that when the first cam portion b31 rotates to a certain angle, a portion of the cam with a larger radius abuts against the guide member b10 to achieve locking. When the first cam portion b31 rotates to a certain angle in another direction, the portion with a larger radius moves away from the guide member b10. At this time, a gap is generated between the first cam portion b31 and the guide member b10, thereby achieving unlocking.

In some embodiments, the first operating portion b32 may be configured as an arc-shaped structure to form an arc-shaped wrench that is convenient for the user to hold, facilitating user operation.

In some embodiments, the thickness of the first operating portion b32 gradually decreases from one end connected to the first cam portion b31 to the other end, thereby facilitating the user to apply force to drive the first cam portion b31 to rotate to abut against or away from the guide member b10.

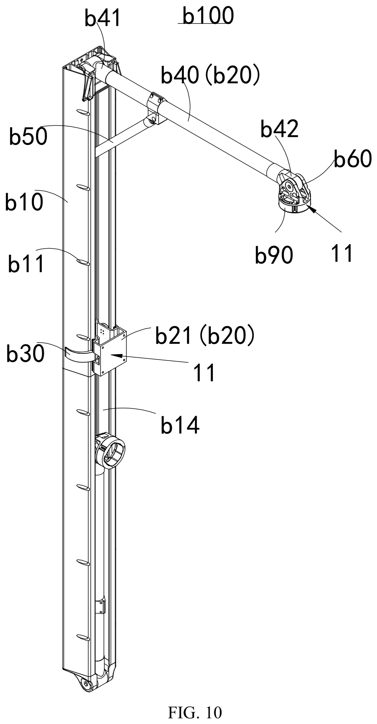

In some embodiments, as shown in FIG. 9 and FIG. 10, the movable member b20 may further include at least one bracket b40. The at least one bracket b40 includes a first end b41 and a second end b42 opposite to each other. The first end b41 is rotatably connected to the guide member b10, and the first coupling seat 11 is provided on the bracket b40. The second end b42 can be rotated through the first end b41 to be close to or away from the guide member b10, so as to adjust an angle formed between the bracket b40 and the guide member b10, thereby adjusting a distance between the second end b42 and the guide member b10. By providing the bracket b40, a first coupling seat 11 is provided, so that the user can choose more positions to install and replace the fitness device, so as to meet more fitness needs of the user.

In some embodiments, the guide member b10 may extend in a vertical direction, i.e., perpendicular to the ground, so that the position of the sliding member b21 may be adjusted in the vertical direction, thereby adjusting the height position of the fitness device.

In some embodiments, the guide member b10 may also extend in a horizontal direction, i.e., parallel to the ground, so that the position of the sliding member b21 can be adjusted in the horizontal direction, thereby adjusting the horizontal position of the fitness device.

In some embodiments, when the guide member b10 extends in the vertical direction, the bracket b40 can rotate up and down, and when the guide member b10 extends in the horizontal direction, the bracket b40 can rotate horizontally. Through the rotation setting of the bracket b40, the angle formed between the bracket b40 and the guide member b10 can be adjusted, so that the fitness device can be adjusted close to or away from the guide member b10 to achieve position adjustment of the fitness device.

Of course, in other embodiments, the bracket b40 can also rotate around the circumference of the guide member b10, so that the fitness device can be adjusted to a larger position range.

In some embodiments, the bracket b40 may be configured as a telescopic structure, that is, a distance between the first end b41 and the second end b42 can be adjusted, so that the bracket b40 can be telescoped in the horizontal direction to adjust a lateral distance between the bracket b40 and the guide member b10. At this time, the first end b41 can be rotatably connected to the guide member b10, or can be non-rotatably connected to the guide member b10, for example, directly through a structure such as a screw or a snap to achieve a detachable fixed connection.

Exemplarily, the bracket b40 may include two tubes, and one of the two tubes can extend out of or retract into the other tube, thereby achieving telescopic adjustment of the bracket b40. Of course, the bracket b40 can also adopt other structures to achieve telescopic adjustment, which is not limited here.

In some embodiments, the bracket b40 can be rotated relative to the guide member b10 to switch between a folded state and an extended state. In the folded state, the bracket b40 is arranged parallel to the guide member b10, thereby reducing the overall volume of the wall fixing member b100 and facilitating storage. In the extended state, the angle formed between the bracket b40 and the guide member b10 is greater than 70° . Exemplarily, the angle formed between the bracket b40 and the guide member b10 can be 70° , 80° , 90° , or other larger angles. The locking member can further include a second locking member b50, and the second locking member b50 is configured to support or limit the bracket b40 when the bracket b40 is in the extended state, so as to prevent the bracket b40 from rotating, so that the bracket b40 can remain in the extended state, facilitating the user to exercise with the fitness device on the bracket b40.

In some embodiments, as shown in FIG. 9 and FIG. 16, the second locking member b50 includes a support base b51, a support rod b52, and a locking structure b53. The support base b51 is mounted on the bracket b40, and the support base b51 is provided with a mounting groove b511. One end of the support rod b52 is rotatably connected to the guide member b10, and an opposite end of the support rod b52 can be clamped in the mounting groove b511 or disengaged from the mounting groove b511. The locking structure b53 is configured to be operated by the user to switch between the first state and the second state. When the locking structure b53 is in the first state, the support rod b52 is locked in the mounting groove b511, so that the support rod b52 can support the bracket b40, thereby keeping the bracket b40 in the extended state. When the locking structure b53 is in the second state, the support rod b52 can be disengaged from the mounting groove b511, so that the bracket b40 can be rotated to the folded state. Through the above arrangement, when it is necessary to maintain the extended state of the bracket b40, the bracket b40 can be supported by the support rod b52 to form a triangular support, thereby improving structural stability, and locked by the locking structure b53 so that the bracket b40 can be stably maintained in the extended state. When the bracket b40 needs to be stored, the locking structure b53 can be operated to unlock the bracket b40, so that the support rod b52 can be disengaged from the mounting groove b511, allowing the bracket b40 to rotate to the folded state, thereby reducing the overall volume of the wall fixing member b100 and facilitating storage.

In some embodiments, as shown in FIG. 15 and FIG. 16, the locking structure b53 includes a second cam portion b531 and a second operating portion b532. The second cam portion b531 is movably disposed on the support base b51. The second operating portion b532 is connected to the second cam portion b531, and the second operating portion b532 is configured to be operated by the user to drive the second cam portion b531 to rotate to abut against or away from the support rod b52. When the locking structure b53 is in a third state, the second cam portion b531 abuts against the support rod b52 to limit the movement of the support rod b52. When the locking structure b53 is in a fourth state, there is a gap between the second cam portion b531 and the support rod b52, so that the support rod b52 can be disengaged from the mounting groove b511. Exemplarily, the user can apply an external force to rotate the second operating portion b532, so that the second cam portion b531 abuts against or moves away from the support rod b52, thereby achieving locking and unlocking, which is simple to operate and improves convenience.
causing the second cam portion b531 to abut against or move away from the support rod b52, thereby achieving locking and unlocking, which is simple to operate and improves convenience.

In some embodiments, the structure of the second cam portion b531 may be the same as the structure of the first cam portion b31, and the structure of the second operating portion b532 may be the same as the structure of the first operating portion b32. For specific structures, please refer to the above embodiments of the first cam portion b31 and the first operating portion b32, which will not be repeated here.

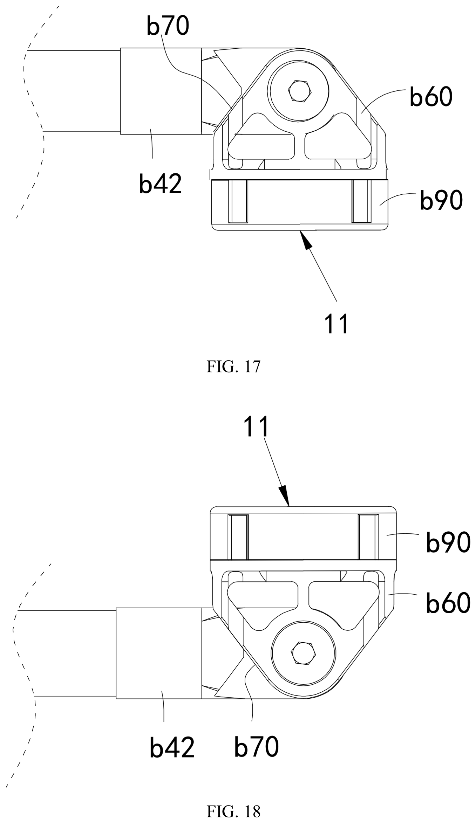

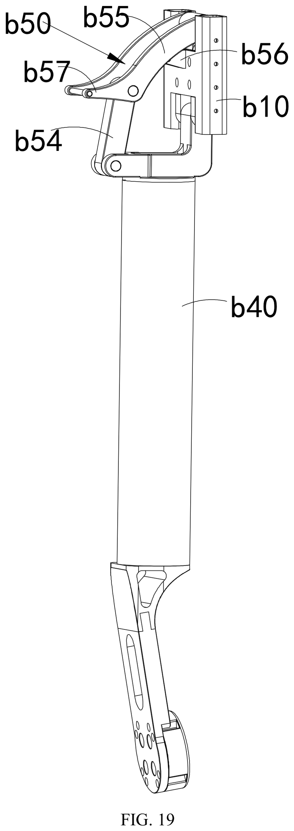

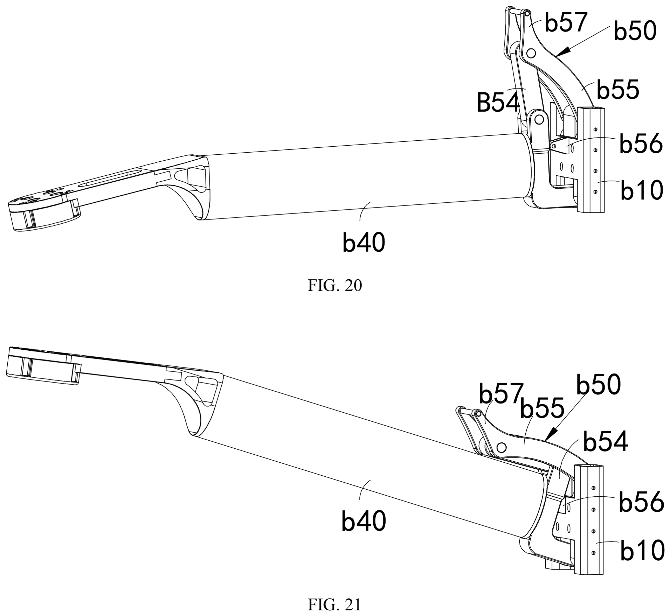

It should be noted that the second locking member b50 is not limited to the above arrangement. For example, in other embodiments, as shown in FIGS. 18-21, the second locking member b50 includes a first link b54 and a second link b55. One end of the first link b54 is hinged to the bracket b40 to form a first hinge point, an opposite end of the first link b54 is hinged to one end of the second link b55 to form a second hinge point, and an opposite end of the second link b55 is hinged to the guide member b10 to form a third hinge point. The second locking member b50 includes an unlocked state and a critical locked state. Of course, the second locking member b50 can also include an intermediate state between the unlocked state and the critical locked state. When the second locking member b50 is in the unlocked state, the first link b54 and the second link b55 can rotate freely, so that the bracket b40 can rotate relative to the guide member b10. When the second locking member b50 is in the critical locked state, the first hinge point, the second hinge point and the third hinge point are collinear to limit the bracket b40, thereby preventing the bracket b40 from rotating. Exemplarily, the second locking member b50 can be a four-bar linkage locking mechanism. When the first hinge point, the second hinge point and third hinge point are collinear, that is, when an internal angle formed by the first hinge point, the second hinge point and the third hinge point is reduced to 0 degrees, the second locking member b50 is in a dead point position, that is, a critical locked state in which no movement is possible.

In some embodiments, the second locking member b50 can be further rotated, that is, the internal angle formed by the first hinge point, the second hinge point, and the third hinge point can be further reduced to less than 0 degrees. At this time, the second locking member b50 enters a margin locked state. This state is not used for a critical locked state, and the locking member will rotate to a state adjacent to the critical locked state when the locking member is forced to rotate, making the locking form more stable.

In some embodiments, the second locking member b50 further includes a top block b56. When the second locking member b50 is in a critical locked state or a margin locked state, the bracket b40 and the guide member b10 compress the top block b56, and the top block b56 is configured to provide a force to the bracket b40 to stabilize the bracket b40. Exemplarily, the top block b56 can be made of an elastic material and mounted on the guide member b10. When the second locking member b50 is in the critical locked state or the margin locked state, the bracket b40 abuts against the top block b56 to make the top block b56 elastically compressed. At this time, the top block b56 can provide a reaction force to the bracket b40, thereby stabilizing the bracket b40 and improving the stability of the bracket b40 in the extended state.

In some embodiments, the second locking member b50 also includes a wall fixing member b100 handle. The wall fixing member b100 handle is connected to the first link b54 or the second link b55. The wall fixing member b100 handle is configured to be operated by the user to drive the second locking member b50 to switch between the unlocked state and either the critical locked state or the margin locked state. The setting of the wall fixing member b100 handle can facilitate user operation, making it easier to apply force to the first link b54 or the second link b55, thereby driving the entire second locking member b50 to rotate to the unlocked state, the critical locked state, or the margin locked state.

Exemplarily, the wall fixing member b100 handle can be connected to the first link b54 or the second link b55. The wall fixing member b100 handle can be a separate component mounted on the first link b54 or the second link b55, or can be integrally formed with the first link b54 or the second link b55.

In some embodiments, the second locking member b50 further includes a secondary locking member, and the secondary locking member is configured to limit the rotation of the first link b54 and/or the second link b55 in the critical locked state. To improve the stability of the bracket b40 in the extended state, a secondary locking member can be provided to further limit the rotation of the second locking member b50, so as to prevent the second locking member b50 from being out of the critical locked state or the margin locked state in the event of unexpected external force.

Exemplarily, the secondary locking member can be a binding-type locking member such as a cable tie or a cordage. When the second locking member b50 is in the critical locked state, the first link b54 and/or the second link b55 are tied or bound together with the bracket b40, thereby further limiting the rotation of the second locking member b50.

Of course, the secondary locking member is not limited to using a cable tie or a cordage, but can also be other ways to limit the rotation of the second locking member b50. For example, a wall fixing member b100 handle with damping rotation can also be provided.

In some embodiments, as shown in FIG. 9 and FIG. 10, there are two brackets b40, and the two brackets b40 are respectively disposed at both ends of the guide member b10 in the extension direction. When the guide member b10 is placed vertically, the two brackets b40 are respectively located at the top and bottom of the guide member b10 to provide two second coupling seats 12 at the top and bottom, so that the user can choose more positions to install and replace the fitness device, so as to meet more fitness needs of the user.

In some embodiments, as shown in FIG. 9, FIG. 17, and FIG. 18, a second end b42 of the bracket b40 is rotatably connected to a rotating seat b60, and the second coupling seat 12 is provided on the rotating seat b60, so that the fitness device located at the second coupling seat 12 can rotate with the rotating seat b60 to adjust the angle. By providing the rotating seat b60, the angle of the fitness device located at the second coupling seat 12 can be adjusted.

In some embodiments, the rotating seat b60 can be limited to rotate within a 180° range by a limiting structure b70. The rotating seat b60 can be rotated upward to be perpendicular to the bracket b40, or can be rotated downward to be perpendicular to the bracket b40. The limiting structure b70 can limit an extreme position of the rotating seat b60 and support the rotating seat b60, thereby facilitating the angle adjustment of the fitness device. Of course, the rotation range of the rotating seat b60 is not limited to the above settings.

In some embodiments, as shown in FIG. 9 and FIG. 10, the guide member b10 is provided with a sliding groove b14 for accommodating the movable member b20. On the one hand, the sliding groove b14 can allow the sliding member b21 to move, and the sliding member b21 is slidably connected to the sliding groove b14. On the other hand, the bracket b40 can be rotated to be parallel to the guide member b10 and be received in the sliding groove b14. Through the above arrangement, the sliding groove b14 can not only be configured for the sliding member b21 to slide, but also can be configured to accommodate the bracket b40, thereby reducing the volume of the wall fixing member b100. When the bracket b40 needs to be accommodated, the sliding member b21 can move to other positions of the sliding groove b14, thereby avoiding the bracket b40. When the bracket b40 is accommodated in the sliding groove b14, the rotating seat b60 can be rotated to face the outside of the sliding groove b14. At this time, the fitness device located at the second coupling seat 12 does not need to be disassembled, making the spatial structure layout more reasonable.

Exemplarily, when the top and bottom of the guide member b10 are both connected to brackets b40, both brackets b40 can be rotated to be accommodated in the sliding groove b14. At this time, the sliding member b21 can move to the middle position of the sliding groove b14 to avoid the brackets b40 on the upper and lower sides.

In some embodiments, the wall fixing member b100 further includes a damping structure b80. The first end b41 is rotatably connected to the guide member b10 via the damping structure b80. The damping structure b80 is configured to provide resistance when the bracket b40 rotates relative to the guide member b10. Exemplarily, the damping structure b80 may include a damping rotating shaft, and the first end b41 can be rotatably connected to the guide member b10 via the damping rotating shaft to provide resistance when the first end b41 rotates, facilitating the adjustment of the rotation angle of the bracket b40, thereby adjusting a distance between the second end b42 and the guide member b10. When the bracket b40 is adjusted to a suitable angle, the bracket b40 can be supported or limited by the second locking member b50, so that the bracket b40 can be stably maintained at a suitable angle for the user to exercise using the fitness device installed on the second coupling seat 12.

In some embodiments, as shown in FIG. 17 and FIG. 18, the wall fixing member b100 further includes an installation structure b90. The installation structure b90 is provided on the rotating seat b60 and is configured to install the fitness device to the second coupling seat 12. Exemplarily, the installation structure b90 may adopt a quick-release seat that cooperates with the fitness device, thereby facilitating the disassembly and assembly of the fitness device.

In some embodiments, the installation structure b90 can also be mounted to a side of the sliding member b21 facing away from the sliding groove b14, and is configured to install the fitness device to the first coupling seat 11, making it easy to disassemble and assemble the fitness device between the first coupling seat 11 and the second coupling seat 12.

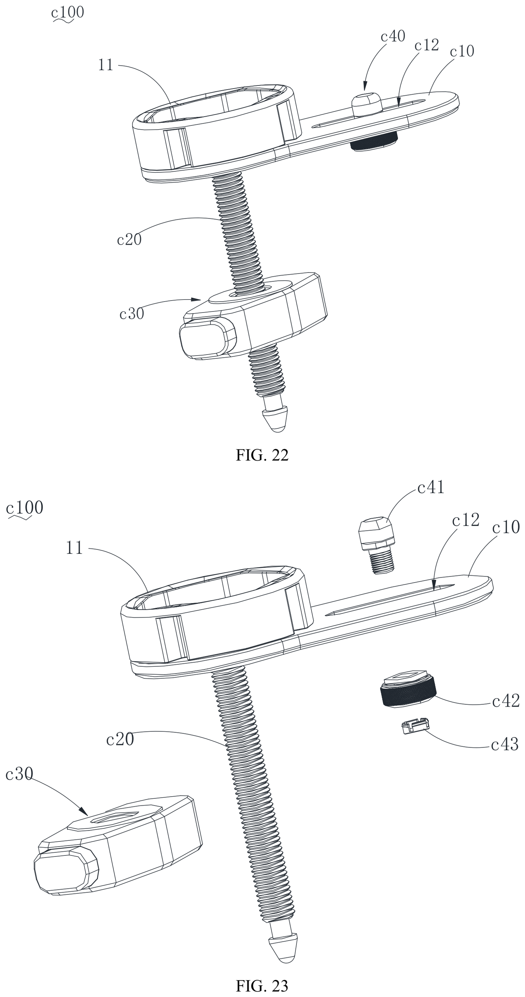

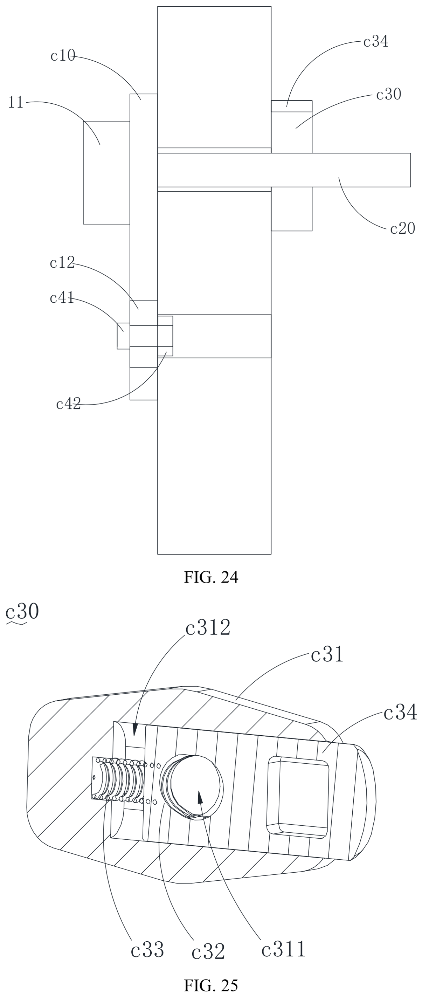

In some embodiments, a first type fixing member is provided, specifically a hole fixing member c100, which is configured for installation in an external environment where holes exist. Referring to FIGS. 22-24, in some embodiments, the hole fixing member c100 includes a hole fixing base c10, a screw c20, a nut c30, and a positioning pin c40. The hole fixing base c10 is provided with a first coupling seat 11 for installing a fitness device, a massage device, or other fixing members. The hole fixing base c10 is provided with a sliding slot c12. The screw c20 is configured to pass through a mounting hole. The nut c30 is threadedly connected to the screw c20. One of the screw c20 and the nut c30 is fixed to the hole fixing base c10. The positioning pin c40 is provided on the hole fixing base c10 and can slide in the sliding slot c12.

In the hole fixing member c100 according to an embodiment of the present disclosure, the hole fixing base c10 provided with the first coupling seat 11 can be fixed on frames with different cross-sectional sizes by the cooperation of the screw c20 passing through the mounting hole on the frame and the nut c30. The slidable positioning pin c40 can adapt to frames with different hole pitches to improve the stability between the hole fixing base c10 and the frame. Then, the fitness device can be stably installed on frames of different models through the hole fixing member c100, which has strong adaptability and is convenient to install and disassemble.

Specifically, the hole fixing base c10 can be configured as a plate-like structure, and the first coupling seat 11 is fixed on a side plate surface of the hole fixing base c10. The screw c20 and the nut c30 can be provided on a side of the hole fixing base c10 opposite to the first coupling seat 11. One of the screw c20 and the nut c30 is connected to the hole fixing base c10, and the other of the screw c20 and the nut c30 is threadedly connected to the former so that the hole fixing base c10 can be fixed on the frame. The adjustable connection method of the screw c20 and the nut c30 enables the hole fixing member c100 to adapt to frames with different cross-sectional sizes. The present disclosure does not limit the specific connection methods of the screw c20 and the nut c30 relative to the hole fixing base c10, as long as the hole fixing base c10 can be fixed on the frame via the nut c30 and the screw c20.

For example, when the screw c20 is fixed on the hole fixing base c10, the screw c20 can be passed through the mounting hole on the frame, and then the nut c30 is threadedly connected to the screw c20 passing through the mounting hole, so that the hole fixing base c10 can be fixed on the frame. When the nut c30 is fixed on the hole fixing base c10, the nut c30 can be aligned with the mounting hole, and then the screw c20 can be passed through the mounting hole and be threadedly connected to the nut c30, so that the hole fixing base c10 can be fixed on the frame. At this time, a bolt-like structure is provided on one end of the screw c20 away from the nut c30, which can be clamped outside the mounting hole.

Furthermore, since the hole fixing base c10 and the frame are connected by the nut c30 and the screw c20, the hole fixing base c10 may easily rotate relative to the frame, which may cause inconvenience in fixing the fitness device and affect the use of the fitness device. Therefore, the hole fixing base c10 can be provided with another base point connected to the frame, so as to ensure the stability of the hole fixing base c10 relative to the frame. In an embodiment of the present disclosure, the base point can be provided by a positioning pin c40, and the positioning pin c40 can be adjustably disposed on the hole fixing base c10. For example, a plurality of mounting holes are opened on the hole fixing base c10, so that the positioning pin c40 can be mounted at one of the mounting holes, or a sliding slot c12 is opened on the hole fixing base c10, so that the positioning pin c40 is slidably disposed in the sliding slot c12.

A specific solution is that the sliding slot c12 is opened on the hole fixing base c10. The sliding slot c12 may be strip-shaped and pass through the hole fixing base c10. One end of the positioning pin c40 passes through the sliding slot c12 and can slide in the sliding slot c12. When the hole fixing base c10 is fixed, after the screw c20 and the nut c30 are mounted on the corresponding mounting hole, the positioning pin c40 can be slid to the corresponding mounting hole on the frame, thereby forming a two-point fixation between the hole fixing base c10 and the frame to prevent the hole fixing base c10 from rotating. At the same time, since the positions of the screw c20 and the nut c30 relative to the hole fixing base c10 are fixed, the positioning pin c40 that can slide relative to the hole fixing base c10 can make the hole fixing member c100 adapt to frames with different hole pitches of the mounting holes.

Referring to FIGS. 23-25, in some embodiments, the screw c20 is fixedly connected to the hole fixing base c10. The nut c30 includes a rotating seat c31, a half nut c32, an elastic member c33, and an unlocking apparatus c34. The rotating seat c31 is provided with an insertion hole for inserting the screw c20. The half nut c32 is movably disposed on the rotating seat c31 and is partially located in the insertion hole, and the half nut c32 is configured to engage with the screw c20. The elastic member c33 is configured to apply an elastic force to make the half nut c32 move toward the center of the insertion hole. The unlocking apparatus c34 is configured to be linked with the half nut c32 to make the half nut c32 move away from the center of the insertion hole.

Thus, when the screw c20 extends out of the mounting hole for a long length, the nut c30 can separate the half nut c32 from the screw c20 through the unlocking apparatus c34, so that the nut c30 and the screw c20 can be detached without rotating more circles, which facilitates the disassembly of the hole fixing member c100.

Specifically, a mounting cavity c312 can be provided inside the rotating seat c31, with a through insertion hole provided in the middle, and the diameter of the insertion hole may be adapted to the diameter of the screw c20. The unlocking apparatus c34 is at least partially movably disposed in the mounting cavity c312, and the other end of the unlocking apparatus c34 at least partially extends out of the mounting cavity c312 to facilitate pressing or pulling when unlocking. The half nut c32 is movably disposed in the mounting cavity c312 and can be linked with the unlocking apparatus c34. The elastic member c33 can be a spring, one end of the elastic member c33 can be connected to an inner wall of the mounting cavity c312, and the opposite end is connected to the unlocking apparatus c34 or the half nut c32, so as to provide the elastic force for the half nut c32 to move toward the center of the insertion hole, so that the half nut c32 can be threadedly engaged with the screw c20.

Furthermore, the half nut c32 can also be integrated with the unlocking apparatus c34, that is, a half-threaded hole is opened at a position of the unlocking apparatus c34 corresponding to the insertion hole, and the elastic member c33 is connected to the unlocking apparatus c34 to provide the elastic force. The present disclosure does not limit the specific installation and connection methods of the unlocking apparatus c34, the half nut c32, and the elastic member c33, as long as the half nut c32 has an elastic force to move toward the center of the insertion hole.

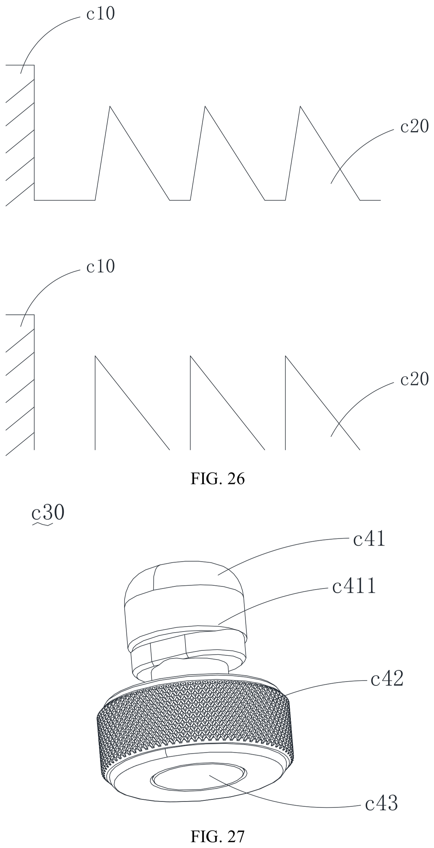

Referring to FIG. 26, in some embodiments, an angle formed between an end face of a thread of the screw c20 away from the first coupling seat 11 and/or an end face of a thread of the nut c30 (not shown in the figure) adjacent to the first coupling seat 11 and a cross-section of the screw c20 is smaller than a friction angle.

Thus, the nut c30 and the screw c20 can have greater friction when threadedly connected, avoiding the risk of the nut c30 and the screw c20 loosening or even the nut c30 falling off when the fitness device is shaken, thereby improving the stability of the hole fixing member c100 when in use.

Specifically, the tightness and firmness of the connection between the screw c20 and the nut c30 depend on the friction force between the threads of the screw c20 and the nut c30. An axial force generated between the screw c20 and the nut c30 has a component force on an end face of the thread, and the component force can push the nut c30 radially away from the screw c20. When the angle formed between the end face of the thread of the screw c20 away from the first coupling seat 11 and/or the end face of the thread of the nut c30 adjacent to the first coupling seat 11 and a cross-section of the screw c20 is smaller than the friction angle, the component force of the axial force pushing the nut c30 radially away from the screw c20 will be smaller than the friction force generated by the axial force acting on the thread end face, thereby achieving a self-locking effect, so that the pulling force of the screw c20 cannot act on the elastic member c33 through the thread, thereby avoiding the situation where the pulling force forcibly pulls open the half nut c32, and improving the connection stability between the screw c20 and the nut c30.

In some embodiments, the angle formed between the end face of the thread of the screw c20 away from the first coupling seat 11 and/or the end face of the thread of the nut c30 adjacent to the first coupling seat 11 and the cross-section of the screw c20 is zero, which directly eliminates a radial component force of an axial force of the screw c20. Thus, the connection stability between the screw c20 and the nut c30 is better.

It can be understood that when the screw c20 or the nut c30 is cut along the axial direction, a thread end face adjacent to the first coupling seat 11 is perpendicular to an axis of the screw c20, thereby maximizing the connection stability without hindering the threaded connection between the screw c20 and the nut c30 , and preventing the nut c30 from detaching from the screw c20.

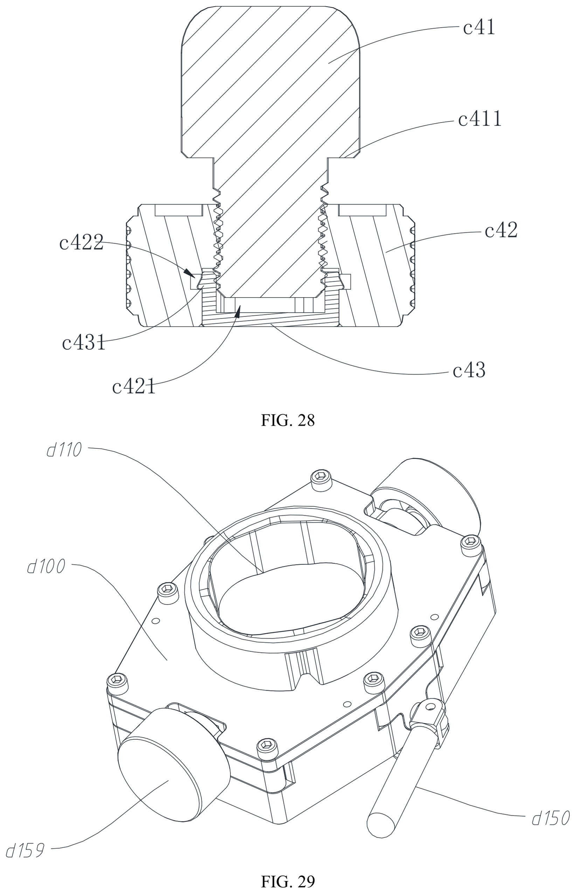

Referring to FIG. 27 and FIG. 28, in some embodiments, the positioning pin c40 includes a pin rod c41 and a pin sleeve c42. The pin sleeve c42 is provided with a through hole c311 or a blind hole. The pin sleeve c42 is detachably sleeved on the pin rod c41. Thus, the pin sleeve c42 is detachable relative to the pin rod c41, and the positioning pin c40 can be adapted to frames with different hole diameters by replacing pin sleeves c42 with different diameters, thereby improving the adaptability of the hole fixing member c100. Of course, frames with different hole diameters can also be adapted by replacing pin rods c41 with different diameters.

In some embodiments, the hole fixing member c100 can be equipped with a plurality of pin sleeves c42, and the plurality of pin sleeves c42 have different outer diameters. The hole fixing member c100 can also be equipped with a plurality of pin rods c41, and the plurality of pin rods c41 have different outer diameters. The hole fixing member c100 can also be equipped with pin rods c41 and pin sleeves c42 with different outer diameters.

That is to say, the outer diameters of the pin rod c41 and the pin sleeve c42 can be changed according to the diameters of the mounting holes of different frames, so that the hole fixing member c100 can be mounted more stably with better adaptability.

In some embodiments, the pin rod c41 and the pin sleeve c42 are threadedly connected, and the pin rod c41 is provided with a positioning shoulder c411. Thus, the pin rod c41 can be retained and allowed to slide in the sliding slot c12 through the positioning shoulder c411, preventing the pin rod c41 from detaching from the sliding slot c12.

Referring to FIG. 27 and FIG. 28, in some embodiments, an anti-loosening sleeve c43 is provided at the bottom of the through hole c311 or the blind hole of the pin sleeve c42 away from the pin rod c41. The anti-loosening sleeve c43 is provided with an internal thread engaged with the pin rod c41. The anti-loosening sleeve c43 and the pin sleeve c42 are made of different materials.

Thus, the friction force between the pin rod c41 and the pin sleeve c42 can be increased by squeezing the anti-loosening sleeve c43. The arrangement of the anti-loosening sleeve c43 can prevent the pin rod c41 and the pin sleeve c42 from loosening.

Specifically, the pin rod c41 and the pin sleeve c42 can be made of hard materials such as metal, and the anti-loosening sleeve c43 can be made of relatively flexible materials such as plastic or rubber. When the pin rod c41 is screwed into an internal thread of the anti-loosening sleeve c43, the anti-loosening sleeve c43 is located between the pin rod c41 and the pin sleeve c42, and the pin rod c41 will squeeze the anti-loosening sleeve c43 to increase the friction force between the pin rod c41 and the pin sleeve c42, preventing the pin rod c41 and the pin sleeve c42 from loosening.

Referring to FIG. 28, in some embodiments, the pin sleeve c42 is provided with a through hole c311, and a mounting space c421 is opened at one end of the through hole c311 away from the pin rod c41. An inner wall of the mounting space c421 is circumferentially provided with a positioning groove c422, and an outer wall of the anti-loosening sleeve c43 is circumferentially provided with a positioning edge that cooperates with the positioning groove c422. Thus, the cooperation between the positioning edge and the positioning groove c422 can prevent the anti-loosening sleeve c43 from being pushed out of an insertion hole when the pin rod c41 is screwed in, so that the anti-loosening sleeve and the pin rod c41 can cooperate better.

In some embodiments, the first type fixing member includes a clamping or bracing fixing member, specifically as shown in FIGS. 29-35, including a clamping or bracing base body d100; a first coupling seat d110 provided on the clamping or bracing base body d100, configured to couple to a fitness device, a massage device or other fixing members; and a first fastening mechanism d120. The first fastening mechanism d120 includes a first transmission mechanism d121 and a fixing column d122. The number of fixing columns d122 is at least two, and at least one of the fixing columns d122 is movably disposed on the clamping or bracing base body d100. The first transmission mechanism d121 is configured to make the movable fixing column d122 separate from or approach other fixing columns d122. When fixing, by operating the first fastening mechanism d120 to move at least two fixing columns d122, the clamping or bracing base body d100 can be braced on both sides by the two fixing columns d122 at some through holes, blind holes, irregular-shaped holes, or notches d1221, thereby completing the fixation. The clamping or bracing base body d100 can also be clamped by the two fixing columns d122 at some columns or protrusions to complete the fixation. Then, by coupling the fitness device adapted to the first coupling seat d110 to the first coupling seat d110, the fixation of the fitness device is completed, and thus the first type fixing member can be suitable for installation in various environments. Of course, the number of fixing columns d122 is not limited to two. A larger number of movable fixing columns d122, such as three, four, or five, can be provided. When a larger number of fixing columns d122 are provided, the fixing columns d122 can move toward the center of all fixing columns d122 to achieve that a plurality of fixing columns d122 simultaneously clamp or brace the external environment.

In some embodiments, the first transmission mechanism d121 includes a screw rod and a nut, and the movable fixing column d122 is provided on the nut and slides along a direction of the screw rod, thereby approaching or moving away from other fixing columns d122. Since the screw rod and the nut have a large transmission ratio and can generate a greater locking force, the screw rod and the nut are selected as the transmission mechanism. In some embodiments, as shown in FIGS. 29-32, there are two movable fixing columns d122, and the first transmission mechanism d121 includes a double-headed screw rod and two nuts. The two fixing columns d122 are respectively provided on the nuts and slide along the direction of the screw rod. When the double-headed screw rod is rotated in one direction, the two fixing columns d122 can move synchronously toward or away from each other, ensuring alignment while being able to clamp or brace the external environment faster to achieve fixation.

In some embodiments, a notch d1221 is provided on a side of the fixing column d122 away from and/or adjacent to other fixing columns d122. The arrangement of the notch d1221 enables the fixing column d122 to better clamp or brace the external environment. For example, in a hole environment, as shown in FIGS. 29-32, the fixing column d122 can be snapped at a hole by the notch d1221 on the side away from other fixing columns d122, and the two fixing columns d122 brace the hole against each other, thereby achieving fixation. At some columns or protrusions, the notch d1221 on the side adjacent to other fixing columns d122 can be snapped onto the outer side of the column or the end of the protrusion. The arrangement of the notch d1221 increases the stability of bracing or clamping, so that the fixing base can be better fixed in the external environment.

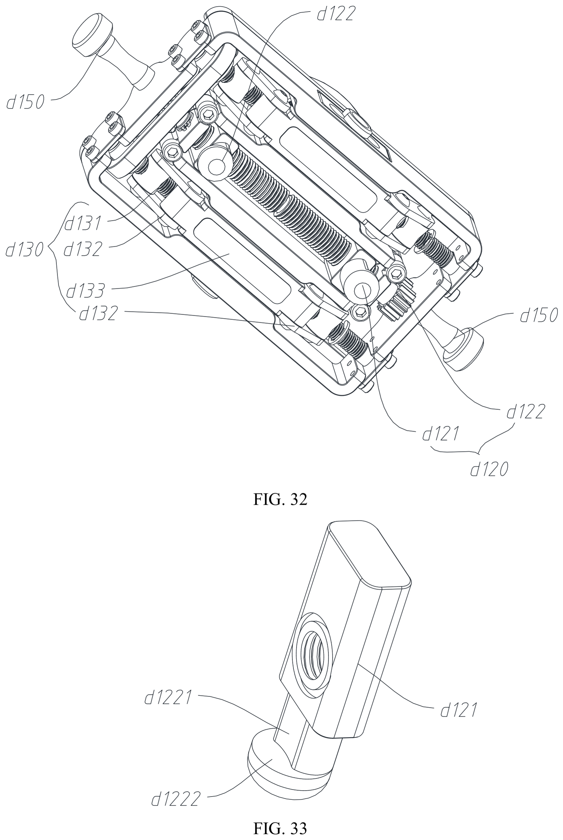

Exemplarily, as shown in FIG. 33, the notch d1221 includes a locking plane d1222 that is opened toward an inner end of the fixing column d122 and parallel to a cross-section of the fixing column d122, or a locking hook opened toward the inside. The locking plane d1222 or the locking hook can be hooked in some external environments, such as being clamped and hooked inward on an I-beam, or being braced and hooked outward at an opening of a gantry, thereby better locking the external environment.

In some embodiments, as shown in FIG. 32, the fixing base is further provided with a second fastening mechanism d130. The second fastening mechanism d130 includes a second transmission mechanism d131 and a first tightening block d133. The second transmission mechanism d131 is configured to cause the first tightening block d133 to move along an axial direction of the fixing column d122. By operating the second transmission mechanism, the first tightening block d133 can be tightened outward against the external environment, and cooperated with the notch d1221 of the fixing column d122 to better lock the external environment at the outermost side of the notch d1221, reducing the shaking of the fixing base and further improving stability. The second transmission mechanism may be any transmission or driving structure known to those having ordinary skill in the art that enables the first tightening block d133 to translate.

In some embodiments, the second transmission mechanism d131 includes a double-headed screw rod, two nuts, and two connecting rods d132. The two nuts are respectively engaged with two ends of the double-headed screw rod. Two ends of the first tightening block d133 are respectively hinged to one end of the two connecting rods d132, and opposite ends of the two connecting rods d132 are respectively hinged to the nuts. When the double-headed screw rod is rotated, the two nuts move toward or away from each other, and then drive the first tightening block d133 to move axially along a fixing shaft via the connecting rod d132. This type of transmission mechanism is compact and easy to arrange, and has a large transmission ratio, which can generate a larger locking force.

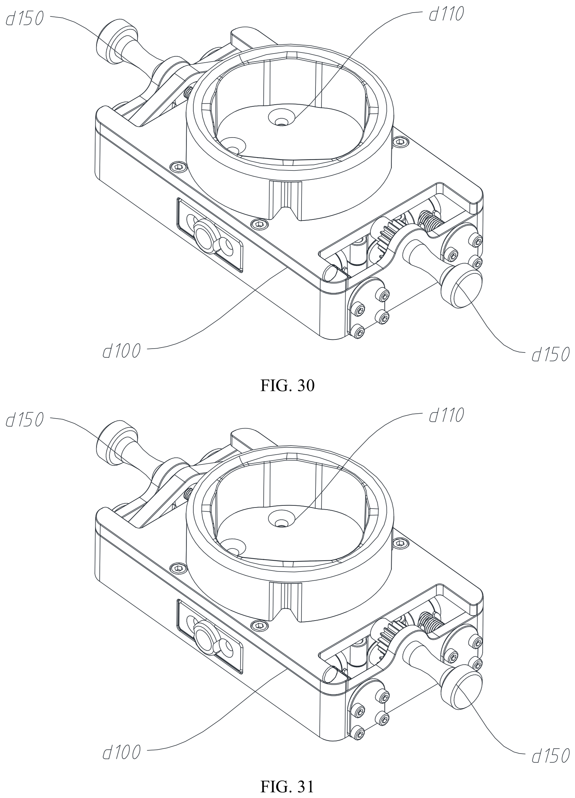

In some embodiments, as shown in FIG. 30, a third fastening mechanism d140 is further provided. The third fastening mechanism d140 includes a third transmission mechanism d141 and a second tightening block d142. There are at least two second tightening blocks d142, and at least one of the second tightening blocks d142 is movably disposed on the clamping or bracing base body d100. The second transmission mechanism d131 is configured to make the second tightening blocks d142 separate from or approach other second tightening blocks d142. The second tightening blocks d142 can separate from or approach each other, thereby clamping or bracing the external environment.

In some embodiments, the second tightening block d142 includes a second tightening surface d143, and the second tightening surfaces d143 of the corresponding second tightening blocks d142 are arranged opposite to each other. A distance between the second tightening surfaces d143 gradually increases along an extension direction of the fixing column d122. For example, when the external environment is a hole on a gantry and the fixing columns d122 move away from each other to brace the hole, there are two second tightening blocks d142. The two second tightening blocks d142 are provided with second tightening surfaces d143 on the side adjacent to each other, and a distance between the two second tightening surfaces d143 gradually increases along the outward extension direction of the fixing column d122. At this time, when the two second tightening blocks d142 approach each other, the second tightening surfaces d143 can generate an oblique force on the external environment, so as to support the fixing base outward, thereby pushing the hole of the gantry to the outermost side of the notch d1221, so that the connection and clamping of the notch d1221 more stable. At the same time, the two tightening surfaces can also ensure that the two tightening surfaces gather toward the middle to provide positioning for the gantry, further improving stability. Preferably, a movement direction of the second tightening block d142 is perpendicular to a movement direction of the fixing column d122.

In some embodiments, the second transmission mechanism d131 includes a screw rod and a nut, and the movable second tightening block d142 is provided on the nut and slides along a direction of the screw rod; or, as shown in FIG. 30, the second transmission mechanism d131 includes a double-headed screw rod and two nuts, and the two second tightening blocks d142 are respectively disposed on the nuts and slide along the direction of the screw rod.

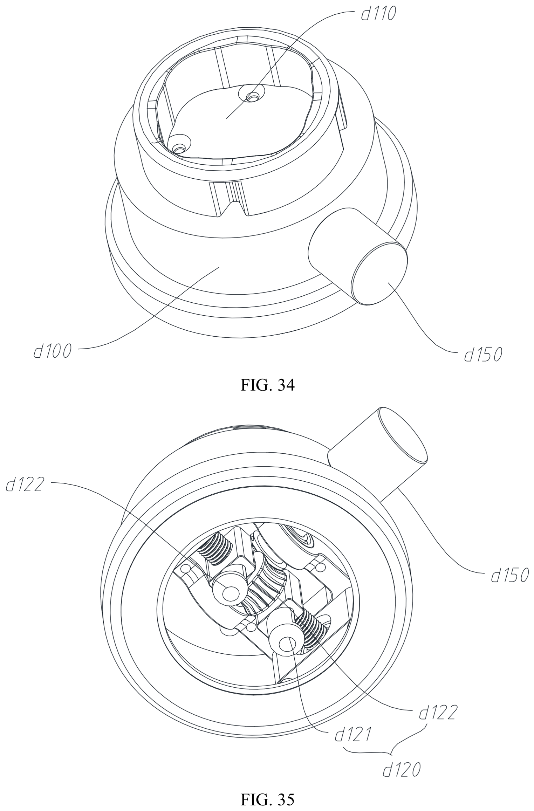

In some embodiments, the transmission mechanism is in transmission connection with a handle d150. As shown in FIG. 30, the screw rod or the double-headed screw rod is in transmission connection with the handle d150. The handle d150 may be directly connected to an end portion of the screw rod or the double-headed screw rod. As shown in FIG. 32, the screw rod or the double-headed screw rod may be connected to the handle d150 via a pair of gears, or be connected to the handle d150 via a toothed belt and a toothed wheel. As shown in FIG. 34, the double-headed screw rod may be connected to the handle d150 via a worm and worm gear.

In some embodiments, as shown in FIG. 30, the handle d150 is hinged to a transmission connecting shaft, and a hinge shaft of the handle d150 is perpendicular to the transmission connecting shaft. At this time, the transmission connecting shaft can be driven to rotate by moving the handle d150. After the handle d150 is rotated to be perpendicular to the transmission connecting shaft, moving the handle d150 has a larger lever arm, which makes it easier to apply force and can also provide a greater locking force.

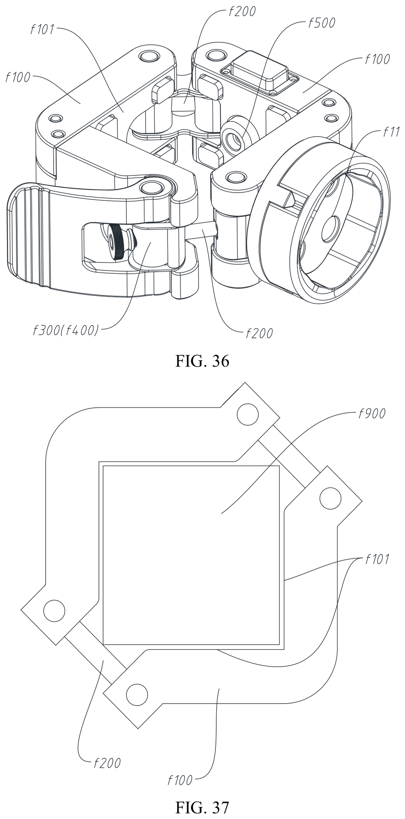

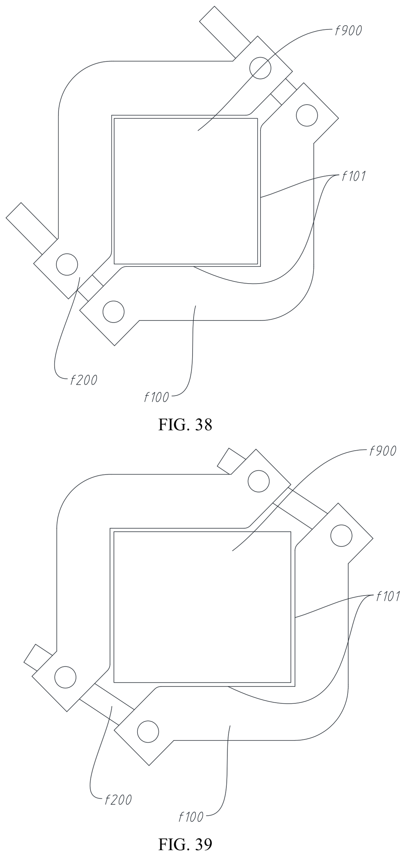

In some embodiments, referring to FIG. 36, the present disclosure discloses a column fixing member. It should be noted that the column fixing member in these embodiments can not only be fixed in a column of the external environment, but also be fixed on a specified column provided by the third type fixing member, and at least includes two fixing frames f100 and two adjusting links f200. When the column fixing member is fastened, the fixing frames f100 and the adjusting links f200 are alternately hinged to form an annular structure. The fixing frame f100 is formed with two fixing planes f101 arranged at an angle, and the two fixing planes f101 are located on a side of the fixing frame f100 adjacent to the other fixing frame f100. The length of the adjusting link f200 is adjustable. When in use, taking the two fixing planes f101 perpendicular to each other and the column fixing member fixed to a frame f900 with a rectangular cross-section as an example, by adjusting the length of the adjusting link f200, a distance between the two fixing frames f100 can be adjusted, thereby enabling the column fixing member to be fastened to frames f900 with different lengths and widths. For example, by increasing the length of the adjusting link f200, the column fixing member can be fixed to a frame f900 with larger length, width and thickness, as shown in FIG. 37. By reducing the length of the adjusting link f200, the column fixing member can be fixed on a frame f900 with smaller length, width and thinner, as shown in FIG. 38. In addition, when in use, the angle of the fixing frame f100 and the adjusting link f200 can be adjusted to make the two fixing frames f100 offset relative to each other, thereby enabling the column fixing member to be fixed on non-square frames f900 with different lengths and width ratios, as shown in FIG. 39. Of course, in the above embodiments, the frame f900 with the two fixing planes f101 perpendicular to each other and a rectangular cross-section is used as an example. In actual application, the angle between the two fixing planes f101 can also be set according to the cross-sectional shape of the fixing frame f100. When a cross-section of the fixing frame f100 is another irregular quadrilateral or another polygon, the angle formed by the fixing planes f101 can be set according to the diagonal angle of the quadrilateral or another polygon, thereby satisfying the adaptation of a plurality of frames f900 with quadrilateral or other polygonal cross-sections of different sizes at the same diagonal angle. That is, the column fixing member disclosed in the present disclosure can be applied to a plurality of frames f900 or square columns with quadrilateral or polygonal cross-sections of different side lengths when the diagonal angle is determined. At the same time, the column fixing member can also be fixed on the third type fixing member that provides a column installation environment.

In the column fixing member, a quick-release structure f300 and/or a fastening structure f400 may also be provided at a hinge of any fixing frame f100 and any adjacent adjusting link f200. By providing the quick-release structure f300, the annular structure formed by the mutual hinge of the fixing frame f100 and the adjusting link f200 can be disconnected at the quick-release structure f300, thereby facilitating the installation of the column fixing member on the frame f900, without needing to sleeve the fixing frame f100 from the end of the frame f900 each time during installation. By providing the fastening structure f400, the installation gap of the column fixing member can be eliminated, enabling the column fixing member to be fastened to the frame f900, further improving the stability of the column fixing member. Of course, in the aforementioned solution, even without the fastening structure f400, the column fixing member can be fastened by shortening the adjusting link f200. The fastening structure f400 and the quick-release structure can be independently provided at the hinge of the annular structure, or can be separately provided to achieve separate technical effects, or can be integrated into one position, so that the structure at this position has both the technical effect of quick connection and disconnection, and the technical effect of fastening when connected.

In a further solution, an anti-slip pad f140 and/or an elastic pad f150 is provided on the fixing plane f101. The anti-slip pad f140 can increase the friction between the fixing plane f101 and the frame f900, thereby improving the stability of the column fixing member on the frame f900. The elastic pad f150 can be squeezed during installation to generate a preloading force and an elastic force, which can increase friction while eliminating the installation gap, and achieve an anti-loosening effect. Similarly, the anti-slip pad f140 and the elastic pad f150 can be used alone to achieve the effect, or be used at the same time to achieve the effect. The elastic anti-slip pad f140 can be also be used to achieve both anti-slip and anti-loosening effects.

In a further solution, the fixing frame f100 is also provided with a mounting position or a first coupling seat 11 for coupling to a fitness device, a massage device, or other fixing members. In some embodiments, the mounting component is the first coupling seat 11. The mounting position or the first coupling seat 11 for a specific fitness device is provided on the fixing frame f100, which can make the coupling installation of the column fixing member and the fitness device more stable. At the same time, the characteristics of the column fixing member can be utilized to enable the specific fitness device to be installed on a plurality of frames f900 of different sizes at the same angle, thereby reducing the cost of installing the specific fitness device and massage device on different frames f900.

In a further solution, a temporary fastening apparatus f500 may also be provided in the column fixing member. The temporary fastening apparatus is provided on an inner side of the annular structure, and can apply an elastic force inward, or elastically extend inward, thereby interacting with the frame f900 to generate an elastic force. Through the elastic force, the interaction force between the column fixing member and the frame f900 or between the fixing frame f100 and the frame f900 can be enhanced. When the column fixing member is unfastened, the interaction force enables the column fixing member to remain in place on the frame f900, improving the stability and safety of the column fixing member, and preventing the column fixing member or the fitness device fixed on the column fixing member from slipping down due to gravity when the column fixing member is vertically provided on the frame f900, in case the user negligently unfastens the lock without supporting the column fixing member or the fitness device.

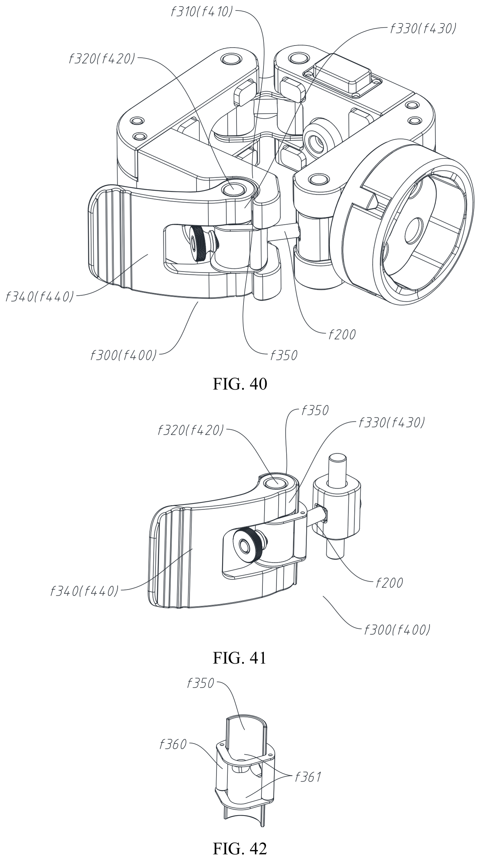

As shown in FIG. 40 and FIG. 41, a quick-release structure f300 in the column fixing member is disclosed in an embodiment. The quick-release structure f300 is located at the hinge of any fixing frame f100 and any adjacent adjusting link f200. When the column fixing member is not fastened, the adjacent fixing frame f100 and adjusting link f200 provided with the quick-release structure f300 can be separated via the quick-release structure f300.

In some embodiments, the specific structure of the quick-release structure f300 may include a quick-release rod connected to the fixing frame f100 or the adjusting link f200. The quick-release rod is connected to a fixing hook f310 provided on the adjusting link f200 or the fixing frame f100. The quick connection of the column fixing member is quickly connected through the quick-release rod and the corresponding fixing hook f310, and the structure is simple and the connection is stable.

In some embodiments, the quick-release structure f300 includes a fixing hook f310 and a connecting shaft f320, one of which is provided on the fixing frame f100 and the other is provided on the adjusting link f200. For example, as shown in FIG. 40, the fixing hook f310 is fixed on the fixing frame f100, and the connecting shaft f320 is provided on the adjusting link f200. When connecting, the connecting shaft f320 is configured to be lapped on the fixing hook f310 to achieve the connection between the fixing frame f100 and the adjusting link f200. When disassembling, the connecting shaft f320 can be separated from the fixing hook f310. Of course, the fixing hook f310 can also be fixed on the adjusting link f200, and the connecting shaft f320 can be provided on the fixing frame f100, which can be understood and freely replaced by those having ordinary skill in the art.

In a further solution, the quick-release structure f300 also includes a quick-release cam f330 and a rotating handle f340 connected to the quick-release cam f330. The quick-release cam f330 is rotatably disposed on the connecting shaft f320 and is configured to be lapped on the fixing hook f310. The radius of the quick-release cam f330 gradually increases along a rotation direction. The quick-release cam f330 is rotatably disposed on the outer side of the connecting shaft f320. When the connecting shaft f320 is lapped on the fixing hook f310, the quick-release cam f330 is also lapped on the fixing hook f310. At this time, the quick-release cam f330 can be rotated via the rotating handle f340. As the quick-release cam f330 rotates to different angles, the radius of the quick-release cam f330 at the position interacting with the fixing hook f310 will also change, thereby increasing or reducing the gap to achieve fastening and loosening of the connecting structure.

In a further solution, as shown in FIG. 41 and FIG. 42, the quick-release structure f300 further includes a gasket f350. The gasket f350 is located outside the quick-release cam f330 and is in floating connection with the connecting shaft f320. The provision of the gasket f350 changes the rotational contact between the quick-release cam f330 and the fixing hook f310 into rotational contact between the gasket f350 and the fixing hook f310. On one hand, this can prevent the quick-release cam f330 from wearing the fixing hook f310, and only the gasket f350 needs to be replaced when the gasket f350 is worn. On the other hand, a gasket f350 with a low friction coefficient can be selected to reduce the rotational resistance of the quick-release cam f330. Furthermore, the gasket f350 can be made of copper.

In a further solution, the gasket f350 is connected to a floating frame f360, and the floating frame f360 is provided with a floating hole f361. The connecting shaft f320 passes through the floating hole f361 to realize a floating connection between the gasket f350 and the connecting shaft f320, so that the gasket f350 can be suitable for a quick-release cam f330 whose radius changes with the rotation angle.

As shown in FIG. 10 and FIG. 41, a fastening structure f400 in the column fixing member is disclosed in an embodiment. The fastening structure f400 is located at a hinge of any fixing frame f100 and any adjacent adjusting link f200. The fastening structure f400 is configured to eliminate an installation gap of the annular structure, which can further improve the stability of the column fixing member installed on the frame f900. The fastening structure f400 includes a fixing groove f410 and a fastening shaft f420. For example, as shown in FIG. 40, the fixing groove f410 is provided on the fixing frame f100, the fastening shaft f420 is provided on the adjusting link f200, and a fastening cam f430 is sleeved on the outer side of the fastening shaft f420. The fastening cam f430 is connected to a fastening handle f440. When the fastening handle f440 is rotated, the radius of the fastening cam f430 located in the fixing groove f410 will gradually change along a rotation direction, thereby realizing the adjustment of the fastening and loosening of the annular structure.

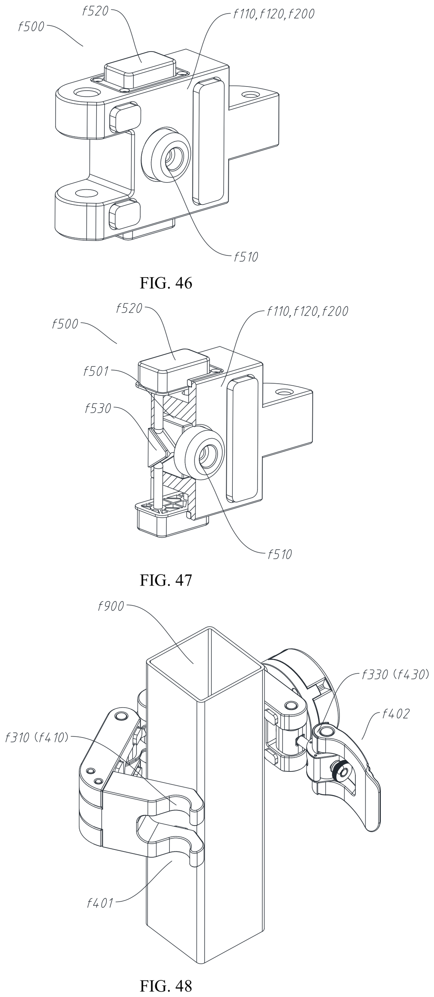

In a further embodiment, as shown in FIG. 48, the fastening structure f400 includes a first part f401 and a second part f402 that can be quickly separated, enabling the fastening structure f400 not only to eliminate the installation gap to achieve a fastening effect, but also to disconnect the annular structure at this position to achieve a quick-release function. For example, as shown in FIG. 40, the fastening shaft f420 and the fastening cam f430 can be separated from the fixing groove f410, so as to achieve the separation and quick connection of the two parts.

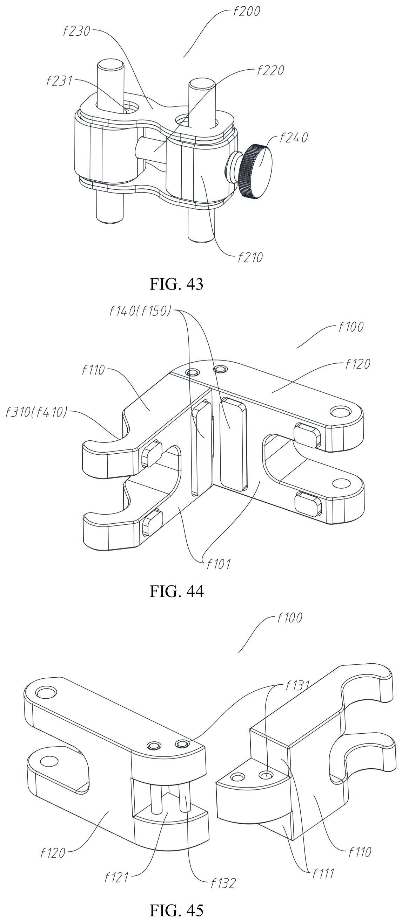

As shown in FIG. 43, an adjusting link f200 of the column fixing member is disclosed in an embodiment, including two adjusting shafts f210 respectively rotatably connected to two fixing frames f100, and an adjusting bolt f220 adjustably connected to the two adjusting shafts f210. The adjustable connection further includes the adjusting bolt f220 passing through one adjusting shaft f210 and being threadedly connected to the other adjusting shaft f210. When adjusting the length of the adjusting link f200, it is only necessary to rotate the adjusting bolt f220 to change the threaded connection relationship between the adjusting bolt f220 and the adjusting shaft f210, so as to achieve the change of the distance between the two adjusting shafts f210. The adjustable connection also includes the adjusting bolt f220 passing through the two adjusting shafts f210 in sequence and then being threadedly connected to an adjusting handle f240. The adjusting handle f240 and an end portion of the adjusting bolt f220 can limit the maximum spacing between the two adjusting shafts f210. By rotating the adjusting handle f240, the position of the adjusting handle f240 on the adjusting bolt f220 can be changed, thereby changing the maximum spacing between the two adjusting shafts f210 to achieve the adjustment of the two adjusting shafts f210.

In a further embodiment, a cross-section of the adjusting bolt f220 passing through the adjusting shaft f210 is polygonal, which can prevent the adjusting shaft f210 and the adjusting bolt f220 from rotating relative to each other around an axial direction of the adjusting bolt f220.

In a further embodiment, the adjusting link f200 further includes a connecting block f230. Both ends of the connecting block f230 are respectively connected to the adjusting shaft f210 through connecting holes. At least one of the connecting holes provided at both ends is a strip-shaped hole f231. A setting direction of the strip-shaped hole f231 is consistent with an adjusting direction of the adjusting link f200. The arrangement of the strip-shaped hole f231 can allow the position relationship of the connecting block f230 relative to the adjusting shaft f210 to change, so as to adapt to the adjusting function of the adjusting link f200. The arrangement of the connecting block f230 can provide a limiting effect for the adjustment of the adjusting link f200, and can set the maximum length and minimum length of the adjusting link f200. At the same time, the connecting block f230 can also play a protective role. When the bolt slips or disconnects, the adjusting link f200 can prevent the two adjusting shafts f210 from separating, thereby improving the safety and stability of the column fixing member.

In a further embodiment, there can be two connecting blocks f230, which are respectively located on both sides of the adjusting link f200 and at both ends of the two adjusting shafts f210, providing a more stable fixed connection effect for the adjusting shaft f210. The two connecting blocks f230 can also prevent the two adjusting shafts f210 from rotating relative to each other around the adjusting bolt f220 as an axis. There can also be four connecting blocks f230, which are stacked in pairs and respectively located on both sides of the adjusting link f200. The connecting blocks f230 in contact with the adjusting shaft f210 can be made of wear-resistant and self-lubricating materials to reduce the rotational resistance between the adjusting link f200 and the adjacent fixing frame f100. The connecting blocks f230 not in contact with the adjusting shaft f210 can be made of high-strength materials to further ensure the stable connection of the two adjusting shafts f210, as shown in FIG. 43.

In a further embodiment, when the adjustable connection of the adjusting bolt f220 is to pass through one adjusting shaft f210 and be threadedly connected to the other adjusting shaft f210, the adjusting link f200 further includes an adjusting handle f240. The adjusting handle f240 is provided at an opposite end of one end where the adjusting bolt f220 is threadedly connected to the adjusting shaft f210, so that the user can rotate the adjusting bolt f220 by screwing the adjusting handle f240.

As shown in FIG. 44 and FIG. 45, the structure of the fixing frame f100 in the column fixing member is disclosed in an embodiment. The fixing frame f100 includes a first structural block f110 and a second structural block f120. One end of the first structural block f110 and one end of the second structural block f120 are fixedly connected to each other to form the fixing frame f100, and an opposite end of the first structural block f110 and an opposite end of the second structural block f120 are connected to the adjusting link f200. The first structural block f110 and the second structural block f120 are arranged at an angle, and inner sides of the first structural block f110 and the second structural block f120 respectively form the fixing planes f101. The fixing frame f100 is formed by connecting the two structural blocks to each other, and the strip-shaped first structural blocks f110 and second structural blocks f120 can be processed during manufacturing, and then combined at a certain angle to form the fixing frame f100. There is no need to integrally form the fixing frame f100, nor is there any need to process the fixing plane f101 on the fixing frame f100, thereby reducing the processing cost of the fixing frame f100. At the same time, the fixing frame f100 is formed by combining the first structural block f110 and the second structural block f120. When the column fixing member needs to be replaced to be fixed on a frame f900 whose size exceeds the adjustable range of the adjusting link f200, the first structural block f110 or the second structural block f120 of different lengths can be replaced, thereby making the column fixing member adaptable to frames f900 of more types and sizes.

In a further embodiment, as shown in FIG. 45, a first notch f111 is provided at an end portion of the first structural block f110, and a second notch f121 is provided at an end portion of the second structural block f120. The first notch f111 and the second notch f121 are alternately arranged in a complementary manner. The first structural block f110 and the second structural block f120 are fixed by inserting into each other through the first notch f111 and the second notch f121, which can improve the connection stability between the first structural block f110 and the second structural block f120. After being inserted into each other, the first structural block f110 and the second structural block f120 can be fixed by gluing, welding, or riveting, which is not limited in the embodiment.

In a further embodiment, the first structural block f110 and the second structural block f120 are both provided with a fixing through hole f131 at one end with a notch. When the first structural block f110 and the second structural block f120 are inserted into each other, the fixing through holes f131 are aligned. At this time, the first structural block f110 and the second structural block f120 can be fixedly connected by inserting a fixing pin f132.

As shown in FIG. 46 and FIG. 47, a temporary fastening apparatus f500 in the column fixing member is disclosed in an embodiment. The temporary fastening apparatus f500 is located on the inner side of the annular structure, and can apply an elastic force inward, or elastically extend inward, thereby interacting with the frame f900 to generate an elastic force. Through the elastic force, the interaction force between the column fixing member and the frame f900 or between the fixing frame f100 and the frame f900 can be enhanced. When the column fixing member is unfastened, the interaction force enables the column fixing member to remain in place on the frame f900, improving the stability and safety of the column fixing member. It should be noted that the temporary fastening apparatus f500 elastically protruding inward not only includes the effect achieved by the elastic force, but also includes the apparatus protruding inward by magnetic force.

In a further embodiment, the temporary fastening apparatus f500 includes a mounting groove f501 opened on the inner side of the annular structure, an elastic block f510 disposed in the mounting groove f501 and elastically protruding toward the outside of the mounting groove f501, and an unlocking block f520 linked with the elastic block f510. When the user does not operate the unlocking block f520, the elastic block f510 naturally elastically protrudes toward the outside of the mounting groove f501, thereby generating a preloading elastic force between the annular structure and the frame f900. When the user needs to release the preloading force, for example, when the user needs to significantly adjust the position of the column fixing member on the frame f900, the unlocking block f520 can be pressed to retract the elastic block f510 into the fixing groove f410, releasing the contact between the elastic block f510 and the frame f900. At this time, the user can more easily slide the column fixing member along the frame f900. After the user completes the position adjustment and releases the unlocking block f520, the elastic block f510 recovers and provides a preloading elastic force, completing the adjustment of the position of the column fixing member on the frame f900. The mounting groove f501 can be opened on the column fixing member in the annular structure, as shown in FIG. 47, or can be opened on the adjustable link (not shown in the figure).

In a further embodiment, the unlocking block f520 can be provided on an upper side or a lower side of the annular structure, and a movement direction of the unlocking block f520 is an up-down direction. The up-down direction is based on a direction of movement of the column fixing member along the frame f900. The unlocking block f520 is provided on the upper or lower side of the column fixing member, and the movement direction of the unlocking block f520 is along the up-down direction. When the user grasps the column fixing member, the unlocking block f520 can be naturally pressed, thereby improving the user experience.

**In** a further embodiment, unlocking blocks f520 can also be provided on the upper and lower sides of the annular structure, and both of the two unlocking blocks f520 are linked with the elastic block f510, and the movement directions of the two unlocking blocks f520 are both the up-down direction. When the user grips the column fixing member through the upper and lower sides, force can be applied through the unlocking blocks f520 at the same time, thereby driving the elastic block f510 to retract, further reducing the force required for the user to press the unlocking blocks f520, making it easier for the user to operate the unlocking block f520.

**In** a further embodiment, as shown in FIG. 46, a wedge structure f530 is provided on one end of the elastic block f510 connected to the unlocking block f520. When the unlocking block f520 is pressed, the unlocking block f520 can drive the elastic block f510 to extend out of the mounting groove f501 via the wedge structure f530. At the same time, after the unlocking block f520 is released, an elastic force of the elastic block f510 can also drive the unlocking block f520 to reset through the wedge structure f530, thereby realizing the linkage between the unlocking block f520 and the elastic block f510. Two wedge structures f530 are shown in FIG. 47, and the upper and lower unlocking blocks f520 are respectively linked with the elastic block f510 through the two wedge structures f530. Of course, there are alternative solutions to this embodiment, such as arranging the wedge structure f530 on the unlocking block f520, or arranging the wedge structure f530 on both the elastic block f510 and the unlocking block f520. Regardless of the solution, those having ordinary skill in the art can understand that any of the above arrangements of the wedge structure f530 can realize the linkage between the elastic block f510 and the unlocking block f520, and after the user releases the unlocking block f520, the elastic force of the elastic block f510 can reset the elastic block f510 and the unlocking block f520.

The elastic force of the elastic block f510 or the elastic protrusion of the elastic block f510 inward can be provided by arranging a spring in the mounting groove f501, or by arranging a permanent magnet in the mounting groove f501, which is not limited in the present disclosure. At this time, an opening of the mounting groove f501 is provided with a limiting mechanism for preventing the elastic block f510 from falling off from the mounting groove f501. Similarly, an elastic force can also be provided by elastic structures such as a torsion spring or a spring strip.

As shown in FIG. 48, FIG. 49, and FIG. 50, an embodiment demonstrates the use process of a column fixing member.

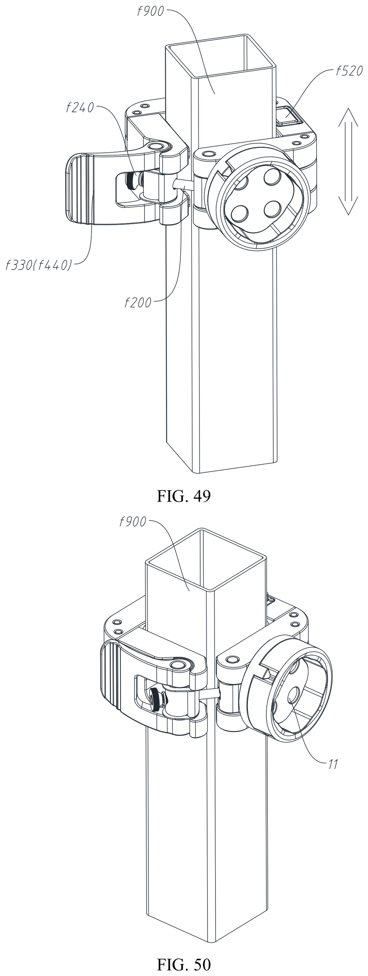

First, the column fixing member is opened via a quick-release structure or a detachable fastening structure, and is sleeved on the frame f900, as shown in FIG. 48. After sleeving, the quick-release cam f330 or the fastening cam f430 can be lapped on the fixing hook f310 or the fixing groove f410, that is, the quick-release structure f300 or the detachable fastening structure f400 is configured to connect the disconnected parts the column fixing member to each other to form an annular structure sleeved on the frame f900, as shown in FIG. 48. At this time, the length of the adjusting link f200 and the angle formed between the adjusting link f200 and the fixing frame f100 can be adjusted by the adjusting handle f240, so that the shape of the column fixing member fits the frame f900 as much as possible, and the gap between the column fixing member and the frame f900 is minimized. At the same time, in this case, the user can release the temporary locking of the column fixing member on the frame f900 by pressing the unlocking block f520 of the temporary fastening apparatus f500, thereby adjusting the specific position of the column fixing member moving along the up-down direction on the frame f900. Finally, as shown in FIG. 50, when the adjustment is completed, move the quick-release handle or the fastening handle f440 to lock the column fixing member, completing the stable connection of the column fixing member on the frame f900. At this time, the fitness device can be fixed on the first coupling seat 11.

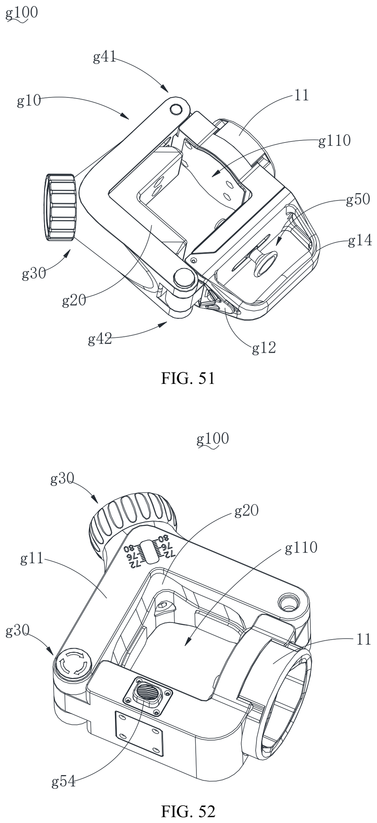

In some embodiments, referring to FIG. 51 and FIG. 52, another first type fixing member is disclosed, specifically a column fixing member g100. It should be noted that a main fixing member in these embodiments can not only be fixed in a column in the external environment, but also can be fixed on a specified column provided by the third type fixing member, including an outer frame g10, a clamping block g20, and an adjusting and locking mechanism g30. An accommodating space g110 is opened inside the outer frame g10, part or all of the clamping block g20 is movably disposed on an inner side of the outer frame g10. The adjusting and locking mechanism g30 is configured to adjust the position of the clamping block g20 relative to the outer frame g10 and lock the clamping block g20.

In the column fixing member g100 of the embodiment of the present disclosure, the adjusting and locking mechanism g30 can adjust the position of the clamping block g20 relative to the outer frame g10 to control the size of the accommodating space g110 inside the outer frame g10, so that the column fixing member g100 can be locked on frames with different cross-section sizes, and the operation is relatively simple. At the same time, the fitness device and massage device can be adapted to different types of frames through the column fixing member g100, making replacement more convenient.

Specifically, the column fixing member g100 can be configured to fix a fitness device. That is, the user can first clamp the column fixing member g100 on the frame, and then assemble the fitness device on the column fixing member g100, so that the user can use the fitness device for exercise. When the user wants to change the position for exercise, the user can move the column fixing member g100 to a position where the user wants to exercise, so that the user can exercise in different positions quickly and conveniently.

The outer edge of the outer frame g10 can be set to a square structure or a circular structure, etc. The present disclosure does not limit the outer edge structure of the outer frame g10. The central area of the outer frame g10 is arranged in a penetrating manner, forming the accommodating space g110 inside the outer frame g10. The accommodating space g110 can be square, circular, or other shapes, adapted to the cross-sectional shape of the frame, so as to be clamped more tightly on the frame.

Part or all of the clamping block g20 is movably disposed inside the accommodating space g110, and the adjusting and locking mechanism g30 is fixedly disposed on the outer frame g10. The clamping block g20 is connected and cooperated with the adjusting and locking mechanism g30, so that the position of the clamping block g20 relative to the outer frame g10 can be adjusted under the adjustment of the adjusting and locking mechanism g30, that is, the position of part or all of the clamping block g20 located in the accommodating space g110 is adjusted, thereby changing the size of the accommodating space g110, so that the accommodating space g110 fits the column fixing member g100, and thus the column fixing member g100 can be stably and firmly assembled on the frame.

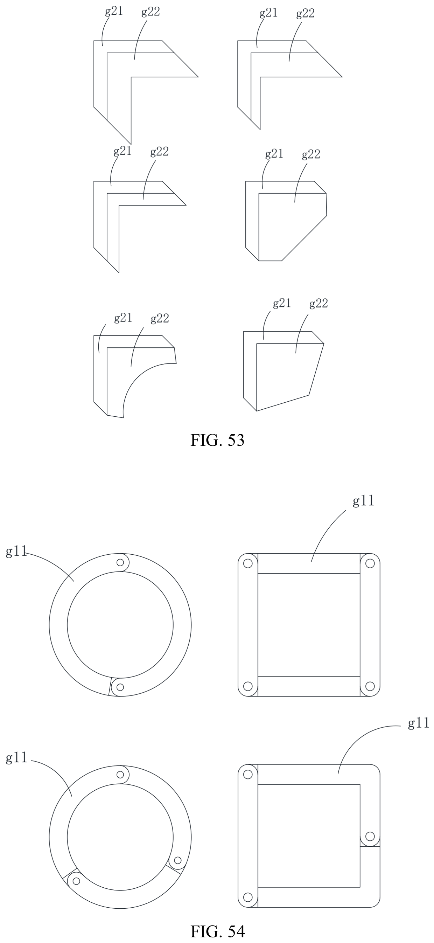

As shown in FIG. 53, it should be noted that the shape of the clamping block g20 toward an inner side of the accommodating space g110 can be angular, arc-shaped, convex, top block-shaped, groove-shaped, etc. It may be adapted to the shape of the accommodating space g110, or may not be adapted to the shape of the accommodating space g110, and thus can better cooperate with the outer frame g10 to clamp the frame.

The adjusting and locking mechanism g30 may include any structure with an adjusting function, for example, a structure that pushes the clamping block g20 to move by rotating a screw, or a structure that drives the clamping block g20 to move by a telescopic rod, etc. The present disclosure does not limit the specific structure and adjustment method of the adjusting and locking mechanism g30, as long as the adjusting and locking mechanism g30 can adjust the position of the clamping block g20 relative to the outer frame g10 to lock the column fixing member g100 on the frame.

Referring to FIG. 51, FIG. 52 and FIG. 54, in some embodiments, the outer frame g10 includes at least two frame units g11 connected in sequence. Adjacent frame units g11 are connected to each other via a hinge structure g41 or a quick-release structure g42. Two or more frame units g11 are connected end to end in sequence and enclose an accommodating space g110.

Thus, the outer frame g10 is connected by hinged or quick-release means using a plurality of frame units g11, making the installation and removal of the column fixing member g100 relative to the frame more convenient and quick, while also making the outer frame g10 more compatible with the frame, thereby improving the user experience.

Specifically, the frame units of the outer frame g10 may include two, three or four, etc. At least two frame units are connected end to end in sequence to enclose an internal accommodating space g110. Two adjacent frame units can be hingedly connected using an axle pin structure or another structure, or can be quickly released using a lock catch or another structure. As shown in FIG. 54, for example, a circular accommodating space g110 enclosed by two semicircular frame units g11; a rectangular accommodating space g110 enclosed by two L-shaped frame units g11; a circular or elliptical accommodating space g110 enclosed by a plurality of arc-shaped frame units g11; a rectangular accommodating space g110 enclosed by a plurality of L-shaped frame units g11 and a plurality of long strip-shaped frame units g11, etc. Preferably, two adjacent frame units include at least one quick-release structure g42 for connection, so as to facilitate the installation and removal of the column fixing member g100 on the frame.

In embodiments of the present disclosure, two outer frame units are taken as an example for description, but those having ordinary skill in the art will appreciate that the technical solutions in embodiments of the present disclosure are applicable to column fixing members g100 with more frame units connected to each other. In the present disclosure, one end of the two frame units is hingedly connected by an axle pin structure, and the other end is connected by a quick-release structure g42.

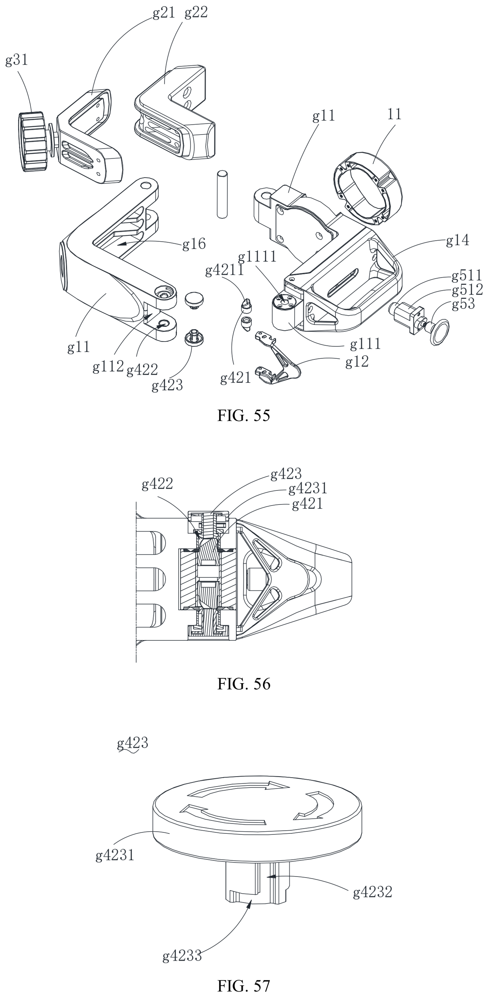

Referring to FIG. 55 and FIG. 56, in some embodiments, the quick-release structure g42 includes a telescopic pin g421 and an insertion hole g422. The telescopic pin g421 is provided at an end portion of a frame unit g11, and the telescopic pin g421 is elastically ejected to the outside of the end portion of the frame unit g11. The insertion hole g422 is provided at an end portion of the adjacent frame unit g11, and the insertion hole g422 is arranged corresponding to the telescopic pin g421. Directions of the insertion hole g422 and the telescopic pin g421 are the same as a hinge direction of the two frame units g11.

Thus, when the telescopic pin g421 is extended into the insertion hole g422, the two frame units g11 can be locked and connected; pressing the telescopic pin g421 can retract the telescopic pin g421, thereby controlling the connection between the telescopic pin g421 and the insertion hole g422, so that connecting ends of the two frame units g11 are connected or separated, thereby realizing the quick disassembly of the fixing frame.

Specifically, there are two telescopic pins g421 with opposite ejection directions, which are respectively coupled to the two insertion holes g422 of the adjacent frame unit g11. The end portion of one frame unit g11 can be provided with a mounting portion g111, and the mounting portion g111 is provided with a through mounting hole g11, and the two telescopic pins g421 are mounted in the mounting hole g11 opposite to each other. The two telescopic pins g421 arranged opposite to each other can make the connection between adjacent frame units g11 more stable, and the user can press the two telescopic pins g421 relative to each other to retract the two telescopic pins g421 at the same time, making the operation more convenient.

Specifically, an elastic member may be provided in the mounting hole g11, and the elastic member can elastically push the telescopic pin g421 outward. When there are two telescopic pins g421, the elastic member can provide an elastic force to simultaneously push the two telescopic pins g421 out of the mounting hole g11 in opposite directions.

Specifically, the end portion of the adjacent frame unit g11 can be provided with an avoidance position g112 adapted to the mounting portion g111, and insertion holes g422 are respectively opened on opposite sides of the avoidance position g112, and the shape of the insertion hole g422 is adapted to the shape of the telescopic pin g421.

When the two frame units g11 need to be locked and connected, press the telescopic pin g421 to retract the telescopic pin g421 into the mounting hole g11, then move the mounting portion g111 to the avoidance position g112, and release the telescopic pin g421 so that the telescopic pin g421 pushes out of the mounting hole g11 and extends into the insertion hole g422, thereby achieving the locking connection between the two frame units g11. Similarly, when the two frame units g11 need to be separated, press the telescopic pin g421 to withdraw the telescopic pin g421 from the insertion hole g422 and retract the telescopic pin g421 into the mounting hole g11, then move the mounting portion g111 out of the avoidance position g112, thereby achieving the separation of the two frame units g11. Furthermore, the quick-release structure g42 of the embodiment of the present disclosure can realize the rapid locking and separation of the two frame units g11, simplifying the installation and disassembly of the column fixing member g100, which is convenient and quick.

Referring to FIG. 55 and FIG. 56, in some embodiments, a guide slope g42g11 is provided at an end portion of the telescopic pin g421. The guide slope g42g11 can be formed at the end portion of the telescopic pin g421 extending out of the mounting hole g11, and the guide slope g42g11 can face the avoidance position g112.

Thus, when the two frame units g11 need to be locked and connected, the mounting portion g111 can move toward the avoidance position g112, so that the telescopic pin g421 can be pressed back into the mounting hole g11 directly through the cooperation of the avoidance position g112 and the guide slope g42g11, and the telescopic pin g421 can be pressed back without actively pressing the telescopic pin g421. When the telescopic pin g421 moves to the insertion hole g422, the telescopic pin g421 can be ejected and extend into the insertion hole g422, thereby achieving the locking of the two frame units g11.

Referring to FIG. 55 and FIG. 56, in some embodiments, an unlocking press button g423 is movably disposed in the insertion hole g422 for abutting against the telescopic pin g421. The unlocking press button g423 can move between a first position in which the unlocking press button g423 presses the telescopic pin g421 to retract and a second position in which the unlocking press button g423 contacts the telescopic pin g421 when the telescopic pin g421 is ejected.

Thus, the telescopic pin g421 can be retracted into the mounting hole g11 by pressing the unlocking press button g423 to achieve the rapid unlocking of the two frame units g11.

Specifically, the unlocking press button g423 is movably mounted in the insertion hole g422 and can slide between the first position and the second position in the insertion hole g422. When the unlocking press button g423 is in the first position, that is, when the unlocking press button g423 is pressed toward the telescopic pin g421, the unlocking press button g423 can push the telescopic pin g421 out of the insertion hole g422 and retract the telescopic pin g421 into the mounting hole g11. When the unlocking press button g423 is in the second position, that is, when the unlocking press button g423 is not pressed, the unlocking press button g423 is lifted under the abutment of the telescopic pin g421, and the frame unit g11 is in a locked state or an unconnected state.

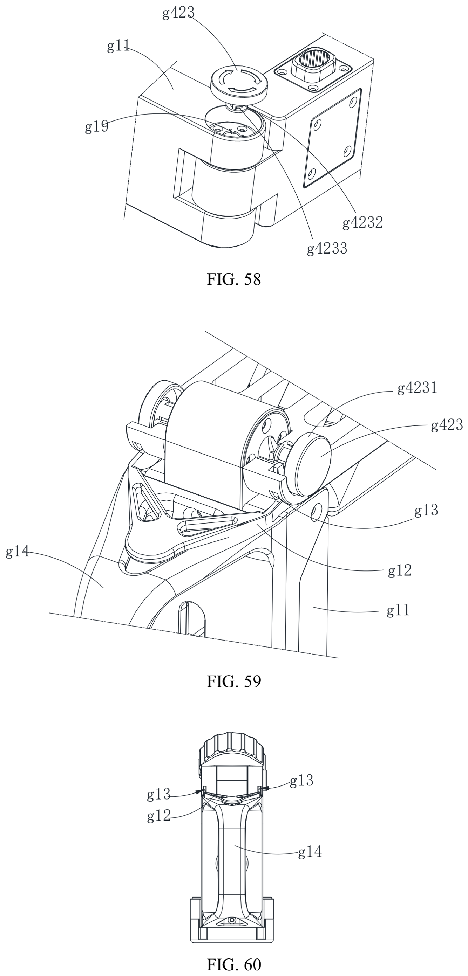

Referring to FIG. 57 and FIG. 58, in some embodiments, one of the insertion hole g422 and the unlocking press button g423 is provided with a compression groove g4232 along a generatrix direction and a rotation groove g4233 along a circumferential direction on a plane where the insertion hole g422 and the unlocking press button g423 slide and interact. The compression groove g4232 is in communication with the rotation groove g4233, and the other of the insertion hole g422 and the unlocking press button g423 is provided with a limiting protrusion g19. The limiting protrusion g19 is configured to slide in the compression groove g4232 or the rotation groove g4233. When the telescopic pin g421 is inserted into the insertion hole g422, the limiting protrusion g19 is located in the rotation groove g4233.

Thus, the unlocking press button g423 can perform limited sliding through the cooperation of the compression groove g4232 and the limiting protrusion g19, and be locked and pressed through the cooperation of the rotation groove g4233 and the limiting protrusion g19, thereby preventing the unlocking press button g423 from being accidentally touched during fitness exercises, causing the frame unit g11 to be unlocked and causing harm to the user.

Specifically, the unlocking press button g423 can be a columnar structure and can rotate and move in the insertion hole g422.

In an embodiment, an outer wall of the unlocking press button g423 is provided with a compression groove g4232 and a rotation groove g4233 in communication with each other. The compression groove g4232 extends along a pressing direction of the unlocking press button g423, the rotation groove g4233 extends along an axial direction of the unlocking press button g423. The rotation groove g4233 is located at an end portion of the compression groove g4232 adjacent to the telescopic pin g421. In other words, it can be understood that the communicating compression groove g4232 and rotation groove g4233 are opened in an "L" shape on the outer wall of the unlocking press button g423. Correspondingly, a limiting protrusion g19 is provided on an inner wall of the insertion hole g422, and the limiting protrusion g19 can extend into the compression groove g4232 and the rotation groove g4233.

When the limiting protrusion g19 is located in the compression groove g4232, with the cooperation of the limiting protrusion g19 and the compression groove g4232, the unlocking press button g423 can move vertically in the pressing direction. At this time, the unlocking press button g423 can be used normally to unlock the frame unit g11.

When the frame unit g11 is in the locked state, the limiting protrusion g19 is located at the end portion of the compression groove g4232 adjacent to the telescopic pin g421, that is, the connection point between the compression groove g4232 and the rotation groove g4233. At this time, rotating the unlocking press button g423 causes the limiting protrusion g19 to move along the rotation groove g4233 in a direction away from the compression groove g4232, so that under the restriction of the limiting protrusion g19 and the rotation groove g4233, the unlocking press button g423 cannot be pressed, that is, the press-lock of the unlocking press button g423 is achieved, thereby avoiding accidental touching of the unlocking press button g423. When the position of the column fixing member g100 needs to be changed, the unlocking press button g423 is rotated to move the limiting protrusion g19 back to the compression groove, so that the press-unlock can be achieved.

Of course, in another embodiment, the compression groove g4232 and the rotation groove g4233 can also be opened on the inner wall of the insertion hole g422, and the limiting protrusion g19 can be provided on the unlocking press button g423. The present disclosure does not limit whether the compression groove g4232, the rotation groove g4233, and the limiting protrusion g19 are specifically provided on the unlocking press button g423 or on the insertion hole g422.

Referring to FIG. 59 and FIG. 60, in some embodiments, the frame unit g11 provided with the telescopic pin g421 is also movably provided with a locking elastic piece g12, a locking flange g4231 is provided on a peripheral side of the unlocking press button g423. When the telescopic pin g421 is inserted into the insertion hole g422, the locking elastic piece g12 acts on the locking flange g4231 and prevents the unlocking press button g423 from pressing the telescopic pin g421. The locking elastic piece g12 has an elastic force to rotate toward the locking flange g4231.

Thus, the unlocking press button g423 can be pressed and locked under the restriction of the locking elastic piece g12 and the locking flange g4231, providing a second layer of protection to prevent the frame unit g11 from being accidentally unlocked. When unlocking is required, only the locking elastic piece g12 needs to be pressed to allow the locking elastic piece g12 to overcome the elastic force and leave the locking flange g4231, and then the unlocking press button g423 can be pressed to unlock the connection of the frame unit g11.

Referring to FIG. 59 and FIG. 60, in some embodiments, the frame unit g11 with the insertion hole g422 is provided with a locking groove g13 in communication with the insertion hole g422, and part of the locking elastic piece g12 extends into the locking groove g13, and this part can interact with the locking flange g4231. By adding the locking groove g13 and making the locking elastic piece g12 move in the locking groove g13, the locking stability can be improved, and the installation space can be saved. Exemplarily, the locking groove g13 is opened at the end of the frame unit g11 with the insertion hole g422 and faces an end portion of the adjacent frame unit g11, so that the locking groove g13 can allow the locking elastic piece g12 of the adjacent frame unit g11 to be inserted through and interact with the locking flange g4231.

As shown in FIG. 51, in some embodiments, the frame unit g11 provided with the locking elastic piece g12 is provided with an outer frame handle g14.

Thus, the user can hold the outer frame handle g14 to press the locking elastic piece g12, facilitating the pressing of the locking elastic piece g12. At the same time, the arrangement of the outer frame handle g14 also improves the stability when the user installs and disassembles the column fixing member g100, avoiding falling.

Specifically, the outer frame handle g14 may extend along a length direction of the frame unit g11, and the locking elastic piece g12 is located at an end side of the outer frame handle g14. When the user holds the outer frame handle g14, the thumb can be used to press the locking elastic piece g12, so that there is a good force point when pressing the locking elastic piece g12. At the same time, through this arrangement, the user can complete the actions of holding the column fixing member g100 and pressing the locking elastic piece g12 with one hand at the same time, and the other hand only needs to press the unlocking press button g423 to complete the quick connection or separation of the frame unit g11, making the operation more convenient.

Referring to FIG. 51, FIG. 55, and FIG. 61, in some embodiments, the column fixing member g100 further includes a preloading apparatus g50. The preloading apparatus g50 is provided on the outer frame g10, and the preloading apparatus g50 can provide preloading pressure to the accommodating space g110.

Thus, during the installation of the column fixing member g100, when the size of the accommodating space g110 inside the outer frame g10 is relatively loose relative to a cross-section of the frame, the preloading apparatus g50 can provide a certain pressing force toward the frame to prevent the column fixing member g100 from sliding down, facilitating the adjustment of the position of the clamping block g20.

Exemplarily, the preloading apparatus g50 includes a preloading block g51 and a preloading spring g52. The preloading block g51 is located on the inner side of the outer frame g10. The preloading spring g52 is configured to elastically push the preloading block g51 inward, thereby realizing a solution of providing preloading pressure to the accommodating space g110.

Specifically, the preloading apparatus g50 works and produces a preloading effect before the clamping block g20 is locked in the accommodating space g110, mainly configured to prevent the column fixing member g100 from sliding downward due to its own gravity when the clamping block g20 fails to lock and clamp the frame.

Furthermore, the preloading block g51 may be provided inside the accommodating space g110 of the outer frame g10, and the preloading spring g52 is provided between the preloading block g51 and the outer frame g10. When the outer frame g10 is clamped on the frame, the preloading block g51 is pushed out toward the frame under the elastic action of the preloading spring g52, so that a certain friction force is generated between an inner wall of the accommodating space g110 and the frame, thereby preventing the column fixing member g100 from sliding relative to the frame.

It should be noted that the preloading spring g52 squeezes the preloading block g51 so that the friction force formed between the inner side of the accommodating space g110 and the frame is greater than the gravity of the column fixing member g100. At the same time, an elastic force of the preloading spring g52 squeezing the preloading block g51 is smaller than a clamping force of the clamping block g20. That is to say, the preloading apparatus g50 mainly plays an auxiliary clamping role before the clamping block g20 is clamped, and a main clamping force of the column fixing member g100 is a force generated by the adjusting and locking mechanism g30 adjusting the clamping block g20 toward the inside of the accommodating space g110.

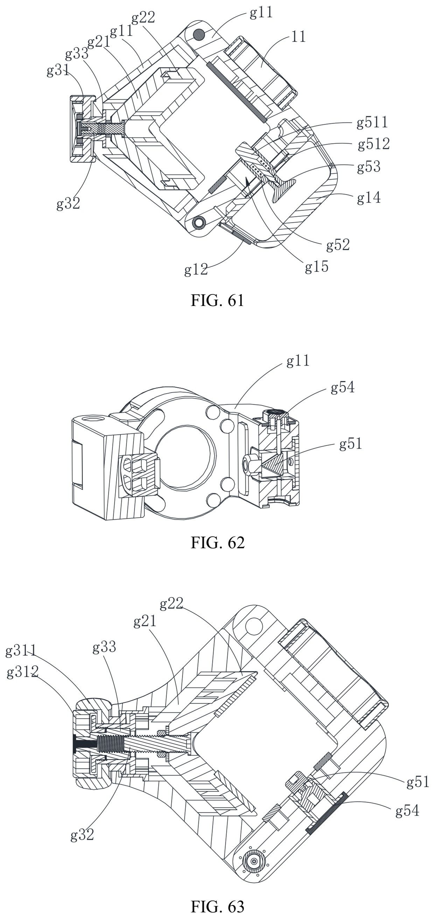

As shown in FIG. 61, in some embodiments, the outer frame g10 is provided with a sliding slot g15, and the preloading apparatus g50 is slidably disposed in the sliding slot g15.

Thus, the preloading apparatus g50 can adjust a position of releasing a preloading force into the accommodating space g110 by sliding in the sliding slot g15, so that the preloading apparatus g50 can be squeezed with the frame at an appropriate position, avoiding loosening due to insufficient preloading.

Specifically, the sliding slot g15 is provided on the inner side of the outer frame g10, with an opening facing the inside of the accommodating space g110, and the preloading block g51 is slidably disposed in the sliding slot g15.

Furthermore, the preloading apparatus g50 slides in the sliding slot g15 with damping, that is, the sliding of the preloading apparatus g50 has a certain resistance, so that the user can more easily adjust the position of the preloading apparatus g50 in the sliding slot g15, and can slide the preloading apparatus g50 to the desired adjustment position more accurately.

As shown in FIG. 55 and FIG. 61, in some embodiments, the preloading block g51 may include a slider g512 and a pressing block g511. A pressing groove is formed inside the slider g512, with a groove opening facing the accommodating space g110. The pressing block g511 is movably disposed in the pressing groove, and the preloading spring g52 is also assembled in the pressing groove and is located between the pressing block g511 and the bottom of the pressing groove to provide an elastic force for the pressing block g511 to be pushed out toward the accommodating space g110.

The slider g512 is slidably disposed in the sliding slot g15. A damping structure may be provided between the slider g512 and the sliding slot g15 to increase the friction force between the slider g512 and the sliding slot g15, preventing the preloading apparatus g50 from sliding freely in the sliding slot g15 and affecting the preloading effect. For example, a plurality of protrusions and a plurality of corresponding recesses are respectively provided on surfaces where the slider g512 and the sliding slot g15 are in sliding contact. The present disclosure does not limit the damping structure.

As shown in FIG. 55 and FIG. 61, in some embodiments, the preloading apparatus g50 further includes an unlocking handle g53, which is configured to pull the preloading block g51 or the preloading spring g52 outward to release the preloading pressure.

Thus, the preloading apparatus g50 can release the preloading force of the preloading block g51 toward the accommodating space g110 by pulling the unlocking handle g53, facilitating the adjustment of the position of the column fixing member g100 on the same frame, and also facilitating the disassembly and installation of the column fixing member g100.

When the user needs to adjust the position on the same frame, after loosening the clamping block g20, the preloading apparatus g50 has preloading force toward the frame to stabilize the column fixing member g100, so that the column fixing member g100 will have a certain resistance when moving on the frame. When the user wants to adjust the position of the column fixing member g100 on the frame over a long distance, the user can pull up the preloading block g51 by the unlocking handle g53 to remove the preloading force, so that the column fixing member g100 can move more smoothly on the frame.

When the user needs to disassemble the column fixing member g100, due to the action of the preloading force, the quick-release structure g42 will also be tightened, and there will be a large friction force between the telescopic pin g421 and the insertion hole g422, and then there will be a certain resistance when pressing the unlocking press button g423. At this time, the preloading block g51 can also be pulled up through the unlocking handle g53 to remove the preloading force, facilitating the disassembly of the column fixing member g100.

Specifically, when the preloading apparatus g50 is fixedly disposed on the outer frame g10, the unlocking handle g53 is movably disposed on the outer frame g10. When the preloading apparatus g50 is slidably disposed on the outer frame g10, the unlocking handle g53 is movably disposed on the slider g512.

Referring to FIG. 55 and FIG. 61, in some embodiments, the outer frame g10 is further provided with an outer frame handle g14. The outer frame handle g14 and the preloading apparatus g50 are located on the same side of the outer frame g10.

Thus, the user can use the outer frame handle g14 as a support point to pull the unlocking handle g53 to remove the preloading force. Specifically, when the user holds the outer frame handle g14, the user can pull the unlocking handle g53 with four fingers without performing additional operations on the unlocking handle g53, and can complete the actions of holding the outer frame handle g14 and pulling the unlocking handle g53 with one hand. The arrangement of the outer frame handle g14 also enables the user to better grasp the column fixing member g100, improving usage safety.

Referring to FIG. 52 and FIG. 62, in some embodiments, the preloading apparatus g50 further includes an unlocking button g54. A movement direction of the unlocking button g54 is different from a movement direction of the preloading block g51. At least one of the unlocking button g54 and the preloading block g51 is provided with a sliding wedge. The sliding wedge is configured to slide in contact with the other. When the unlocking button g54 is pressed, the preloading block g51 retracts.

Thus, the preloading apparatus g50 can release the preloading force of the preloading block g51 toward the accommodating space g110 by pressing the unlocking button g54, facilitating the adjustment of the position of the column fixing member g100 on the same frame. At the same time, pressing the unlocking button g54 can also grasp the column fixing member g100, which is convenient for disassembly and installation of the column fixing member g100. This solution provides another solution for unlocking the preloading apparatus g50. Specifically, the unlocking button g54 may be provided on the outer frame g10, or on the frame unit g11.

Referring to FIG. 61 and FIG. 63, in some embodiments, the adjusting and locking mechanism g30 includes an adjusting handle g31, an adjusting screw g32, and an adjusting nut g33. The adjusting handle g31 is rotatably disposed on the outer frame g10, one of the adjusting screw g32 and the adjusting nut g33 is connected to the adjusting handle g31, and the other is connected to the clamping block g20. The adjusting screw g32 and the adjusting nut g33 cooperate with each other. When one of the adjusting screw g32 and the adjusting nut g33 is fixed, rotating the other will change a distance between the adjusting screw g32 and the adjusting nut g33. Thus, by rotating the adjusting nut g33, the clamping block g20 can be moved away from or adjacent to the adjusting nut g33 to complete the adjustment. Furthermore, a self-locking thread may be used to achieve a locking effect after adjustment.

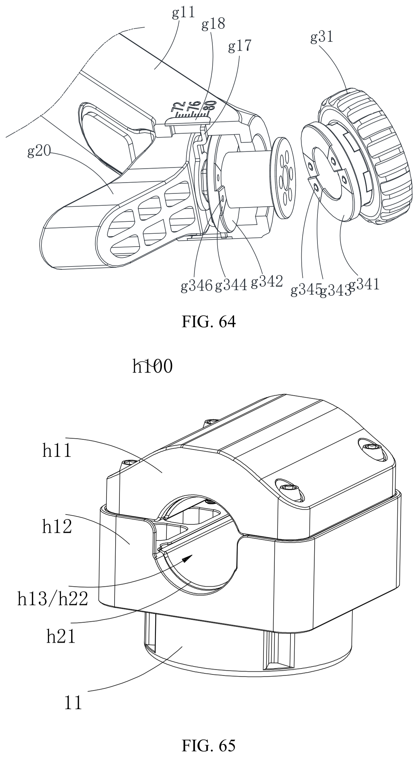

Referring to FIG. 52 and FIG. 64, in some embodiments, a mark is provided on the clamping block g20, or on the adjusting nut g33 or adjusting screw g32 connected to the clamping block g20. The outer frame g10 is provided with a scale g17 and an observation window g18, which are disposed corresponding to the mark. When the adjusting handle g31 is rotated, the clamping block g20 will be moved away or closer by the adjusting nut g33 and the adjusting screw g32, and the mark connected to the clamping block g20 will move at the same time. By providing the scale g17 and the observation window g18 on the outer frame g10, the changes in the mark can be intuitively observed inward, thereby providing guidance for the user.

Referring to FIG. 63 and FIG. 64, in some embodiments, the adjusting handle g31 includes an outer handle g311 and a protection block g312 which are coaxially arranged. An end face of the outer handle g311 in contact with the protection block g312 is provided with several first slopes g341 with circumferentially varying heights and a first step g343 connecting the several slopes. An end face of the protection block g312 in contact with the outer handle g311 is provided with a second slope g342 and a second step g344 corresponding to the outer handle g311. Assuming the first direction is a locking direction and a second direction is a loosening direction, the outer handle g311 is rotated along the first direction, and the outer handle g311 can push the second slope g342 of the protection block g312 through a friction force of the first slope g341, thereby driving the protection block g312 to rotate, and driving the adjusting screw g32 or the adjusting nut g33 to rotate, and at this time, the clamping block g20 moves inward. When the clamping block g20 locks the frame, the clamping block g20 cannot move inward, and the adjusting screw g32 and the adjusting nut g33 cannot move relative to each other, that is, the protection block g312 cannot rotate. At this time, the first slope g341 cannot drive the second slope g342 through the friction force. If the outer handle g311 continues to be rotated along the first direction with a force, sliding will occur between the outer handle g311 and the protection block g312, thereby achieving over-force protection. When the outer handle g311 is rotated along the second direction, the outer handle g311 directly acts on the second step g344 through the first step g343, thereby driving the protection block g312 to rotate and completing the unlocking.

Referring to FIG. 63 and FIG. 64, in some embodiments, one of the first slope g341 and the second slope g342 is provided with a positioning bead g345, and the other is provided with a positioning groove g346; or both the first slope g341 and the second slope g342 are provided with positioning beads g345 and positioning grooves g346 which are in one-to-one correspondence with those on the other slope. On one hand, the positioning bead g345 and the positioning groove g346 can generate a greater interaction force when the first slope g341 and the second slope g342 do not slide. On the other hand, when the first slope g341 and the second slope g342 slide, the positioning bead g345 and the positioning groove g346 can eliminate the sliding friction between the first slope g341 and the second slope g342, and prevent sliding wear between the first slope g341 and the second slope g342.

Referring to FIG. 55, in some embodiments, the outer frame g10 is provided with a guide groove g16, and part or all of the clamping block g20 is located in the guide groove g16. The guide groove g16 is configured to guide the clamping block g20 to slide and prevent the clamping block g20 from rotating. The guide groove g16 can also guide the clamping block g20 to make its sliding on the outer frame g10 smoother. In some embodiments, the outer frame g10 is composed of a plurality of interconnected frame units g11, and in this case, the guide groove g16 can be provided on the frame unit g11.

Referring to FIG. 55, in some embodiments, the clamping block g20 includes a pressing seat g21 and a replacement block g22; the pressing seat g21 is connected to the adjusting and locking mechanism g30 and is movably disposed on an inner side of the outer frame g10; the replacement block g22 is detachably connected to the clamping block g20. By adopting a modular design for the clamping block g20, users can replace the replacement block g22 in contact with the outer frame g10 by themselves, thereby improving the interchangeability and service life of the equipment.

Referring to FIG. 53 and FIG. 55, in some embodiments, there are at least two replacement blocks g22, and at least one of the shape or size of the replacement blocks g22 is different. Due to different user usage scenarios, the column fixing member g100 may be fixed on outer frame g10 with different cross-sectional shapes. Therefore, by equipping a plurality of replacement blocks g22 with different shapes, the user can choose a replacement block g22 with high adaptability according to his or her own scenario. Exemplarily, the replacement block g22 may be L-shaped, arc-shaped, angular, etc.

Referring to FIG. 51 and FIG. 52, in some embodiments, the outer frame g10 is provided with a first coupling seat 11. Optionally, the first coupling seat is detachably mounted to outer frame g10. In an embodiment, the first coupling seat 11 is adapted to be configured with a fitness device, a massage device, or other column fixing members to meet the installation requirements in more application scenarios.

Some embodiments provide a first type fixing member, which is mainly aimed at the installation and use of a conveniently detachable fitness device or massage device. Since there is no unified industry standard for the frames used to fix the fitness device in the current fitness device industry, each manufacturer's frame crossbars or other columns have no fixed standards for the length and width of the cross-section, which may result in the fitness device or massage device being unable to be installed on the frame for use. Some embodiments provide a first type fixing member, specifically a column fixing member, which can be adapted to frames of different sizes and models to facilitate the installation and use of the fitness device.

Referring to FIGS. 65-67, the column fixing member h100 of embodiments of the present disclosure includes a first main body h11, a second main body h12, and a cushion block h21. The first main body h11 and the second main body h12 are fastened together, and an outer through hole h13 is opened on a contact surface between the first main body h11 and the second main body h12. The outer through hole h13 is opened on the first main body h11 or on the second main body h12, or partially opened on the first main body h11 and partially opened on the second main body h12, and the outer through hole h13 is configured to clamp a crossbar or other columns. The cushion block h21 is located between the first main body h11 and the second main body h12, and part or all of the cushion block h21 is located in the outer through hole h13.

In the column fixing member h100 of the embodiment of the present disclosure, the fastening connection between the first main body h11 and the second main body h12 can clamp the crossbar or other column of the frame in the outer through hole h13. At the same time, a clamping force between the first main body h11, the second main body h12, and the crossbar or other column can be further enhanced. The cushion block h21 can fill the gap between crossbars or other columns with different diameters in the outer through hole h13, and provide deformation elastic force to assist the outer through hole h13 to clamp the crossbar or other column, thereby making the first main body h11 and the second main body h12 fastened separately, so that the column fixing member h100 can better adapt to brackets of crossbars or other columns of different diameters.

Specifically, the first main body h11 and the second main body h12 can be made of metal material, and the first main body h11 and the second main body h12 can be relatively fastened and connected in a snap-fitted manner. An outer through hole h13 can be opened on one side of the contact surface where the first main body h11 and the second main body h12 are relatively snap-fitted. The diameter shape of the outer through hole h13 can be circular, elliptical, rectangular, etc., and can be adapted to the shape of the crossbar or other columns, and the present disclosure does not limit this.

The outer through hole h13 can be understood as through grooves opened correspondingly on relatively snap-fitted sides of the first main body h11 and the second main body h12, so that when the first main body h11 and the second main body h12 are snap-fitted, a through outer through hole h13 can be formed between the first main body h11 and the second main body h12, which can be configured to clamp the crossbar or other columns.

Of course, in some other embodiments, the outer through hole h13 can also be formed separately on the first main body h11 or the second main body h12. Thus, the side of the outer through hole h13 is connected to an outer side of the first main body h11 or the second main body h12, so that the crossbar or other column can be installed into the outer through hole h13 from the side and pressed by another main body. When the first main body h11 and the second main body h12 are snap-fitted, the crossbar or other column can be clamped in the outer through hole h13. The present disclosure does not limit the specific opening position of the outer through hole h13.

The cushion block h21 can be made of materials such as plastic or rubber. The cushion block h21 can be located between the first main body h11 and the second main body h12. The cushion block h21 is mainly configured to provide deformation elasticity and enhance the friction force between the first main body h11, the second main body h12 and the crossbar or other columns after being clamped, thereby improving the clamping force on the crossbar or other columns, and preventing the column fixing member h100 from loosening when installing the fitness device for fitness, which would affect the fitness experience.

Preferably, the cushion block h21 can be provided on an inner wall of the outer through hole h13, and can completely cover the inner wall of the outer through hole h13, or can partially cover the inner wall of the outer through hole h13. Thus, after the first main body h11 and the second main body h12 are clamped, they can clamp the crossbar or other columns more tightly through the cushion block h21. The present disclosure does not limit the specific setting position of the cushion block h21.

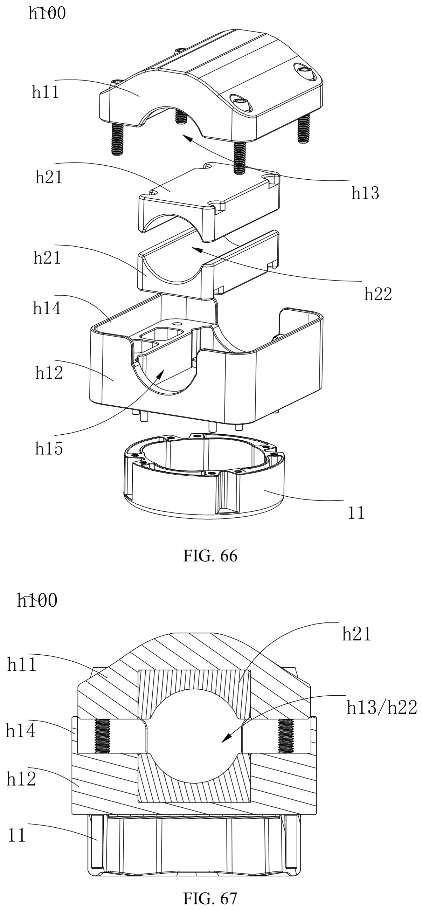

Referring to FIG. 66 and FIG. 67, in some embodiments, one of the first main body h11 and the second main body h12 is provided with an enclosure h14, and the outer contour of the other is consistent with the inner contour of the enclosure h14.

Thus, the enclosure h14 can provide a channel to guide the first main body h11 and the second main body h12 to be snap-fitted. When the first main body h11 and the second main body h12 are snap-fitted, the enclosure h14 can ensure that the first main body h11 and the second main body h12 are accurately coupled, avoiding misalignment during buckling. At the same time, the enclosure h14 can cover the gap between the first main body h11 and the second main body h12, making the state of the first main body h11 and the second main body h12 after being snap-fitted more complete, improving the sealing performance, preventing dust from falling into the gap, and enhancing the user experience.

Specifically, the enclosure h14 can be in a plate-like or sheet-like structure, extending and protruding from an outer edge of the first main body h11 or the second main body h12 in opposite directions, and an assembly space is enclosed inside the enclosure h14. The inner contour of the enclosure h14 is at least partially adapted to the outer contour of the main body without the enclosure h14.

That is, when the first main body h11 is formed with the enclosure h14, the second main body h12 can be mounted into the assembly space, and the outer wall of the second main body h12 fits in contact with an inner wall of the enclosure h14. Furthermore, the second main body h12 and the first main body h11 can be precisely aligned when being snap-fitted, facilitating the snap-fit connection between the second main body h12 and the first main body h11.

Furthermore, when the diameter of the crossbar or other column is larger than the diameter of the outer through hole h13, after the first main body h11 and the second main body h12 are snap-fitted, there will be a gap between contact surfaces of the first main body h11 and the second main body h12. The arrangement of the enclosure h14 can cover the gap between the first main body h11 and the second main body h12, improve the integrity after assembly, avoid or to a certain extent avoid dust from entering, and improve the user experience.

Of course, in some embodiments, the enclosure h14 can also be provided at any position such as a corner or the outer edge of the first main body h11 or the second main body h12, as long as the enclosure h14 can limit the accurate alignment of the first main body h11 and the second main body h12 when they are snap-fitted. The present disclosure does not limit the specific formation position of the enclosure h14.

In some embodiments, the first main body h11 and the second main body h12 are bolted together. Thus, the connection and disassembly between the first main body h11 and the second main body h12 are convenient and fast, and the connection is more stable.

Specifically, a through hole may be opened on the first main body h11, and a screw hole may be opened on the second main body h12 at a position corresponding to the through hole. After the first main body h11 and the second main body h12 are snap-fitted, a screw is passed through the through hole and connected with the screw hole to fasten the first main body h11 and the second main body h12 together. The bolt connection method makes the installation and disassembly of the first main body h11 and the second main body h12 more convenient, and the stability is also better. Of course, in some other embodiments, the first main body h11 and the second main body h12 can also be connected by means of snaps, straps, etc., and the present disclosure does not limit this.

Referring to FIG. 65 and FIG. 66, in some embodiments, the bolt connection is located at four corners of the first main body h11 and/or the second main body h12. Thus, the connection between the first main body h11 and the second main body h12 is more stable and firm. At the same time, being located at the four corners will not affect the clamping connection between the outer through hole h13 and the crossbar or other columns.

Of course, in some other embodiments, the bolts may also be positioned at diagonal corners or opposite sides, and the present disclosure does not limit this.

Referring to FIG. 66 and FIG. 67, in some embodiments, the first main body h11 and/or the second main body h12 are provided with a mounting groove h15, and the cushion block h21 is located in the mounting groove h15.

Thus, the arrangement of the mounting groove h15 can limit the position of the cushion block h21 on the first main body h11 and the second main body h12, so that the cushion block h21 can be stably mounted between the main body and the crossbar or other column, avoiding the cushion block h21 from falling off when the column fixing member h100 moves, which would affect the next installation and use. The arrangement of the mounting groove h15 can increase the volume of the cushion block h21, so that the cushion block h21 can undergo more deformation to adapt to crossbars or other columns of more sizes.

Specifically, the mounting groove h15 can be formed on a side of the contact surface opposite to the first main body h11 and/or the second main body h12, and the shape of the mounting groove h15 is adapted to the shape of the cushion block h21, that is, the cushion block h21 can be tightly mounted in the mounting groove h15 to prevent the cushion block h21 from falling off when the first main body h11 and the second main body h12 are separated.

In some embodiments, the cushion block h21 is made of polymer materials such as rubber or resin. Thus, the friction force between the crossbar or other columns and the cushion block h21 will be greater, and at the same time, it can effectively avoid rigid contact between the two and scratching the surface of the crossbar or other columns.

Referring to FIGS. 65-67, in some embodiments, the cushion block h21 is provided with an inner through hole h22, and the diameter of the inner through hole h22 is smaller than the diameter of the outer through hole h13. Thus, the cushion block h21 can squeeze the crossbar or other columns to increase the friction force between the two, and prevent the column fixing member h100 from loosening when the fitness device is installed for fitness, thereby preventing the fitness experience from being affected.

Specifically, after the cushion block h21 is assembled to the mounting groove h15, the position of the inner through hole h22 corresponds to the position of the outer through hole h13, and after the first main body h11 and the second main body h12 are snap-fitted, an diameter of the inner through hole h22 is smaller than an diameter of the outer through hole h13. That is to say, when the first main body h11 and the second main body h12 are snap-fitted, the cushion block h21 first contacts the crossbar or other column. During the fastening process, the cushion block h21 is squeezed, and the inner through hole h22 deforms while wrapping the crossbar or other column, increasing the elastic deformation force while also increasing the contact area, so that the friction force between the cushion block h21 and the crossbar or other column is greater, and thereby better preventing the column fixing member h100 from rotating or shaking relative to the crossbar or other column.

Referring to FIGS. 65-67, in some embodiments, there are two cushion blocks h21, which are respectively located in the mounting groove h15 of the first main body h11 and the mounting groove h15 of the second main body h12. Thus, the two cushion blocks h21 can better wrap the crossbar or other column. The cushion blocks h21 squeeze the crossbar or other column, and the inner through hole h22 deforms while wrapping the crossbar or other column, increasing the elastic deformation force while also increasing the contact area, thereby improving the friction force between the cushion block h21 and the crossbar or other column.

In some embodiments, the cushion block h21 is slidably mounted in the mounting groove h15, and a sliding direction is the same as a fastening direction. Thus, the mounting groove h15 can provide guidance for the deformation of the cushion block h21, so that a deformation direction and a deformation elastic force direction of the cushion block are the same as the fastening direction, enabling the cushion block to better undergo compressive deformation and provide a more stable deformation force. At the same time, when the cushion block h21 is worn and needs to be replaced or when the cushion block h21 of different thickness needs to be replaced, the cushion block h21 can be replaced more conveniently.

Referring to FIGS. 65-67, in some embodiments, the column fixing member h100 further includes a first coupling seat 11, and the first coupling seat 11 is provided on the first main body h11 or the second main body h12.

Thus, the fitness device or massage device can be installed on the column fixing member h100 through the first coupling seat 11. By installing the column fixing member h100 to the crossbar or other columns of the frame, the function of fitness at any position can be realized more conveniently, improving the user's fitness experience.

Specifically, the first coupling seat 11 can be mounted on a side of the first main body h11 or the second main body h12 opposite to the contact surface, so that the installation of the fitness device will not affect the snap-fit of the column fixing member h100. The first coupling seat 11 can be mounted on the first main body h11 or the second main body h12 by means of bolts, clamping, etc. The present disclosure does not limit the mounting method between the first coupling seat 11 and the main body.

At the same time, the first coupling seat 11 can be configured to connect other fixing members, such as a second type fixing member or a third type fixing member, and based on this, extend the fixing set to meet the user's flexible installation needs.

In summary, the column fixing member h100 of embodiments of the present disclosure can be mounted on crossbars or other columns of different diameters, so that the user can have more choices in fitness methods, thereby improving the user's fitness experience.

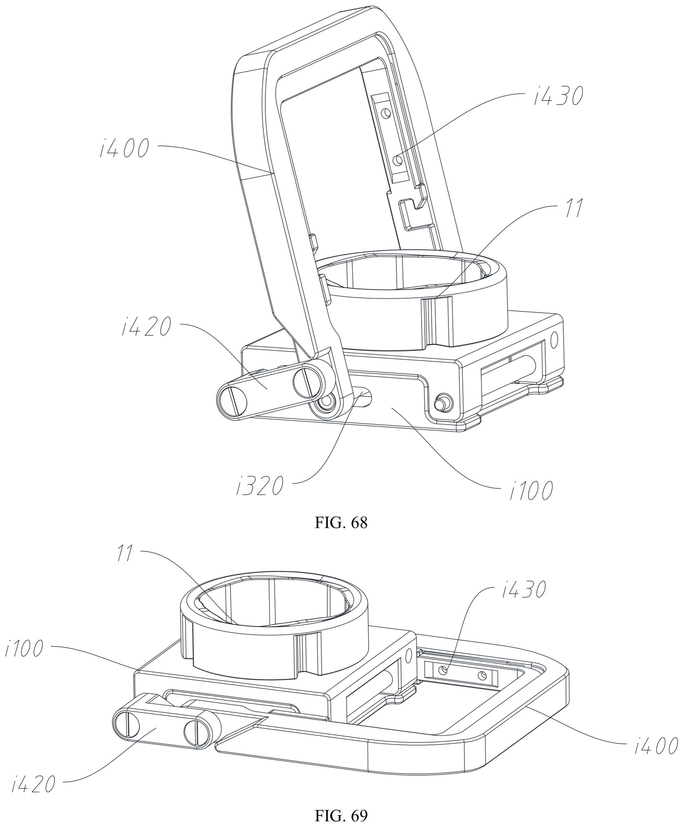

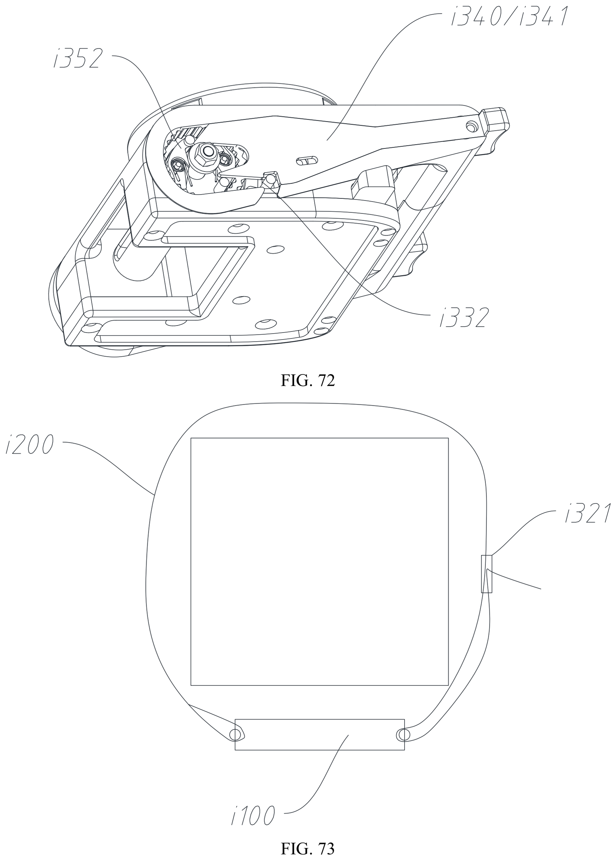

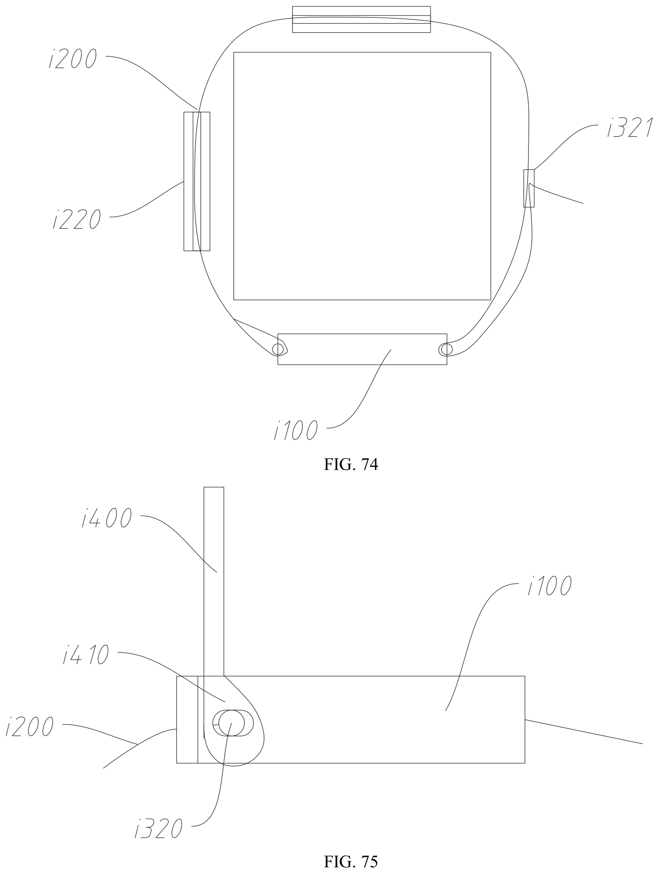

An embodiment of the present disclosure provides a first type fixing member, specifically a flexible fixing member, as shown in FIGS. 68-77, including a connecting seat i100, the connecting seat i100 being configured to install the fitness device or massage device, or a connecting seat i100 being provided with a first coupling seat 11 for installing the fitness device or massage device or other fixing members; and a cordage or cable i200 with opposite ends wrapped around the external environment and connected to the connecting seat i100. The fixation is achieved by wrapping the cordage or cable i200 around the external environment, such as a gantry, a column, a tree trunk, or other regular or irregular objects, and tightening the cordage or cable i200.

The cordage or cable i200 needs to be tightened or pre-tightened to complete fixation to the external environment. The tightening or pre-tightening method can be configured to tighten or pre-tighten the cordage or cable i200 using a tightening apparatus i300, or to tighten or pre-tighten the cordage or cable i200 via a length adjustment apparatus i210, or to make the cordage or cable i200 have a certain elasticity so that a rebound force generated after the cordage or cable i200 is extended completes the tightening or pre-tightening. Of course, the above solutions can also be combined with each other. For example, both a tightening apparatus i300 and a length adjustment apparatus i210 are provided. When tightening, the length adjustment apparatus i210 is first used to tighten the cordage or cable i200, and then the tightening apparatus i300 is used to generate a large pre-tightening force to complete the tightening. For another example, both a length adjustment apparatus i210 is provided and the cordage or cable i200 has elasticity, and the elasticity is used to perform pre-tightening, and then the length adjustment apparatus i210 is used to tighten. For yet another example, a tightening apparatus i300 is provided, the cordage or cable i200 is elastic, and a length adjustment apparatus i210 is provided; the length adjustment apparatus i210 and the elastic cordage or cable i200 are used for pre-tightening, and then the cordage or cable i200 is tightened by the tightening apparatus i300.

In some embodiments, there are a plurality of cordages or cables i200. Some of the cordages or cables i200 are tightened to fix the connecting seat i100, and some of the cordages or cables i200 are configured to wrap around the external environment to provide protection for the tightened and fixed cordages or cables i200, preventing the connecting seat i100 from slipping due to fixation failure.

In some embodiments, the cordage or cable i200 is split in the middle and connected to each other via a quick-connect connector. Through the middle quick-connect connector, during installation, the user can separate the cordage or cable i200 at the quick-connect connector, and after passing the cordage or cable i200 around the external environment, couple the cordage or cable i200 via the quick-connect connector, thereby improving the convenience of installation and the versatility for the installation environment. In some embodiments, one end of the cordage or cable i200 is quickly connected to the connecting seat i100. For example, as shown in FIG. 68, FIG. 69, FIG. 72, and FIG. 73, the connecting seat i100 is provided with a columnar structure for the cordage or cable i200 to pass through or wrap around, so that the cordage or cable i200 can pass through the structure after being wrapped around to complete the quick connection with the connecting seat i100. In some embodiments, one end of the cordage or cable i200 can also be connected to the connecting seat i100 via a quick-connect connector, which can also improve the convenience of installation and the versatility for the installation environment.

In some embodiments, the quick-connect connector includes a first coupling joint and a second coupling joint. The first coupling joint and the second coupling joint are respectively connected to the two sections of the cordage or cable i200 at the split position, or one of the first coupling joint and the second coupling joint is connected to an end portion of the cordage or cable i200, and the other is provided on the connecting seat i100. Through the quick coupling and separation of the first coupling joint and the second coupling joint, the cordage or cable i200 is quickly connected or disconnected, or the cordage or cable i200 is quickly connected or disconnected with the connecting seat i100. Exemplarily, the first coupling joint and the second coupling joint may be male-female coupling buckles, or corresponding connectors and joints, or insert buckles or side-release buckles, or hook buckles or lobster buckles and corresponding connecting rings, or any existing quick-connect coupling joints in the field.

In some embodiments, the fixing set further includes an extension cordage or an extension cable, and opposite ends of the extension cordage or extension cable are respectively connected to a first coupling joint and a second coupling joint. That is, when the cordage or cable i200 is not long enough, the extension cordage or the extension cable can be connected to one end of the cordage or cable. At this time, a first connector or a second connector at one end of the extension cordage or extension cable is connected to the second connector or the first connector at one end of the cordage or cable i200; an opposite end is connected to the cordage or cable i200 or to the connecting seat i100 according to the applicable situation.

In some embodiments, the tightening apparatus i300 includes a reel i310. One end of the cordage or cable i200 is wound around and fixed on the reel i310, and the reel i310 rotates to wind up and tighten the cordage or cable i200. At this time, the reel i310 can be rotated to increase or shorten the part of the cordage or cable i200 wound around the reel i310, thereby tightening or loosening the cordage or cable i200.

In some embodiments, the tightening apparatus i300 includes a movably disposed tightening member i320, and one end of the cordage or cable i200 is connected to the tightening member i320, the tightening member i320 movably tightens the cordage or cable i200. The shape of the tightening member i320 is not limited. As shown in FIG. 68 and FIG. 73-77, the tightening member i320 can be a shaft or a block structure. The connection between the cordage or cable i200 and the tightening member i320 can be a fixed connection, a winding or surrounding connection, a hanging connection, or any other existing connection methods with the cordage or cable i200.

Furthermore, the fixing set also includes a handle i400. The handle i400 can drive the reel i310 to rotate, increase the torque, amplify the force applied by the user, and thus achieve a better tightening effect. In some embodiments, the handle i400 is connected to the reel i310 to drive the reel i310 to rotate. In some embodiments, the handle i400 is connected to the tightening member i320 to drive the tightening member i320 to move.

In some embodiments, the reel i310 is connected to the connecting seat i100 via a first one-way transmission mechanism i330. The first one-way transmission mechanism i330 allows rotation in a tightening direction and locks rotation in a reverse direction. Adding the first one-way transmission mechanism i330 can make a tightening shaft directly locked after rotation. At this time, the force of rotating the tightening shaft is removed, and the tightening shaft can also generate a tightening force.

Furthermore, the fixing set also includes a clutch apparatus i340. The clutch apparatus i340 is configured to release the lock of the first one-way transmission mechanism i330. That is, when the user needs to remove the fixing apparatus, the one-way lock can be released through the clutch apparatus i340 to complete the unlocking.

Furthermore, the fixing set also includes a second one-way transmission mechanism i350. The second one-way transmission mechanism i350 allows the handle i400 to drive the reel i310 to rotate in one direction, but cannot drive the reel i310 to rotate in a reverse direction.

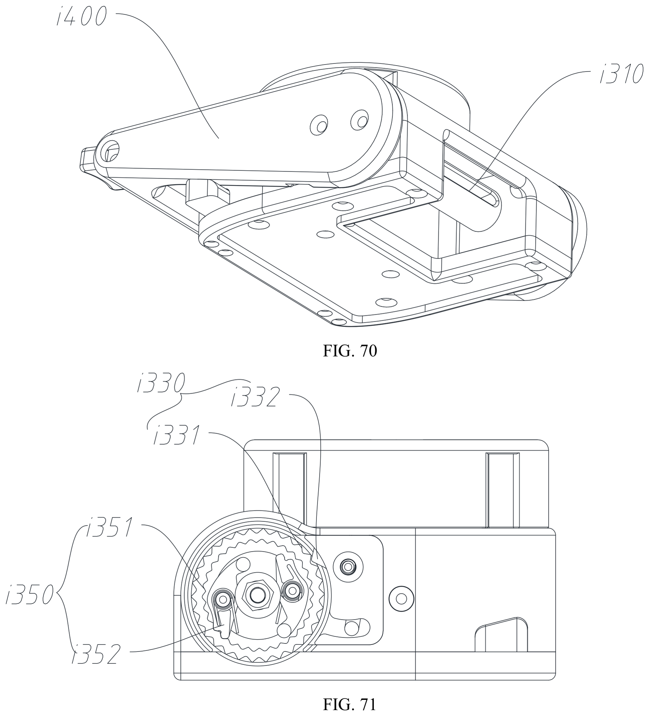

For example, as shown in FIGS. 70-72, the cordage or cable i200 is connected to the reel i310, an end portion of the reel i310 is connected to the connecting seat i100 via a first one-way transmission mechanism i330, and the handle i400 is in transmission connection with the first one-way transmission mechanism i330. Rotating the handle i400 can drive the reel i310 to rotate via the first one-way transmission mechanism i330. When the handle i400 is released, the reel i310 can remain non-rotating, thereby providing a tightening force. In an embodiment, the first transmission mechanism is an outer ratchet i331 and an outer pawl; the handle i400 is in transmission connection with the reel i310 via a second transmission mechanism. That is, the handle i400 is rotated outward to drive the reel i310 to rotate, and then the cordage or cable is wound. When the handle i400 is rotated in a reverse direction, the second transmission mechanism is separated, and the handle i400 can be reset, and then is rotated forward again, further driving the reel i310 to rotate. In an embodiment, the second transmission mechanism is an inner ratchet i351 and an inner pawl i352; the clutch apparatus i340 includes a protrusion and an unlocking bar i341 respectively connected to the inner pawl i352 and the outer pawl. By pressing the unlocking bar i341 to act on the protrusion, the inner pawl i352 and the outer pawl are driven to rotate, making the first transmission mechanism and the second transmission mechanism ineffective.

In some embodiments, the handle i400 includes a cam wrench i410. The cam wrench i410 is rotatably connected to the tightening member i320. As the cam wrench i410 rotates, the minimum distance between the tightening member i320 and the connecting seat i100 gradually increases or decreases. The tightening member i320 is allowed to slide in the connecting seat i100. When the cam wrench i410 rotates until its protruding portion passes through the tightening member i320, the tightening member i320 is pushed to a limit position in the connecting seat i100, thereby providing a tightening force.

In some embodiments, the handle i400 forms a four-bar linkage with the connecting member and the connecting seat i100 via a link i420. The tightening member i320 is driven to move by moving the handle i400. Furthermore, when the handle i400 rotates to be close to the connecting seat i100, the four-bar linkage composed of the connecting seat i100, the handle i400, the tightening member i320, and the link i420 passes over a dead point, achieving self-locking to prevent disengagement.

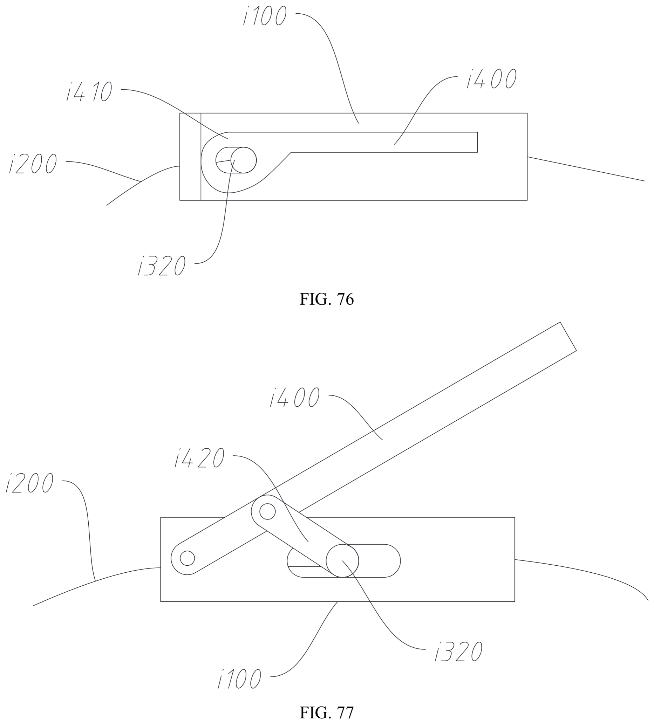

For example, as shown in FIG. 68 and FIG. 69, an end portion of the handle i400 is hinged to the tightening member i320, and the middle is hinged to the link i420, and the link i420 is hinged to the connecting seat i100. At this time, when the handle i400 is rotated until a hinge shaft of the connecting seat i100 is located on a line connecting hinge points of the link i420, the link i420 mechanism is at a dead point. For another example, as shown in FIG. 77, an end portion of the handle i400 is hinged to the connecting seat i100, and the middle is sequentially hinged to the tightening member i320 via the link i420, and the tightening member i320 moves on the connecting seat i100. At this time, when the handle i400 is rotated until a hinge point between the handle i400 and the link i420 is located on a line connecting a rotation center of the handle i400 and a hinge point between the link i420 and the tightening member i320, the link i420 mechanism is at a dead point.

In some embodiments, by providing a handle locking mechanism i430, the rotation of the handle i400 can be locked or unlocked, and then the tightening member i320 or the reel i310 can be locked via the handle i400. For example, as shown in FIG. 68 and FIG. 69, the handle locking mechanism i430 locks the handle i400 when the handle i400 is rotated to be flush with the connecting seat i100. When unlocking, press the handle locking mechanism i430, and a hook at the bottom will disengage from the handle i400. At this time, the handle i400 can be rotated to unlock the fixing apparatus.

In some embodiments, there are a plurality of cordages or cables i200. The cordage or cable i200 is quickly connected to or disassembled from the connecting seat i100. Lengths of the plurality of cordages or cables i200 are different, and the user can select cordages or cables i200 of corresponding lengths according to actual usage conditions.

In some embodiments, the cordage or cable i200 is provided with an adjusting buckle for adjusting the length, which can specifically be a barrel buckle, a ladder buckle, or any other buckle that can adjust the length. The adjusting buckle can tighten the cordage or cable i200, and can also make the cordage or cable i200 adapt to more installation environments.

In some embodiments, as shown in FIG. 63, a fixing block i220 can be passed through or fixedly disposed on the cordage or cable i200. When the cordage or cable i200 is tensioned, the fixing block i220 can also provide more stable pressure. The position of the passed fixing block i220 on the cordage or cable i200 can be adjusted to be suitable for different installation environments. By adjusting the position on the cordage or cable i200, the fixing block i220 is located on a plane of the installation environment for fixation. A plurality of fixing blocks i220 can be provided to adapt to a plurality of planes of the installation environment. Users can also select the passed fixing block i220 according to their needs. Furthermore, the fixing block i220 is provided with a slot or a hole. Users can insert a retaining pin into the slot or the hole as needed to act on the external environment, further preventing the fixing apparatus from accidentally slipping.

In some embodiments, a magnetic block or an anti-slip block can be passed through or fixedly disposed on the cordage or cable i200, which can increase the force between the cordage or cable i200 and the external environment. The magnetic block also has an adsorption effect, which can prevent the fixing apparatus from slipping from the external environment when not tensioned. Users can also select the passed magnetic block and/or power-assisting block according to their needs. In some embodiments, a magnet block or an anti-slip block can also be provided on an inner side of the connecting seat i100, and the anti-slip block is provided on a surface, and the magnetic blocks are provided on a surface or inside an inner side of the connecting seat i100, which can also increase the force between the connecting seat i100 and the external environment, ensuring more stable connection when tensioned and preventing the fixing apparatus from accidentally slipping when not tensioned.

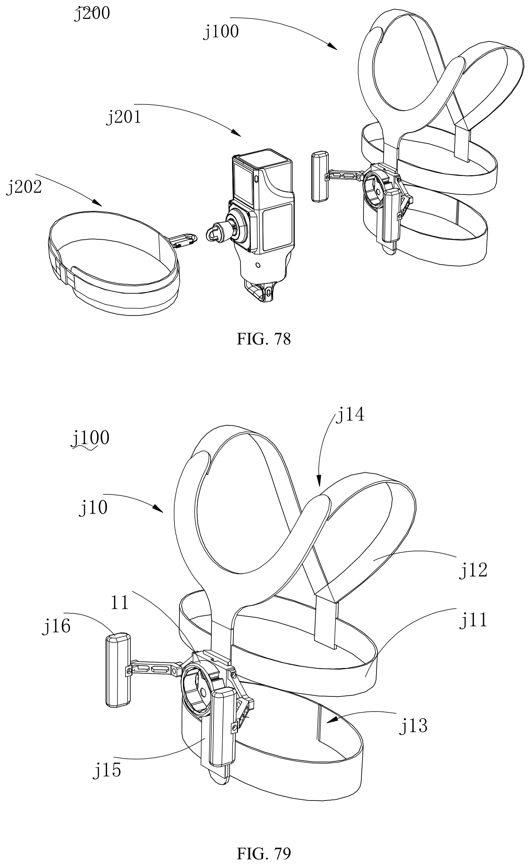

In some embodiments, referring to FIG. 78, a first type fixing member is provided, specifically a wearable fixing member j100, and the fitness device j201 is installed on the wearable fixing member j100. Thus, an assistant can wear the wearable fixing member j100 on the body, then fix the fitness device j201 on the wearable fixing member j100. A trainee can perform resistance training by pulling the fitness device j201. When the trainee moves, the assistant can also move with the trainee to realize diversified training in different scenarios.

In some embodiments, the training method further includes a training belt j202, which is configured for the trainee to wear and fix. That is, it can be understood that the assistant puts on the wearable fixing member j100 and fixes the fitness device j201 on the wearable fixing member j100; the trainee puts on the training belt j202 and then connects the training belt j202 to the fitness device j201, and then can perform diversified training.

In some embodiments, the fitness device j201 includes an elastic band, an electric resistance winding apparatus, or a magnetic resistance winding apparatus. The elastic band, the electric resistance winding apparatus, or the magnetic resistance winding apparatus is provided with a second coupling seat.

Referring to FIG. 78 and FIG. 79, the wearable fixing member j100 of an embodiment of the present disclosure includes a body fixing belt j10 and a first coupling seat 11. The body fixing belt j10 is configured for a person to wear and fix, the first coupling seat 11 is mounted on the body fixing belt j10, and the first coupling seat 11 is configured to connect the fitness device j201. Of course, the first coupling seat 11 can also fix other fixing members and be combined with other fixing members to form a fixing set, and fix the fitness device to facilitate wearing and assist training.

In the wearable fixing member j100 of an embodiment of the present disclosure, the assistant can fix the fitness device j201 on the body through the combined connection of the body fixing belt j10 and the first coupling seat 11. Then, when the trainee is training, the assistant can carry the fitness device j201 and move around to cooperate with the trainee's training in real time, making the use scenarios and training methods of the fitness device j201 more diversified.

Specifically, the body fixing belt j10 may be a conventional belt structure that can be worn on the body. Of course, in some other embodiments, the body fixing belt j10 may also include a vest-like structure. The present disclosure does not limit the specific type and structure of the body fixing belt j10.

The first coupling seat 11 can be connected to an outer side of the body fixing belt j10. Since the first coupling seat 11 is configured to connect to the fitness device j201, the first coupling seat 11 can be adaptively connected to the fitness device j201 that needs to be fixed. The first coupling seat 11 and the body fixing belt j10 can be configured as a detachable connection, so that when fixing fitness devices j201 with different connection structures, it is convenient to replace the first coupling seat 11 that is adapted to the fitness device j201.

Referring to FIG. 79, in some embodiments, the wearable fixing member j100 further includes a sliding seat j15, the sliding seat j15 is fixedly disposed on the body fixing belt j10, and the first coupling seat 11 is slidably mounted on the sliding seat j15.

Thus, by adjusting the position of the first coupling seat 11 on the sliding seat j15, a more comfortable angle is created between the fitness device j201 and the trainee, facilitating coordinated training between the trainee and the assistant.

Specifically, the sliding seat j15 can be in a strip-shaped structure and be vertically mounted on the outer side of the body fixing belt j10. The first coupling seat 11 and the sliding seat j15 can be slidably connected to each other. When the first coupling seat 11 is adjusted to a suitable position, the first coupling seat 11 and the sliding seat j15 can be relatively locked. Of course, in some other embodiments, the sliding seat j15 can also be arranged horizontally, obliquely or even universally, and the first coupling seat 11 can slide at any angle relative to the sliding seat j15, which is not specifically limited in the present disclosure.

Referring to FIG. 79, in some embodiments, the wearable fixing member j100 further includes handles j16, and the handles j16 are located on both sides of the first coupling seat 11.

Specifically, there can be two handles j16, which are symmetrically installed on both sides of the first coupling seat 11. Since the trainee will generate a large pulling force during training, if the assistant only pulls the fitness device j201 via the body fixing belt j10, there may be certain potential safety hazards. The arrangement of the handles j16 can improve the stability of the fitness device j201 and reduce potential safety hazards.

When the trainee is training, the assistant can hold the handles j16 and stabilize the fitness device j201 through the strength of the arms, which not only can improve the stability of the fitness device j201 and enhance the training effect, but also can avoid potential safety hazards that may occur during training and improve safety protection.

Referring to FIG. 79, in some embodiments, the body fixing belt j10 includes a waist belt j11, and the first coupling seat 11 is provided on the waist belt j11. The waist belt j11 can be worn around the human body at a position above the hips and below the shoulders. Since the core force-generating position of the human body is located in the waist and abdomen, the waist belt j11 can enable the assistant to exert force better, which is beneficial to the training effect.

In some embodiments, the body fixing belt j10 further includes a shoulder belt j12, a back belt and/or a hip belt connected to the waist belt j11. The shoulder belt j12 can be configured for the assistant's arms or head to pass through and be wrapped around the assistant's shoulders. The back belt can be wrapped around the assistant's back. The hip belt can be understood as partially passing through the hips or crotch and then wrapped around the assistant's hips.

Thus, the design of the waist belt j11, the shoulder belt j12, the back belt or the hip belt can make the body fixing belt j10 more stably fixed on the assistant, further improving the stability of the body fixing belt j10 when worn on the assistant.

Specifically, two ends of the shoulder belt j12 can be connected to the waist belt j11 respectively, and the two ends of the hip belt can be connected to the back belt respectively. When worn, the shoulder belt j12 can be stuck on the assistant's shoulders, and the hip belt can be stuck on the assistant's hips and crotch, so as to prevent the waist belt j11 or the back belt from being pulled down or upward when the assistant exerts force and affecting the training, and to avoid loosening and injury during training.

Referring to FIG. 79, in some embodiments, there are at least two waist belts j11, and front sides of the two waist belts j11 are connected to each other via a connecting belt; or the width of the waist belt j11 is greater than 10cm.

Thus, the waist belt j11 can be more stable when worn, avoiding the assistant being injured by a single waist belt j11 or a waist belt j11 that is too thin when exerting force, and can be worn more comfortably and safely. The two waist belts j11 can be wrapped around the assistant's chest and abdomen at intervals.

Referring to FIG. 79, in some embodiments, the body fixing belt j10 is provided with an adjusting structure j13, and the adjusting structure j13 is configured to adjust the length of the body fixing belt j10 and lock it; and/or the body fixing belt j10 is provided with a quick connection structure j14, and the quick connection structure j14 is configured to quickly disconnect or reconnect the body fixing belt j10 at the connection.

In order to adapt to assistants of different body shapes, the length of the body fixing belt j10 can be adjusted by the adjusting structure j13, and then the wearing position of the body fixing belt j10 on the assistant can be adjusted, making the assistant more comfortable to wear and facilitating the assistant to exert force. The quick connection structure j14 can facilitate the wearing of the body fixing belt j10.

Specifically, the adjusting structure j13 can be provided at any position of the shoulder belt j12, the waist belt j11, the back belt or the hip belt, and can adjust the length of the belt body. The adjusting structure j13 can be in various forms such as a belt buckle and Velcro, etc. The present disclosure does not limit the specific type and structure of the adjusting structure j13.

Correspondingly, the quick connection structure j14 can also be provided at any position of the shoulder belt j12, the waist belt j11, the back belt or the hip belt, and can enable the shoulder belt j12, the waist belt j11, the back belt or the hip belt to be quickly connected and disassembled. The quick connection structure j14 can be in various forms such as an inserting buckle and Velcro, etc. The present disclosure does not limit the specific type and structure of the quick connection structure j14.

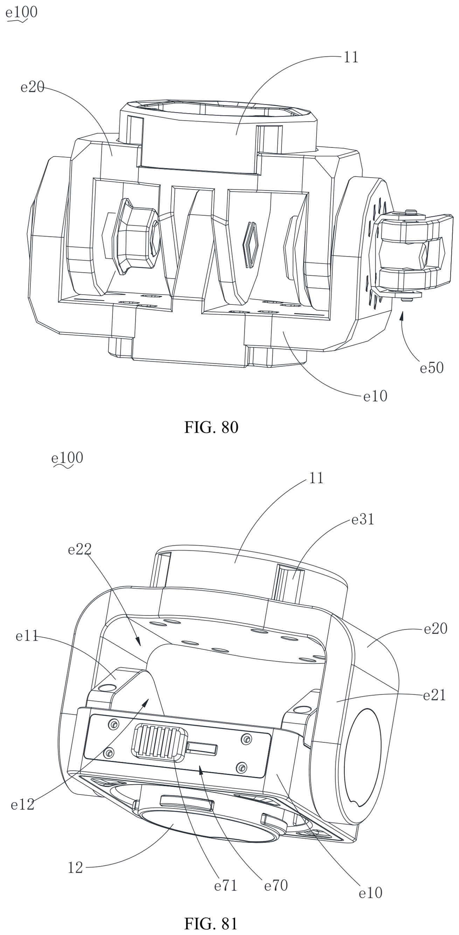

In some embodiments, the second type fixing member includes an angle changing fixing member or an angle adjusting fixing member, which are collectively referred to as a rotating fixing member e100 hereinafter. Referring to FIGS. 80-82, in an embodiment of the present disclosure, the rotating fixing member e100 includes a first seat e10, a second seat e20, and a first coupling seat 11. The first seat e10 is provided with a second coupling seat 12. The second seat e20 is rotatably connected to the first seat e10. The first coupling seat 11 is provided on the second seat e20 for quickly connecting or disconnecting with the fitness device, massage device, or other fixing members.

In the rotating fixing member e100 of an embodiment of the present disclosure, the rotating fixing member e100 as a whole can be fixed at a suitable position by the first seat e10, the second seat e20 can be rotatably connected to the first seat e10, and the first coupling seat 11 is provided on the second seat e20. Then, when the fitness device is installed on the first coupling seat 11, the angle can be adjusted by rotating the second seat e20 relative to the first seat e10, so as to meet the user's needs for different fitness postures during fitness and improve the user's fitness experience.

Specifically, the entire structure of the rotating fixing member e100 can be made of a rigid material to have better toughness, so that the fitness device can be more stable during installation and use. The first seat e10 can be in a circular or rectangular shape, and the first seat e10 is mainly configured for bearing and fixing. The second seat e20 is rotatably mounted on the first seat e10, and the first coupling seat 11 is fixedly mounted on the second seat e20. Preferably, the first coupling seat 11 can be mounted on a side of the second seat e20 opposite to the first seat e10. The fitness device is detachably installed on the first coupling seat 11.

That is to say, the second seat e20 can adjust an angle orientation relative to the first seat e10. When the second seat e20 rotates relative to the first seat e10, the first coupling seat 11 can rotate along with the rotation of the second seat e20, and then the fitness device installed on the first coupling seat 11 can also rotate along with the first coupling seat 11, so as to achieve the purpose of adjusting the angle orientation. Therefore, the user can better adjust the orientation of the fitness device according to different fitness postures during use.

At the same time, the user can also connect the rotating fixing member e100 in series with other fixing members to adjust the angle of the fixing set at a specific position. For example, two rotating fixing members e100 can be coupled at 90 degrees to each other. At this time, the unused first coupling seat 11 and second coupling seat 12 after coupling can rotate on a spherical surface. For another example, the rotating set can also be provided on a bottom plate fixing member, and then the fitness device is fixed on the bottom plate fixing member. At this time, the fitness device can rotate relative to the bottom plate fixing member to adapt to the user's fitness movements.

Referring to FIGS. 80-84, in some embodiments, first connecting ribs e11 are respectively provided on two sides of a coupling surface of the first seat e10 or the second seat e20, or a first connecting groove e12 is provided in the middle of a connecting surface of the first seat e10 or the second seat e20.

Rotating shaft holes e13 are provided on two sides of the first connecting rib e11 or the first connecting groove e12 for rotatably connecting the second seat e20 and the first seat e10.

Thus, the first seat e10 and the second seat e20 can be connected via the first connecting rib e11 or the first connecting groove e12. The first connecting rib e11 or the first connecting groove e12 can provide an avoidance space for the rotation of the first seat e10 and the second seat e20, so that the first seat e10 and the second seat e20 can have a larger rotation angle, increase the adjustable angle of the fitness device, and improve the user's fitness experience.

Specifically, the coupling surface of the first seat e10 can be understood as a surface of the first seat e10 facing the second seat e20, and the coupling surface of the second seat e20 can be understood as a surface of the second seat e20 facing the first seat e10. The first connecting rib e11 can be understood as a protrusion extending from two sides of one connecting surface to the other opposite connecting surface, and corresponding rotating shaft holes e13 are provided on the opposite surfaces of the two first connecting ribs e11. Similarly, the first connecting groove e12 can be understood as a groove extending from the connecting surface to the other connecting surface in an opposite direction, and corresponding rotating shaft holes e13 are oppositely provided on two sides of the first connecting groove e12.

In an embodiment, first connecting ribs e11 may be provided on the two sides of the coupling surface of the first seat e10, or a first connecting groove e12 may be provided on the coupling surface of the first seat e10. The second seat e20 can be mounted between the two first connecting ribs e11 or in the first connecting groove e12 through the cooperation of a rotating shaft and a rotating shaft hole e13, so that the first seat e10 and the second seat e20 can be rotatably connected.

In another embodiment, first connecting ribs e11 may be provided on the two sides of the coupling surface of the second seat e20, or a first connecting groove e12 may be provided on the coupling surface side of the second seat e20. The first seat e10 can be mounted in the two first connecting ribs e11 or the first connecting groove e12 through the cooperation of a rotating shaft and a rotating shaft hole e13, so that the first seat e10 and the second seat e20 can be rotatably connected.

Referring to FIGS. 80-84, in some embodiments, second connecting ribs e21 are respectively provided on two sides of the coupling surface of the second seat e20 or the first seat e10, or a second connecting groove e22 is provided in the middle of the coupling surface of the second seat e20 or the first seat e10.

Rotating shaft holes e13 are provided on the two sides of the second connecting rib e21 or the second connecting groove e22, which is configured to cooperate with the rotating shaft holes e13 of the first connecting rib e11 or the first connecting groove e12 to rotatably connect the second seat e20 and the first seat e10.

Thus, the first seat e10 can be connected through the first connecting rib e11 or the first connecting groove e12 and the second connecting rib e21 or the second connecting groove e22 on the second seat e20. Both the first seat e10 and the second seat e20 are provided with ribs or grooves, which can provide a larger avoidance space for the rotation of the first seat e10 and the second seat e20, so that the first seat e10 and the second seat e20 can have a larger rotation angle, increase the adjustable angle of the fitness device, and improve the user's fitness experience.

Specifically, the second connecting rib e21 has the same structure as the first connecting rib e11, and the second connecting groove e22 has the same structure as the first connecting groove e12. That is to say, when the first seat e10 is provided with the first connecting rib e11 or the first connecting groove e12, the second seat e20 may be provided with the second connecting rib e21 or the second connecting groove e22 at the same time. The two sides of the second connecting rib e21 and the second connecting groove e22 are oppositely provided with a rotating shaft hole e13 or a rotating shaft that match the rotating shaft hole e13 on the first connecting rib e11 or the first connecting groove e12.

It can be understood that the two sides of the coupling surface of the first seat e10 may be provided with first connecting ribs e11 or the coupling surface may be provided with a first connecting groove e12. The two sides of the coupling surface of the second seat e20 may be provided with second connecting ribs e21 or the coupling surface may be provided with a second connecting groove e22. The first seat e10 can be rotatably connected through the cooperation between the first connecting rib e11 or the first connecting groove e12 and the second connecting rib e21 or the second connecting groove e22 on the second seat e20. Thus, there is a large space between the first seat e10 and the second seat e20 to avoid each other, so that the second seat e20 has a larger adjustment angle.

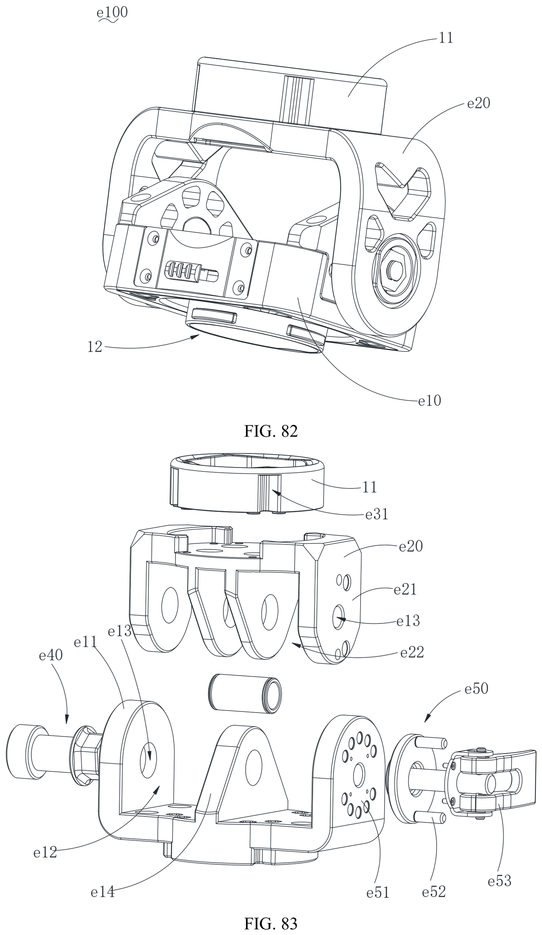

Referring to FIG. 80 and FIG. 83, in some embodiments, the first seat e10 and the second seat e20 are further rotatably connected in the middle via a revolute pair to enhance the connection stability between the first seat e10 and the second seat e20. Exemplarily, a reinforcing rib e14 is provided between the first seat e10 and the second seat e20, and a rotating shaft hole e13 of the reinforcing rib e14 is coaxial with a rotating shaft hole e13 of the first connecting rib e11 or the first connecting groove e12.

Thus, the reinforcing rib e14 can improve the stability of the rotational connection between the first seat e10 and the second seat e20.

Specifically, the reinforcing rib e14 may have the same structure as the first connecting rib e11 or the second connecting rib e21. The reinforcing rib e14 can be disposed between the two first connecting ribs e11 or second connecting ribs e21 of the first seat e10 or the second seat e20. A rotation center coaxial with the rotating shaft holes e13 on both sides is formed on the reinforcing rib e14. Therefore, after connection, the reinforcing rib e14 strengthens the connection stability between the first seat e10 and the second seat e20 without affecting the rotation of the two.

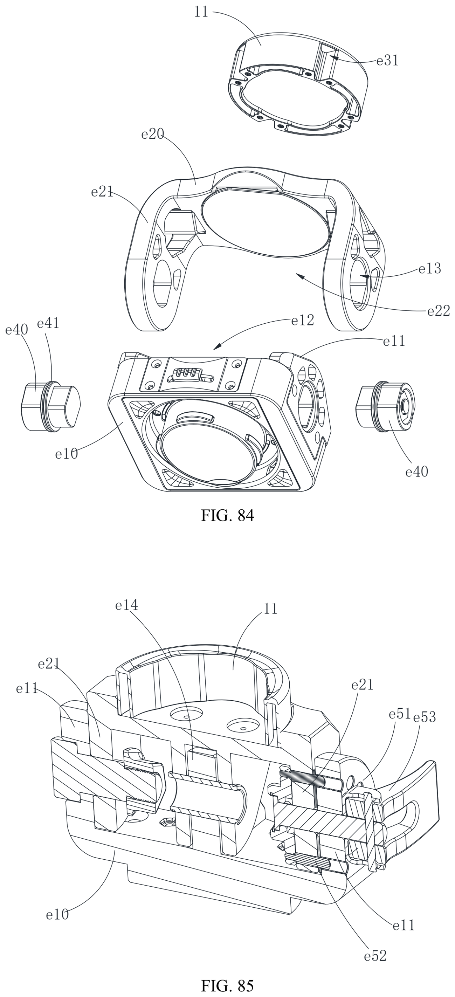

Referring to FIG. 82 and FIG. 84, in some embodiments, the first seat e10 and the second seat e20 are rotatably connected via a damping rotating shaft e40.

Thus, the first seat e10 and the second seat e20 are connected via the damping rotating shaft e40 to increase the rotational friction force between the two, preventing the two from rotating easily and affecting the stability of the fitness device during use.

Specifically, the damping rotating shaft e40 can be mounted in the rotating shaft hole e13 where the first seat e10 and the second seat e20 are rotationally matched. When the first seat e10 and the second seat e20 rotate, the damping rotating shaft e40 can provide a certain resistance, thereby preventing the two from rotating arbitrarily and affecting the use of the fitness device.

As shown in FIG. 84, in some embodiments, the damping rotating shaft e40 includes a damping sheet e41. The damping sheet e41 is fixedly connected to one of the second seat e20 and the first seat e10 in a rotation direction and is in frictional contact with the other; or
there are two damping sheets e41, which are respectively fixedly connected to the first seat e10 or the second seat e20 in a rotation direction, and the two damping sheets e41 are in frictional contact with each other.

Thus, the damping sheets e41 are configured to increase the rotational friction force between the first seat e10 and the second seat e20, preventing the two from rotating easily and affecting the stability of the fitness device during use.

Specifically, the damping sheet e41 can rotate synchronously with one of the first seat e10 and the second seat e20 and rub against the other to generate resistance, or the damping sheet e41 can be sleeved on a rotating shaft where the first seat e10 and the second seat e20 are rotatably connected and is located between the positions where the two are in rotational contact. The first seat e10 and the second seat e20 generate resistance by friction between the two damping sheets e41, and the damping sheets e41 can play a role in increasing the rotational friction force between the first seat e10 and the second seat e20. When the second seat e20 rotates relative to the first seat e10, the damping sheet e41 can increase the rotational resistance, preventing the second seat e20 from rotating arbitrarily relative to the first seat e10.

Referring to FIG. 80 and FIG. 83, in some embodiments, an angle locking apparatus e50 is provided between the first seat e10 and the second seat e20 for locking or unlocking their relative rotation angle. Thus, when the first seat e10 and the second seat e20 are adjusted to a suitable angle, a current angle can be locked by the angle locking apparatus e50, preventing the fitness device from rotating during use and affecting the fitness experience.

Referring to FIG. 83 and FIG. 85, in some embodiments, the angle locking apparatus e50 includes a locking disc e51 and a pin shaft e52. The locking disc e51 and the pin shaft e52 are respectively fixedly connected to the first seat e10 and the second seat e20 in the rotation direction. Several locking holes are distributed on the locking disc e51 along the rotation direction for the pin shaft e52 to be inserted.

Thus, when the first seat e10 and the second seat e20 need to be locked, the pin shaft e52 is inserted into the locking hole on the locking disc e51 to lock the two and improve the locking stability.

Specifically, one of the locking disc e51 and the pin shaft e52 is provided on the first seat e10, and the other is provided on the second seat e20, and the locking disc e51 and the pin shaft e52 are arranged opposite to each other. A plurality of locking holes are opened on the locking disc e51, and the plurality of locking holes are arranged at intervals along a circumferential direction of the locking disc e51. The pin shaft e52 can be configured as a cylindrical structure and adapted to the locking hole, and the number of pin shafts e52 can be one, two or more, and when the pin shaft e52 is extended or retracted, the pin shaft e52 can cooperate with the locking hole, which is not limited in the present disclosure.

It can be understood that the locking disc e51 can be provided on the rotational contact surface between the first seat e10 and the second seat e20, and the pin shaft e52 can be movably and telescopically provided on the first seat e10 to be able to be extended or retracted relative to the locking disc e51. When the pin shaft e52 withdraws from the locking hole of the locking disc e51, the second seat e20 is in an unlocked state relative to the first seat e10, and the two can rotate relative to each other. When the pin shaft e52 extends into the locking hole of the locking disc e51, the second seat e20 is in a locked state relative to the first seat e10, and the two are locked relative to each other and cannot rotate.

Referring to FIG. 83, FIG. 85, and FIG. 86, in some embodiments, the angle locking apparatus e50 further includes a cam wrench e53. The cam wrench e53 is connected to the pin shaft e52 and is configured to drive the pin shaft e52 to extend or contract along its axial direction and achieve frictional locking. Thus, the arrangement of the cam wrench e53 enables the pin shaft e52 to cooperate with the locking disc e51 more conveniently, thereby facilitating the extension or retraction of the pin shaft e52 in the locking hole.

Specifically, the cam wrench e53 can be connected and matched with the pin shaft e52 and can rotate relative to the pin shaft e52. Furthermore, the cam wrench e53 includes a cam portion and a handle e71, and a cam portion is provided on one side relative to a rotation center of the cam portion.

In an embodiment, when the cam portion rotates toward the pin shaft e52, the cam portion squeezes the first seat e10 to bring the pin shaft e52 into the locking hole, which is a locked state. When the handle e71 is rotated so that the cam portion is not facing the pin shaft e52, the pin shaft e52 can withdraw from the locking hole, which is an unlocked state.

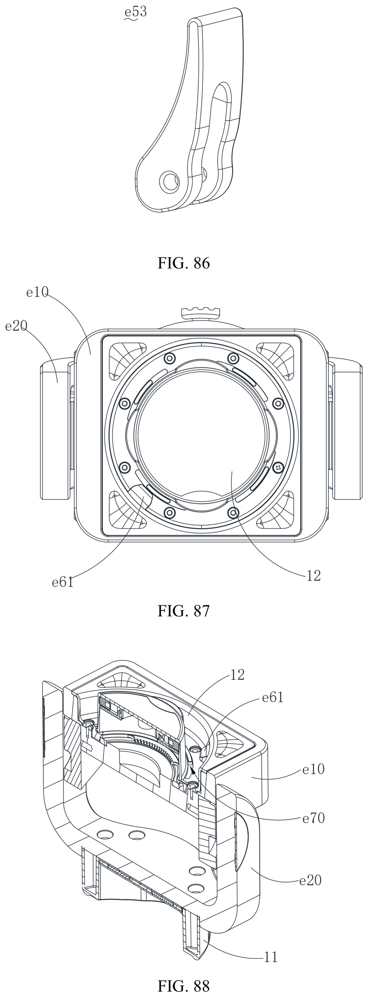

Referring to FIG. 82 and FIG. 87, in some embodiments, the first seat e10 is further provided with a second coupling seat 12. The second coupling seat 12 can be coupled to the first coupling seat 11 for connection with the outside or another rotating fixing member e100.

Thus, the first seat e10 can be mounted at a position provided with the first coupling seat 11 via the second coupling seat 12, improving the convenience and flexibility of fixing the first seat e10. Exemplarily, when two rotating fixing members e100 are connected, the second coupling seat 12 of one rotating fixing member e100 can be coupled to the first coupling seat 11 of another rotating fixing member e100. If the swing angle needs to be increased, the rotation axes of the two rotating fixing members e100 can be made parallel to each other. If two degrees of freedom are required to enable the combined rotating fixing member e100 to perform spherical omnidirectional swing, the rotation axes of the two rotating fixing members e100 can be perpendicular to each other. At the same time, a plurality of rotating fixing members e100 can also be connected end to end in sequence, or one or more other rotating fixing members e100 can be connected through the first coupling seat 11 and/or the second coupling seat 12.

Specifically, the second coupling seat 12 may be provided on a side of the first seat e10 opposite to the second seat e20. The second coupling seat 12 and the first coupling seat 11 can form a matching combined structure. The first seat e10 equipped with the second coupling seat 12 can be easily and conveniently mounted at any position provided with the first coupling seat 11.

In an embodiment, the first coupling seat 11 may be an annular structure, and the second coupling seat 12 may be an annular groove structure, and the two structures match each other. When the second coupling seat 12 is assembled onto the first coupling seat 11, the annular structure of the first coupling seat 11 extends into an annular groove of the second coupling seat 12. Of course, the first coupling seat 11 and the second coupling seat 12 can also be of other shapes and structures that match each other, which is not limited in the present disclosure.

Furthermore, the rotating fixing member e100 provided with the second coupling seat 12 can be mounted on another rotating fixing member e100 provided with the first coupling seat 11. The two rotating fixing members e100 are connected horizontally and vertically, and the fitness device is installed on the first coupling seat 11. Thus, the fitness device can have movable angles in both horizontal and vertical directions, improving the fitness experience.

Referring to FIG. 82 and FIG. 87, in some embodiments, the second coupling seat 12 is provided with a hook e61 and a first elastic member (not shown in the figure). The hook e61 is configured to snap-fit onto the first coupling seat 11, and the first elastic member applies an elastic force for the hook e61 to snap-fit onto the first coupling seat 11.

Thus, the second coupling seat 12 can apply an elastic force on the hook e61 via the first elastic member, so that the hook e61 can stably snap-fit onto the first coupling seat 11, improving the stability between the second coupling seat 12 and the first coupling seat 11.

Specifically, the hook e61 may be provided at an edge of the second coupling seat 12. When the second coupling seat 12 is assembled with the first coupling seat 11, the hook e61 may snap-fit onto an edge of the first coupling seat 11. Correspondingly, a hook groove e31 adapted to the hook e61 can be opened at the edge of the first coupling seat 11, and two sides of the hook groove e31 may be a gentle slope-like structure.

When the second coupling seat 12 is assembled onto the first coupling seat 11, the hook e61 snap-fits into the hook groove e31 to prevent the second coupling seat 12 and the first coupling seat 11 from being separated. When the first coupling seat 11 and the second coupling seat 12 need to be separated, a certain rotational force is applied to the second coupling seat 12, the hook e61 can slide out from a gentle slope of the hook groove e31, and then be pulled outward to separate the second coupling seat 12 from the first coupling seat 11.

One end of the first elastic member is fixedly connected to the second coupling seat 12, and the other end is connected to an end of the hook e61, so as to apply an elastic force on the hook e61 so that the hook e61 and the first coupling seat 11 are more stably connected.

Referring to FIG. 81, FIG. 88, and FIG. 89, in some embodiments, the rotating fixing member e100 further includes a latching member e70 movably disposed on the first seat e10. The latching member e70 includes a first state in which the latching member limits the rotation angle of the hook e61 when the hook e61 is snapped, and a second state in which the latching member is not interfere with the hook e61 to allow the hook e61 to rotate freely.

Thus, when the hook e61 snap-fits onto the first coupling seat 11, the latching member e70 can limit the movement of the hook e61 to prevent the second coupling seat 12 from rotating or detaching from the first coupling seat 11.

Specifically, when the latching member e70 is in the first state, the latching member e70 can limit the movement of the hook e61, that is, the hook e61 is locked. Then, when the second coupling seat 12 is rotated, the hook e61 cannot slide out of the hook groove e31, so that the second coupling seat 12 cannot be separated from the first coupling seat 11, thereby improving the safety of the fitness device during use.

When the latching member e70 is in the second state, the hook e61 is not limited by the latching member e70. Then, when the second coupling seat 12 is rotated, the hook e61 can slide out of the hook groove e31, and the second coupling seat 12 can be separated from the first coupling seat 11.

Furthermore, the latching member e70 may be an annular disk-like structure and be rotatably mounted on the first seat e10. A protrusion is provided at a position on one side of the latching member e70 corresponding to the hook e61. When the hook e61 corresponds to the top of a slope of the protrusion, the protrusion can limit the movement of the hook e61, that is, the latching member e70 is in the first state, and the hook e61 is in the locked state. When the hook e61 corresponds to the bottom of the slope of the protrusion, the hook e61 can have a certain movement space, that is, the latching member e70 is in the second state, and the hook e61 is in the unlocked state, as shown in the figure.

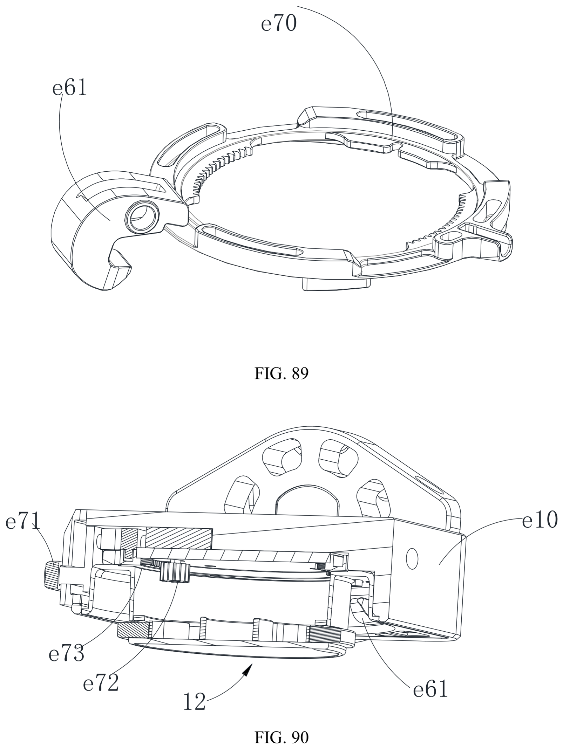

Referring to FIG. 81 and FIG. 89, in some embodiments, the latching member e70 is driven by a handle e71, and the first seat e10 is provided with a channel for the handle e71 to extend out and move. Thus, the user can drive the latching member e70 via the handle e71 to facilitate locking or unlocking between the latching member e70 and the hook e61.

Specifically, the latching member e70 can extend from the first seat e10 through the channel on the first seat e10, and the handle e71 is mounted at an end of the latching member e70 extending from the first seat e10. When the latching member e70 needs to be locked or unlocked, the latching member e70 can be driven by the handle e71, which is more convenient for the user to lock or unlock.

Referring to FIG. 82 and FIG. 90, in some embodiments, a first locking part e72 is provided on the latching member e70 or the handle e71, and a second locking part e73 is provided in the first seat e10. The first locking part e72 and the second locking part e73 are locked with each other along a first direction when in contact.

The fixing set also includes a second elastic member e74 (not shown in the figure), which acts on the latching member e70, the handle e71, the first locking part e72 or the second locking part e73, and is configured to apply an elastic force to make the first locking part e72 and the second locking part e73 contact.

The handle e71 is movably disposed in the channel, which can move along the first direction and an opposite direction to drive the latching member e70, and can move along the second direction to make the first locking part e72 contact with or separate from the second locking part e73.

Thus, when the first locking part e72 and the second locking part e73 are in contact and locked under the elastic force of the second elastic member e74, the second coupling seat 12 and the first coupling seat 11 can be stably locked. When the user overcomes the elastic force of the second elastic member e74 to separate the first locking part e72 and the second locking part e73, the second coupling seat 12 and the first coupling seat 11 can be separated.

Specifically, as shown in FIGS. 89 to 91, the second locking part e73 may be a tooth-like structure, movably disposed in the first seat e10, and linked with the handle e71. The first locking part e72 may be an arc-shaped rack-like structure, connected to the latching member e70. The handle e71 can drive the latching member e70 to rotate along the first direction (direction A in the figure), and can press the first locking part e72 to separate from the second locking part e73 along a second direction (direction B in the figure).

A tooth portion of the second locking part e73 can contact with a tooth portion of the first locking part e72 under the elastic force of the second elastic member e74, and then the two can snap-fit to limit the rotation of the latching member e70, thereby making it impossible to separate the second coupling seat 12 and the first coupling seat 11 connected to each other via the hook e61.

When the handle e71 is pressed to overcome the elastic force of the second elastic member e74 to separate the tooth portion of the second locking part e73 and the tooth portion of the first locking part e72, the handle e71 can drive the latching member e70 to rotate. At this time, the hook e61 can slide out of the hook groove e31 to achieve the purpose of unlocking.

As shown in FIG. 89, FIG. 92, and FIG. 93, the second locking part e73 is a tooth-shaped structure and is connected to the handle e71. The first locking part e72 is a rack structure and is fixed to the first seat e10. The second elastic member e74 acts on the handle e71. When the handle e71 is toggled in the first direction (direction A in the figure), the handle e71 can drive the latching member e70 to rotate. When the handle e71 is pressed in the second direction (direction B in the figure), the second locking part is separated from the first locking part.

Of course, the specific structures of the first locking part e72 and the second locking part e73 in embodiments of the present disclosure are only two of the possible structures, and the present disclosure does not limit the specific structures of the first locking part e72 and the second locking part e73.

In some embodiments, the first locking part e72 and the second locking part e73 are locked to each other in a one-way locking manner along a first direction.

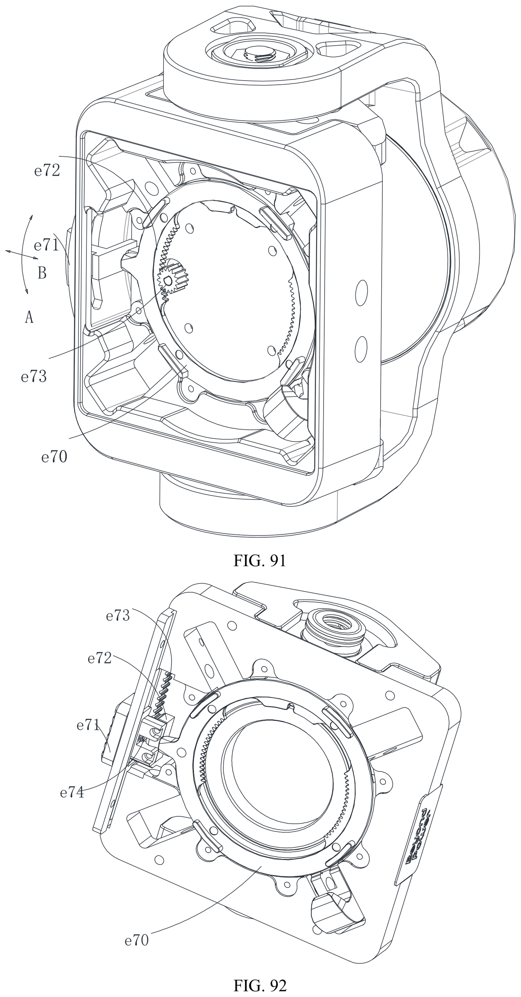

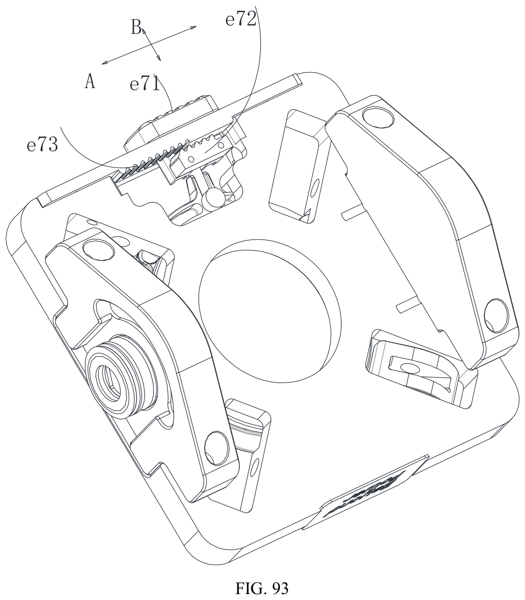

That is, the user does not need to press the handle e71 when locking, and only needs to press the handle e71 when unlocking. Exemplarily, the second locking part e73 in FIG. 90 and FIG. 91 is a one-way rotating gear. When the user toggles the handle to lock along the first direction, the first locking part e72 and the second locking part e73 will not lock directly, and the gear will rotate on the rack, but after locking is completed, the two will lock each other in the opposite direction. Exemplarily, the tooth-shaped structure in FIG. 92 and FIG. 93 is a reverse hook tooth structure. That is, when the user toggles the handle to lock along the first direction, the two will not lock, and after locking is completed, the two will lock in the opposite direction.

An embodiment of the present disclosure also discloses a fitness assembly, and the fitness assembly includes a fitness device and a rotating fixing member e100 in any of the above embodiments. The fitness device is provided with a second coupling seat 12 corresponding to the first coupling seat 11, and a body of the fitness device is connected to at least one rotating fixing member e100.

In the fitness assembly of the embodiment of the present disclosure, the body of the fitness device is installed on the rotating fixing member e100 with adjustable angle, which can better meet the training needs of the user during fitness. Through different angle changes of the body of the fitness device, the body of the fitness device can adapt to more fitness postures and enhance the user's fitness experience.

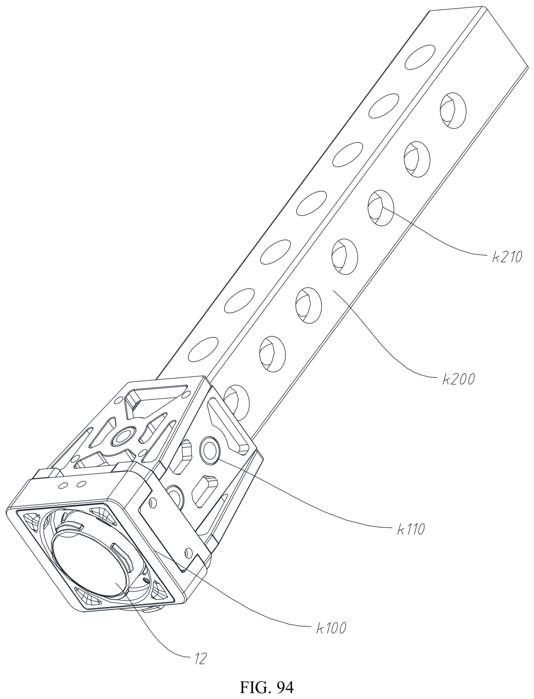

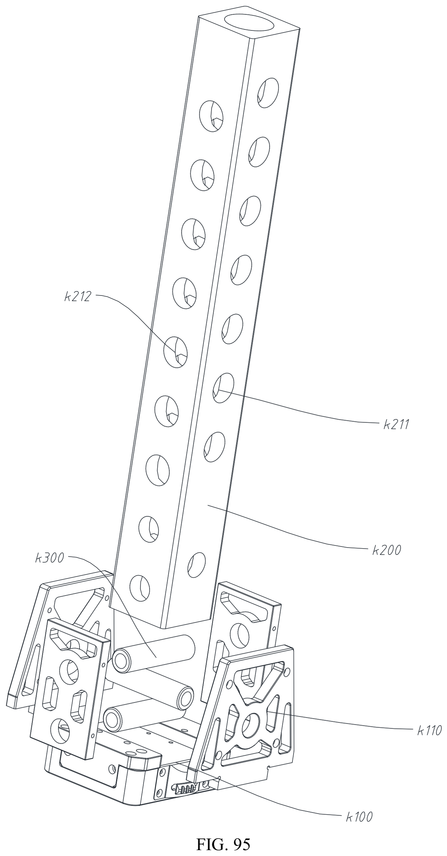

An embodiment of the present disclosure also provides an extension fixing member, as shown in FIGS. 94-98, including an extension base k100 for fixing to the outside, and an extension rod k200 with an end fixed to the extension base k100. The installation position is extended via the extension rod k200. The specific solutions include the following three types, and the following three types can be freely combined.

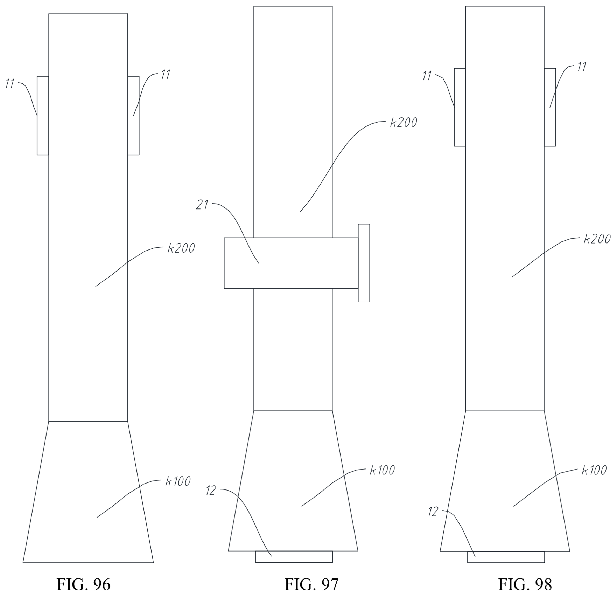

The first type, as shown in FIG. 96, may include a first coupling seat 11 mounted on the extension rod k200. Specifically, the first coupling seat 11 can be mounted on a side of the extension rod k200 or at an end of the extension rod k200. The first coupling seat 11 is configured to couple to the fitness device or massage device. The user can select the first coupling seat 11 on the extension rod k200 for extended installation as needed. In this case, the extension fixing member is a first type fixing member.

The second type is shown in FIG. 97. The extension base k100 is provided with a second coupling seat 12 for connecting with a first coupling seat 11 of other fixing members. The extension rod k200 or mounting holes on the extension rod k200 can provide an installation environment for the first type fixing member 21. In this case, the extension fixing member is a third type fixing member.

The third type is shown in FIG. 98. The extension base k100 is provided with a second coupling seat for connecting with a first coupling seat of other fixing members. The extension rod k200 is provided with a first coupling seat 11 for connecting with a second coupling seat 12 of other fixing members or a fitness device or a massage device. In this case, the extension fixing member is a second type fixing member.

In some embodiments, an adjusting apparatus is also included, and the adjusting apparatus is provided with a second coupling seat 12. The adjusting apparatus is configured to adjust the position of the second coupling seat 12 along an axial direction of the extension rod k200 and lock it at a desired locking position, After locking, the user can install a fitness device or a massage device at this position; or after installing a fitness device or a massage device, the user can adjust the position of the fitness device through the adjusting apparatus.

In some embodiments, the extension rod k200 can also be connected to a plurality of fitness devices or a plurality of fixing members to meet the user's fitness needs in specific scenarios.

In some embodiments, there are a plurality of second coupling seats 12 on the extension rod k200, and the user can select the second coupling seat 12 at a specific position according to specific position requirements.

In some embodiments, the first type fixing member includes a plurality of installation positions on the extension rod k200. The user can select a specific installation position on the extension rod k200 as needed, connect the first type fixing member at that position, and then install the fitness device or massage device. The user can also first install the fitness device or massage device on the first type fixing member, and then quickly connect the first type fixing member together with the fitness device or massage device to the extension rod k200.

In some embodiments, a protective plate k110 is also included. An end of the protective plate k110 is fixed to the extension base k100, and a side surface of the protective plate is fixed to a side surface of the extension rod k200. The arrangement of the protective plate k110 can reinforce the extension rod k200 and the extension base k100, increasing the structural strength of the fixing set. Preferably, there are at least three protective plates k110, and the side edges are connected in sequence. An end portion of the extension rod k200 is covered by a plurality of protective plates k110, further improving the structural strength.

In some embodiments, a cross-section of the extension rod k200 is rectangular or square, and there are four protective plates k110, which are respectively fixedly connected to four sides of the extension rod k200. The extension rod k200 with a rectangular or square cross-section has better mechanical properties, further improving the structural strength, and can provide an installation plane, making the installation of the fitness device easier and the coupling more stable.

In some embodiments, the cross-section of the extension rod k200 is circular or annular.

In some embodiments, the end portion of the extension rod k200 is provided with a through hole k210, and at least one pair of the protective plates k110 is provided with extension rod k200 connecting holes. The side surface of the protective plate k110 and the side surface of the extension rod k200 are fixed by a connecting pin k300 passing through the extension rod k200 connecting holes of the protective plates k110 and the through hole k210. In some embodiments, an end portion of the extension rod k200 is provided with through holes k210 in two directions, and the through holes k210 in the two directions are arranged in a staggered manner. Two pairs of the protective plates k110 are provided with extension rod k200 connecting holes, and the extension rod k200 connecting holes on the two pairs of protective plates k110 are arranged in a staggered manner. The side surface of the protective plate k110 and the side surface of the extension rod k200 are fixed by a connecting pin k300 passing through the extension rod k200 connecting holes of the protective plates k110 and the through hole k210. Preferably, there are at least two through holes k210 on one protective plate k110, and the two through holes k210 cooperate with the connecting pin k300 to be pierced and fixed, which can provide more stable fixation for the extension rod k200.

In some embodiments, the extension rod k200 is hollow, that is, the extension rod k200 is provided with a through hole k210 along a length direction, which can reduce the weight of the extension rod k200 and improvethe mechanical properties of the extension rod k200.

In some embodiments, a plurality of first through holes k211 are equidistantly provided on the side surface of the extension rod k200, and/or a plurality of second through holes k212 are equidistantly provided on the side surface of the extension rod k200. The first through hole k211 and the second through hole k212 are opened in different directions. The first through holes k211 and the second through holes k212 can reduce weight and improve mechanical properties. In some embodiments, the first through holes k211 and the second through holes k212 can be configured to couple to the fitness device. In some embodiments, the first through holes k211 and the second through holes k212 can be configured as an installation environment for a first type fixing member.

In some embodiments, the first through holes k211 and the second through holes k212 are arranged in a staggered manner; and a distance between adjacent first through holes k211 is no less than a diameter of the second through hole k212, and a distance between adjacent second through holes k212 is no less than a diameter of the first through hole k211. That is, the first through holes k211 and the second through holes k212 do not interfere with each other, and can be independently configured for installing a fitness device, a massage device or a first type fixing member.

In some embodiments, the first type fixing member is a clamp. The clamp can slide along the extension rod to adjust its position when loose, and the clamp is fixed to the extension rod when tightened. The clamp is provided with a first coupling seat 11. The first type fixing member can also be other clamping structures or hole bracing structures. The clamping structure can clamp at least two through holes or the extension rod along a width direction for fixation. The hole bracing structure can brace one through hole or two through holes for fixation. By using several through holes on the extension rod, position adjustment and quick connection and installation can be realized.

In some embodiments, the first type fixing member, the second type fixing member, and/or the third type fixing member fix the fitness device or massage device via a fixing and clamping apparatus, thereby meeting the fixing requirements for equipment that cannot be adapted to the first coupling seat 11. The fixing and clamping apparatus may be a clamp, may be screw-fastened, or may adopt a structure that clamps the fitness device or massage device in the same way as a clamping or bracing fixing member clamps the external environment in some embodiments, or may adopt a structure that surrounds the fitness device or massage device in the same way as a flexible fixing member surrounds and fixes to the external environment in some embodiments.

In some embodiments, the first type fixing member, the second type fixing member, and/or the third type fixing member are further provided with anchor points for mounting or connecting the fitness device or massage device. Exemplarily, the anchor points can be hooks, crossbars, diagonal bars, or holes.

In some embodiments, the first type fixing member, the second type fixing member, and/or the third type fixing member are provided with sliding apparatus or walking apparatus for reducing friction and facilitating movement when transferring the fixing members or the assembled fixing sets.

In the description of this specification, reference to terms such as "an embodiment", "some embodiments", "exemplary embodiments", "example", "specific example", or "some examples" means that specific features, structures, materials, or characteristics described in conjunction with the embodiment or example are included in at least one embodiment or example of the present disclosure. In this specification, the schematic expressions of the above terms do not necessarily refer to the same embodiment or example. Moreover, the specific features, structures, materials, or characteristics described may be combined in any suitable manner in any one or more embodiments or examples.

Although the embodiments of the present disclosure have been shown and described, those having ordinary skill in the art will appreciate that various changes, modifications, substitutions, and variations may be made to the embodiments without departing from the principles and intent of the present disclosure, and the scope of the present disclosure is defined by the claims and their equivalents.

## Claims

**1.** A fixing set, comprising:
a first type fixing member, wherein the first type fixing member is configured to establish a connection with an installation environment, and the first type fixing member is provided with a first coupling seat;
a second type fixing member, wherein the second type fixing member is provided with a first coupling seat and a second coupling seat, and the first coupling seat and the second coupling seat are in different positions or different angles, and/or
a third type fixing member, wherein the third type fixing member is provided with an installation environment for connection with the first type fixing member, and the third type fixing member is provided with a first coupling seat and/or a second coupling seat; and
wherein, the first coupling seat is configured to connect the second coupling seat, a fitness device or a massage device.

**3.** The fixing set according to claim 1, wherein the first coupling seat and the second coupling seat are configured to be quickly connected or disassembled.

**4.** The fixing set according to claim 1, wherein the first type fixing member comprises a ground fixing member for establishing a connection with the ground or a horizontal surface, a wall fixing member for establishing a connection with a wall or a vertical surface, a clamping or bracing fixing member for clamping or bracing an installation environment, a column fixing member for establishing a connection with a column, a flexible fixing member for establishing a connection with an irregular object, and/or a wearing fixing member for establishing a connection with a human body.

**5.** The fixing set according to claim 1, wherein the second type fixing member comprises an angle changing fixing member for changing an angle, an angle adjusting fixing member for adjusting an angle, a position changing fixing member for changing a position, and/or a position adjusting fixing member for adjusting a position.

**6.** The fixing set according to claim 1, wherein the third type fixing member comprises an extension fixing member for providing a column as an installation environment and/or a hole fixing member for providing a hole as an installation environment.

**7.** The fixing set according to claim 1, wherein the first type fixing member comprises:
a base plate main body for placement on a flat surface;
a first coupling seat, wherein the first coupling seat is provided on the base plate main body, and the first coupling seat is configured to couple to or lock with the second coupling seat of the fitness device.

**8.** The fixing set according to claim 7, wherein the base plate main body is provided with at least two mounting positions, and the first coupling seat is detachably connected to any mounting position.

**9.** The fixing set according to claim 8, wherein there is one or at least two first coupling seats.

**10.** The fixing set according to claim 7, wherein the base plate main body is provided with a heightening plate, and the height of the heightening plate is 0.5-1.5 times the height of the fitness device or the first coupling seat.

**11.** The fixing set according to claim 10, wherein there are two heightening plates, which are respectively located on both sides of the first coupling seat; or the heightening plate is arranged around the first coupling seat.

**12.** The fixing set according to claim 10, wherein there are two first coupling seats, and the heightening plate is located between the two first coupling seats.

**13.** The fixing set according to claim 11 or 12, wherein the heightening plate is connected to the first coupling seat via a folding mechanism; and/or the heightening plate is provided with an anti-slip layer.

**14.** The fixing set according to claim 7, wherein the base plate main body is provided with a recessed portion, the first coupling seat is located in the recessed portion, the recessed portion is configured to accommodate the fitness device, and the depth of the recessed portion is 0.5-1.5 times the height of the fitness device.

**15.** The fixing set according to claim 7, wherein the base plate main body is provided with a storage space, and a hand lever or a handle is placed in the storage space.

**16.** The fixing set according to claim 15, wherein the hand lever is configured to be changed in length and locked.

**17.** The fixing set according to claim 7, wherein the base plate main body is provided with a base plate handle, and/or the base plate main body is configured to be folded.

**18.** The fixing set according to claim 1, wherein the first type fixing member comprises:
a guide member for being mounted on a vertical surface;
at least one movable member connected to the guide member and configured to rotate or move relative to the guide member, the movable member being provided with a first coupling seat;
a locking member configured to be operated by a user to switch between a first state and a second state, when the locking member is in the first state, the movable member is locked to the guide member to limit the rotation or movement of the movable member, and when the locking member is in the second state, the movable member is capable of rotating or moving along the guide member to adjust the position of the first coupling seat.

**19.** The fixing set according to claim 18, wherein the movable member comprises:
a sliding member slidably connected to the guide member, the first coupling seat being provided on the sliding member;
at least two sets of rolling assemblies, each set of rolling assemblies comprising at least one rolling member, the rolling member being provided between the sliding member and the guide member, and the rolling member being capable of rotating along its own axial direction to reduce friction between the sliding member and the guide member;
wherein, the axial directions of the rolling members of at least two sets of the rolling assemblies intersect or are skewed.

**20.** The fixing set according to claim 19, wherein the at least two sets of rolling assemblies comprise a first rolling assembly and a second rolling assembly;
the first rolling assembly comprises at least two first rolling members arranged opposite to each other along a first direction, and the at least two first rolling members are rotatably connected to the sliding member and are in rolling contact with a first side wall and a second side wall of the guide member respectively; and/or
the second rolling assembly comprises at least one second rolling member, and the at least one second rolling member is rotatably connected to the sliding member, and the second rolling member is in rolling contact with a third side wall and/or a fourth side wall of the guide member;
an axial direction of the second rolling member intersects or is skewed with an axial direction of the first rolling member.

**21.** The fixing set according to claim 20, wherein the at least two sets of rolling assemblies further comprise a third rolling assembly, the third rolling assembly comprises at least one third rolling member, the at least one third rolling member is rotatably connected to the sliding member, and the third rolling member is in rolling contact with a fifth side wall and/or a sixth side wall of the guide member;
an axial direction of the third rolling member is perpendicular to the axial direction of the second rolling member, and the axial direction of the second rolling member and the axial direction of the third rolling member both intersect or are skewed with the axial direction of the first rolling member.

**22.** The fixing set according to claim 18, wherein the movable member comprises:
a sliding member slidably connected to the guide member, and the first coupling seat is provided on the sliding member;
at least one set of rolling assemblies, wherein the at least one group of rolling assemblies comprises at least two rolling members arranged at intervals along a moving direction of the sliding member, the rolling members are provided between the sliding member and the guide member, and the rolling members are capable of rotating along their own axial direction to reduce friction between the sliding member and the guide member;
wherein, at least two rolling members are arranged in a staggered manner, so that an arrangement direction of two adjacent rolling members intersects with or is skewed with a moving direction of the sliding member.

**23.** The fixing set according to claim 18, wherein the locking member comprises:
a first cam portion movably disposed on the movable member;
a first operating portion connected to the first cam portion, wherein the first operating portion is configured to be operated by the user to drive the first cam portion to rotate to abut against or be away from the guide member;
when the locking member is in the first state, the first cam portion abuts against the guide member to limit the movement of the movable member;
when the locking member is in the second state, there is a gap between the first cam portion and the guide member, so that the movable member is capable of moving along the guide member.

**24.** The fixing set according to claim 18, wherein the movable member comprises:
at least one bracket with a first end and a second end opposite to each other, the first end is rotatably connected to the guide member, and the first coupling seat is provided on the bracket;
wherein, the second end is configured to rotate through the first end to be close to or away from the guide member, so as to adjust an angle formed between the bracket and the guide member, thereby adjusting a distance between the second end and the guide member.

**25.** The fixing set according to claim 24, wherein the bracket is configured to rotate relative to the guide member to switch between a folded state and an extended state;
in the folded state, the bracket is arranged parallel to the guide member; in the extended state, the angle formed between the bracket and the guide member is greater than 70°;
the locking member is configured to support or limit the bracket when the bracket is in the extended state, so as to prevent the rotation of the bracket.

**26.** The fixing set according to claim 25, wherein the locking member comprises a first link and a second link, one end of the first link is hinged to the bracket to form a first hinge point, an opposite end of the first link is hinged to one end of the second link to form a second hinge point, and an opposite end of the second link is hinged to the guide member to form a third hinge point;
wherein, the locking member at least includes an unlocked state and a critical locked state; when the locking member is in the unlocked state, the first link and the second link are capable of rotating freely, so that the bracket is capable of rotating relative to the guide member; when the locking member is in the critical locked state, the first hinge point, the second hinge point and the third hinge point are collinear to limit the bracket, thereby preventing the bracket from rotating;
the locking member further includes a margin locked state, in which, an internal angle formed by the first hinge point, the second hinge point and the third hinge point is reduced to less than 0 degrees;
the locking member further comprises a top block, and when the locking member is in the critical locked state or the margin locked state, the bracket and the guide member compress the top block, and the top block is configured to provide a force to the bracket to stabilize the bracket;
the locking member further comprises a wall fixing member handle, which is connected to the first link or the second link, and the wall fixing member handle is configured to be operated by the user to drive the locking member to switch between the unlocked state and the critical locked state or the margin locked state;
the locking member further comprises a secondary locking member, which is configured to limit the rotation of the first link and/or the second link in the critical locked state or the margin locked state.

**27.** The fixing set according to claim 25, wherein the locking member comprises:
a support base mounted on the bracket, wherein the support base is provided with a mounting groove;
a support rod, one end of the support rod is rotatably connected to the guide member, and an opposite end of the support rod is configured to be clamped in the mounting groove or separated from the mounting groove;
a locking structure configured to be operated by the user to switch between the first state and the second state; wherein when the locking structure is in the first state, the support rod is locked in the mounting groove, so that the support rod is capable of supporting the bracket, thereby keeping the bracket in the extended state; when the locking structure is in the second state, the support rod is capable of being disengaged from the mounting groove, so that the bracket is capable of rotating to the folded state.

**28.** The fixing set according to claim 24, wherein the number of the brackets is two, and the two brackets are respectively disposed at both ends of the guide member in the extending direction; and/or
a second end of the bracket is rotatably connected to a rotating seat, and the first coupling seat is provided on the rotating seat, so that the fitness device located at the first coupling seat is capable of rotating with the rotating seat to adjust an angle; and/or
the guide member is provided with a sliding groove for accommodating the movable member, and the bracket is configured to be rotated to be parallel to the guide member and be received in the sliding groove; and/or
the wall fixing member further comprises a damping structure, the first end is rotatably connected to the guide member via the damping structure, and the damping structure is configured to provide resistance when the bracket rotates relative to the guide member; and/or
the wall fixing member further comprises an installation structure, which is provided on the rotating seat and is configured to install the fitness device to the first coupling seat.

**29.** The fixing set according to claim 1, wherein the first type fixing member comprises:
a hole fixing base, on which the first coupling seat is provided;
a screw configured to pass through a hole in an installation environment;
a nut threadedly connected to the screw, wherein one of the screw and the nut is fixed to the hole fixing base;
a positioning pin adjustably provided on the hole fixing base.

**30.** The fixing set according to claim 29, wherein a sliding slot is opened on the hole fixing base, and the positioning pin is configured to slide in the sliding slot.

**31.** The fixing set according to claim 29, wherein:
the screw is fixedly connected to the hole fixing base;
the nut comprises:
a rotating seat, wherein the rotating seat is provided with an insertion hole for inserting the screw;
a half nut, movably disposed on the rotating seat and partially located in the insertion hole, and configured to engage with the screw;
an elastic member, configured to apply an elastic force to make the half nut move toward the center of the insertion hole;
an unlocking device, configured to be linked with the half nut to make the half nut move away from the center of the insertion hole.

**32.** The fixing set according to any one of claims 29-31, wherein an angle formed between an end face of a thread of the screw on the side away from the first coupling seat and/or an end face of a thread of the nut adjacent to the first coupling seat and a cross-section of the screw is smaller than a friction angle.

**33.** The fixing set according to claim 32, wherein the angle formed between the end face of the thread of the screw on the side away from the first coupling seat and/or the end face of the thread of the nut adjacent to the first coupling seat and the cross-section of the screw is smaller than the friction angle.

**34.** The fixing set according to claim 29, wherein the positioning pin comprises a pin rod and a pin sleeve, the pin sleeve is provided with a through hole or a blind hole, and the pin sleeve is detachably sleeved on the pin rod.

**35.** The fixing set according to claim 34, wherein:
there are a plurality of pin sleeves, and the plurality of pin sleeves have different outer diameters; and/or
there are a plurality of pin rods, and the plurality of pin rods have different outer diameters; and/or
the pin rod and the pin sleeve have different outer diameters.

**36.** The fixing set according to claim 34, wherein the pin rod and the pin sleeve are threadedly connected, and the pin rod is provided with a positioning shoulder.

**37.** The fixing set according to claim 36, wherein:
an anti-loosening sleeve is provided at the bottom of the through hole or the blind hole of the pin sleeve away from the pin rod, and the anti-loosening sleeve is provided with an internal thread engaged with the pin rod;
the anti-loosening sleeve and the pin sleeve are made of different materials; and/or
the pin sleeve is provided with a through hole, a mounting space is opened at one end of the through hole away from the pin rod, an inner wall of the mounting space is circumferentially provided with a positioning groove, and an outer wall of the anti-loosening sleeve is circumferentially provided with a positioning edge that cooperates with the positioning groove.

**38.** The fixing set according to claim 1, wherein the first type fixing member comprises:
a clamping or bracing base body;
a first coupling seat provided on the clamping or bracing base body;
a first fastening mechanism, comprising a first transmission mechanism and a fixing column, the number of the fixing columns is at least two, at least one of the fixing columns is movably disposed on the clamping or bracing base body, and the first transmission mechanism is configured to make the movable fixing column separate from or approach other fixing columns.

**39.** The fixing set according to claim 38, wherein:
the first transmission mechanism comprises a screw rod and a nut, and the movable fixing column is provided on the nut and slides along a direction of the screw rod; or
the first transmission mechanism comprises a double-headed screw rod and two nuts, and the two fixing columns are respectively provided on the nuts and slide along the direction of the screw rod.

**40.** The fixing set according to claim 38, wherein a notch is provided on a side of the fixing column away from and/or adjacent to other fixing columns.

**41.** The fixing set according to claim 40, further comprising:
a second fastening mechanism, the second fastening mechanism comprises a second transmission mechanism and a first tightening block, and the second transmission mechanism is configured to cause the first tightening block to move along an axial direction of the fixing column.

**42.** The fixing set according to claim 41, wherein the second transmission mechanism comprises a double-headed screw rod, two nuts and two connecting rods, the two nuts are respectively engaged with two ends of the double-headed screw rod, two ends of the first tightening block are respectively hinged to one end of the two connecting rods, and opposite ends of the two connecting rods are respectively hinged to the nuts.

**43.** The fixing set according to claim 40, further comprising:
a third fastening mechanism, the third fastening mechanism comprises a third transmission mechanism and a second tightening block, the number of the second tightening blocks is at least two, at least one of the second tightening blocks is movably disposed on the clamping or bracing base body, and the third transmission mechanism is configured to make the second tightening block separate from or approach other second tightening blocks.

**44.** The fixing set according to claim 43, wherein the second tightening block comprises a second tightening surface, the second tightening surfaces of the corresponding second tightening blocks are arranged opposite to each other, and a distance between the second tightening surfaces gradually increases along an outward extension direction of the fixing column.

**45.** The fixing set according to claim 43, wherein a movement direction of the second tightening block is perpendicular to a movement direction of the fixing column.

**46.** The fixing set according to claim 43, wherein:
the second transmission mechanism comprises a screw rod and a nut, and the movable second tightening block is provided on the nut and slides along a direction of the screw rod; or
the second transmission mechanism comprises a double-headed screw rod and two nuts, and the two second tightening blocks are respectively disposed on the nuts and slide along the direction of the screw rod.

**47.** The fixing set according to any one of claims 38, 41, and 43, wherein the transmission mechanism is in transmission connection with a handle;
the handle is hinged to a transmission connecting shaft of the transmission mechanism, and a hinge shaft of the handle is perpendicular to the transmission connecting shaft.

**48.** The fixing set according to claim 1, wherein the first type fixing member comprises:
two fixing frames, each of which is formed with two fixing planes arranged at an angle, and the two fixing planes are located on a side of the fixing frame adjacent to the other fixing frame;
two adjusting links, the length of the adjusting link is capable of being adjusted;
when the fixing member is fastened, the fixing frames and the adjusting links are alternately hinged to form an annular structure.

**49.** The fixing set according to claim 48, further comprising:
a quick-release structure, which is located at a hinge of any fixing frame and any adjacent adjusting link; when the fixing member is not fastened, the adjacent fixing frame and adjusting link provided with the quick-release structure can be separated via the quick-release structure.

**50.** The fixing set according to claim 49, wherein the quick-release structure is a quick-release rod connected to the fixing frame or the adjusting link, and the quick-release rod is connected to a fixing hook arranged on the adjusting link or the fixing frame.

**51.** The fixing set according to claim 49, wherein the quick-release structure comprises:
a fixing hook and a connecting shaft, one of which is provided on the fixing frame, and the other is provided on the adjusting link, and the connecting shaft is configured to be lapped on the fixing hook.

**52.** The fixing set according to claim 51, wherein the quick-release structure comprises:
a quick-release cam, which is rotatably disposed on the connecting shaft and is configured to be lapped on the fixing hook, and the radius of the quick-release cam gradually increases along a rotation direction;
a rotating handle connected to the quick-release cam.

**53.** The fixing set according to claim 52, wherein the quick-release structure comprises:
a gasket located outside the quick-release cam, the gasket being in floating connection with the connecting shaft;
wherein, the gasket is made of copper;
the gasket is connected to a floating frame, the floating frame is provided with a floating hole, and the connecting shaft passes through the floating hole.

**54.** The fixing set according to claim 48, further comprising:
a fastening structure located at a hinge of any fixing frame and any adjacent adjusting link, the fastening structure being configured to eliminate an installation gap of the annular structure.

**55.** The fixing set according to claim 54, wherein the fastening structure comprises:
a fixing groove and a fastening shaft, one of which is provided on the adjusting link and the other is provided on the adjacent fixing frame;
a fastening cam rotatably disposed on the fastening shaft and located in the fixing groove, the radius of the fastening cam gradually increasing along a rotation direction;
a fastening handle connected to the fastening cam.

**56.** The fixing set according to claim 54, wherein the fastening structure comprises a first part and a second part that is capable of being quickly separated.

**57.** The fixing set according to claim 48, wherein the adjusting link comprises:
two adjusting shafts, which are respectively rotatably connected to the two fixing frames;
an adjusting bolt adjustably connected to the two adjusting shafts;
wherein the adjustable connection includes the adjusting bolt passing through one adjusting shaft and being threadedly connected to the other adjusting shaft, or
the adjusting bolt passing through the two adjusting shafts and being threadedly connected to an adjusting handle.

**58.** The fixing set according to claim 57, wherein the adjusting link further comprises:
a connecting block, both ends of which are respectively connected to the adjusting shaft through connecting holes, wherein at least one of the connecting holes provided at both ends is a strip-shaped hole, and a setting direction of the strip-shaped hole is consistent with an adjusting direction of the adjusting link;
wherein there are at least two connecting blocks, which are respectively located on both sides of the adjusting link; or
there are at least four connecting blocks, which are stacked in pairs and respectively located on both sides of the adjusting link.

**59.** The fixing set according to claim 57, wherein when the adjusting bolt passes through one adjusting shaft and is threadedly connected to the other adjusting shaft, the adjusting link is further fixedly connected to an adjusting handle, and the adjusting handle is provided at an end of of the adjusting bolt opposite to an end where the adjusting bolt is threadedly connected to the adjusting shaft.

**60.** The fixing set according to claim 48, wherein the fixing frame comprises:
a first structural block and a second structural block, one end of the first structural block and one end of the second structural block are fixedly connected to each other to form the fixing frame, and an opposite end of the first structural block and an opposite end of the second structural block are connected to the adjusting link;
wherein the first structural block and the second structural block are arranged at an angle, and inner sides of the first structural block and the second structural block respectively form the fixing planes.

**61.** The fixing frame according to claim 60, wherein a first notch is provided at an end portion of the first structural block, and a second notch is provided at an end portion of the second structural block, the first notch and the second notch are alternately arranged in a complementary manner, and the first structural block and the second structural block are inserted into each other through the first notch and the second notch.

**62.** The fixing frame according to claim 61, wherein the first structural block and the second structural block are both provided with a fixing through hole at one end with a notch, and when the first structural block and the second structural block are inserted into each other, the fixing through holes are aligned, and a fixing pin is inserted into the fixing through hole.

**63.** The fixing set according to claim 48, further comprising:
a temporary fastening apparatus located on an inner side of the annular structure and configured to apply an elastic force inward or elastically protrude inward.

**64.** The fixing set according to claim 63, wherein the temporary fastening apparatus comprises:
an elastic block located in a mounting groove inside the annular structure, the elastic block elastically protruding toward the outside of the mounting groove;
an unlocking block linked with the elastic block and configured to retract the elastic block into the mounting groove.

**65.** The fixing set according to claim 64, wherein the unlocking block is located on an upper side or a lower side of the annular structure, and a movement direction of the unlocking block is an up-down direction; or
there are two unlocking blocks respectively located on an upper side and a lower side of the annular structure, both of the two unlocking blocks are linked with the elastic block, and the movement direction of the unlocking block is an up-down direction.

**66.** The fixing set according to claim 64, wherein a connecting end of the elastic block and/or a connecting end of the unlocking block are provided with a wedge structure, and the elastic block and the unlocking block are linked via the wedge structure.

**67.** The fixing set according to claim 64, wherein a spring is provided in the mounting groove, the spring is configured to push the elastic block out of the mounting groove, and a limiting mechanism is provided at an opening of the mounting groove to prevent the elastic block from falling off from the mounting groove.

**68.** The fixing set according to claim 48, wherein an anti-slip pad is provided on the fixing plane;
and/or
an elastic pad is provided on the fixing plane.

**69.** The fixing set according to claim 48, wherein the fixing frame is provided with the first coupling seat .

**70.** The fixing set according to claim 48, wherein the two fixing planes on the same fixing frame are perpendicular to each other.

**71.** The fixing set according to claim 1, wherein the first type fixing member comprises:
an outer frame, inside which an accommodating space is defined;
a clamping block, part or all of which is movably disposed on an inner side of the outer frame;
an adjusting and locking mechanism, configured to adjust the position of the clamping block relative to the outer frame and lock the clamping block.

**72.** The fixing set according to claim 71, wherein:
the outer frame comprises at least two frame units connected in sequence, adjacent frame units are connected to each other via a hinge structure or a quick-release structure, and two or more frame units are connected end to end in sequence and enclose the accommodating space.

**73.** The fixing set according to claim 72, wherein:
the quick-release structure comprises:
a telescopic pin provided at an end portion of a frame unit, the telescopic pin being elastically ejected to the outside of the end portion of the frame unit;
an insertion hole provided at an end portion of an adjacent frame unit, the insertion hole being arranged corresponding to the telescopic pin;
wherein there are two telescopic pins with opposite ejection directions, which are respectively coupled to the two insertion holes of the adjacent frame unit;
a guide slope is provided at an end portion of the telescopic pin.

**74.** The fixing set according to claim 73, wherein:
an unlocking press button is movably disposed in the insertion hole for abutting against the telescopic pin, and the unlocking press button is configured to move between a first position in which the unlocking press button presses the telescopic pin to retract and a second position in which the unlocking press button contacts the telescopic pin when the telescopic pin is ejected.

**75.** The fixing set according to claim 74, wherein:
one of the insertion hole and the unlocking press button is provided with a compression groove along a generatrix direction and a rotation groove along a circumferential direction on a plane where the insertion hole and the unlocking press button slide and interact, and the compression groove is in communication with the rotation groove;
the other of the insertion hole and the unlocking press button is provided with a limiting protrusion, and the limiting protrusion is configured to slide in the compression groove or the rotation groove;
when the telescopic pin is inserted into the insertion hole, the limiting protrusion is located in the rotation groove.

**76.** The fixing set according to claim 74, wherein:
the frame unit provided with the telescopic pin is also movably provided with a locking elastic piece;
a locking flange is provided on a peripheral side of the unlocking press button;
when the telescopic pin is inserted into the insertion hole, the locking elastic piece acts on the locking flange and prevents the unlocking press button from pressing the telescopic pin;
the frame unit provided with the insertion hole is provided with a locking groove in communication with the insertion hole, and part of the locking elastic piece extends into the locking groove;
the locking elastic piece has an elastic force to rotate toward the locking groove or the locking flange.

**77.** The fixing set according to claim 76, wherein:
the frame unit provided with the locking elastic piece is provided with an outer frame handle.

**78.** The fixing set according to claim 71, wherein:
the first type fixing member further comprises a preloading apparatus, which is provided on the outer frame, and the preloading apparatus is configured to provide preloading pressure to the accommodating space;
the preloading apparatus comprises a preloading block and a preloading spring, the preloading block is located on the inner side of the outer frame, and the preloading spring is configured to elastically push the preloading block inward.

**79.** The fixing set according to claim 78, wherein:
the outer frame is provided with a sliding slot, and the preloading apparatus is slidably disposed in the sliding slot;
the sliding of the preloading apparatus in the sliding slot has a certain damping.

**80.** The fixing set according to claim 78, wherein:
the preloading apparatus further comprises an unlocking handle, which is configured to pull the preloading block or the preloading spring to release the preloading pressure.

**81.** The fixing set according to claim 80, wherein:
the outer frame is also provided with an outer frame handle, and the outer frame handle and
the preloading apparatus are located on the same side of the outer frame.

**82.** The fixing set according to claim 78, wherein:
the preloading apparatus further comprises an unlocking button, and a moving direction of the unlocking button is different from a moving direction of the preloading block;
at least one of the unlocking button and the preloading block is provided with a sliding wedge, and the sliding wedge is configured to slide in contact with the other; when the unlocking button is pressed, the preloading block retracts.

**83.** The fixing set according to claim 71, wherein:
the adjusting and locking mechanism includes an adjusting handle, an adjusting screw, and an adjusting nut;
the adjusting handle is rotatably disposed on the outer frame, one of the adjusting screw and the adjusting nut is connected to the adjusting handle, and the other is connected to the clamping block.

**84.** The fixing set according to claim 83, wherein:
a mark is provided on the clamping block, or the adjusting nut or adjusting screw connected to the clamping block;
the outer frame is provided with a scale and an observation window, which are disposed corresponding to the mark.

**85.** The fixing set according to claim 83, wherein:
the adjusting handle comprises an outer handle and a protection block which are coaxially arranged, and an end face of the outer handle in contact with the protection block is provided with several first slopes with circumferentially varying heights and a first step connecting the several slopes;
an end face of the protection block in contact with the outer handle is provided with a second slope and a second step corresponding to the outer handle.

**86.** The fixing set according to claim 85, wherein:
one of the first slope and the second slope is provided with a positioning bead, and the other is provided with a positioning groove; or
both the first slope and the second slope are provided with positioning beads and positioning grooves which are in one-to-one correspondence with those on the other slope.

**87.** The fixing set according to claim 71, wherein:
the outer frame is provided with a guide groove, part or all of the clamping block is located in the guide groove, and the guide groove is configured to guide the clamping block to slide and prevent the clamping block from rotating.

**88.** The fixing set according to claim 71, wherein:
the clamping block comprises a pressing seat and a replacement block;
the pressing seat is connected to the adjusting and locking mechanism and is movably disposed on an inner side of the outer frame;
the replacement block is detachably connected to the clamping block.

**89.** The fixing set according to claim 88, wherein:
there are at least two replacement blocks, and at least one of the shapes or sizes of the replacement blocks is different.

**90.** The fixing set according to claim 71, wherein:
the outer frame is provided with the first coupling seat.

**91.** The fixing set according to claim 1, wherein the first type fixing member comprises:
a first main body and a second main body, which are fastened together, and an outer through hole is opened on a contact surface between the first main body and the second main body, wherein the outer through hole is opened on the first main body or on the second main body, or partially opened on the first main body and partially on the second main body, and the outer through hole is configured to clamp a crossbar or other columns;
a cushion block, which is located between the first main body and the second main body, and part or all of the cushion block is located in the outer through hole.

**92.** The fixing set according to claim 91, wherein:
one of the first main body and the second main body is provided with an enclosure, and the outer contour of the other is at least partially consistent with the inner contour of the enclosure.

**93.** The fixing set according to claim 91, wherein:
the first main body and the second main body are connected by a bolt.

**94.** The fixing set according to claim 93, wherein:
the bolt connection is located at four corners of the first main body and/or the second main body.

**95.** The fixing set according to claim 91, wherein:
the first main body and/or the second main body are provided with a mounting groove, and the cushion block is located in the mounting groove.

**96.** The fixing set according to claim 95, wherein:
the cushion block is elastic.

**97.** The fixing set according to claim 95, wherein:
the cushion block is provided with an inner through hole, and the diameter of the inner through hole is smaller than the diameter of the outer through hole.

**98.** The fixing set according to claim 95, wherein:
there are two cushion blocks, which are respectively located in the mounting groove of the first main body and the mounting groove of the second main body.

**99.** The fixing set according to claim 95, wherein:
the cushion block is slidably mounted in the mounting groove, and a sliding direction is the same as a fastening direction.

**100.** The fixing set according to any one of claims 91-99, further comprising:
a first coupling seat, which is provided on the first main body or the second main body.

**101.** The fixing set according to claim 1, wherein the first type fixing member comprises:
a connecting seat, which is configured to install the fitness device or massage device, or on which a first coupling seat for installing the fitness device or massage device is arranged;
a cordage or cable, opposite ends of which are wrapped around an external environment and connected to the connecting seat;
wherein the first type fixing member further comprises a tightening apparatus for tightening the cordage or cable; and/or
the cordage or cable has elasticity; and/or
the cordage or cable is provided with a length adjustment apparatus.

**102.** The fixing set according to claim 101, wherein:
the cordage or cable is split in the middle and connected to each other via a quick-connect connector; and/or
one end of the cordage or cable is quickly connected to the connecting seat; and/or one end of the cordage or cable is connected to the connecting seat via a quick-connect connector.

**103.** The fixing set according to claim 102, wherein:
the quick-connect connector comprises a first coupling joint and a second coupling joint;
the first coupling joint and the second coupling joint are respectively connected to the two sections of the cordage or cable at the split position; or
one of the first coupling joint and the second coupling joint is connected to an end portion of the cordage or cable, and the other is provided on the connecting seat;
the fixing set further comprises an extension cordage or an extension cable, and opposite ends of the extension cordage or extension cable are respectively connected to the first coupling joint and the second coupling joint.

**104.** The fixing set according to claim 101, wherein:
the tightening apparatus comprises a reel, one end of the cordage or cable is wound around and fixed on the reel, and the reel rotates to wind up and tighten the cordage or cable; or
the tightening apparatus comprises a movably disposed tightening member, one end of the cordage or cable is connected with the tightening member, and the tightening member movably tightens the cordage or cable.

**105.** The fixing set according to claim 104, wherein:
the tightening apparatus includes a handle;
the handle is connected to the reel, and the handle is configured to drive the reel to rotate; or
the handle is connected to the tightening member, and the handle is configured to drive the tightening member to move.

**106.** The fixing set according to claim 104, wherein:
the reel is connected to the connecting seat via a first one-way transmission mechanism, and
the first one-way transmission mechanism allows rotation in a tightening direction and locks rotation in a reverse direction.

**107.** The fixing set according to claim 106, further comprising a clutch apparatus, which is configured to release the lock of the first one-way transmission mechanism.

**108.** The fixing set according to claim 105, wherein:
the handle comprises a cam wrench, which is rotatably connected to the tightening member, and as the cam wrench rotates, the minimum distance between the tightening member and the connecting seat gradually increases or decreases; or
the handle forms a four-bar linkage with the tightening member and the connecting seat via a link, and the tightening member is driven to move by moving the handle.

**109.** The fixing set according to claim 108, wherein:
when the handle is rotated to contact the connecting seat, the four-bar linkage passes over a dead point; and/or
the fixing set further comprises a handle locking mechanism for locking or unlocking the rotation of the handle.

**110.** The fixing set according to any one of claims 101-109, wherein:
there are a plurality of cordages or cables, and the cordage or cable is quickly connected to or disassembled with the connecting seat; and/or
the cordage or cable is provided with an adjusting buckle for adjusting the length; and/or
a fixing block is passed through or fixedly disposed on the cordage or cable; and/or
a magnetic block or an anti-skid block is passed through or fixedly arranged on the cordage or cable; and/or
a magnet block is provided on an inner surface or inside of the connecting seat; and/or
an anti-slip block is provided on an inner side of the connecting seat.

**111.** The fixing set according to claim 1, wherein the first type fixing member comprises:
a body fixing belt for a person to wear and fix; and
the first coupling seat, which is mounted on the body fixing belt.

**112.** The fixing set according to claim 111, wherein:
the wearing fixing member further comprises a sliding seat, which is fixedly disposed on the body fixing belt, and the fixing seat is slidably mounted on the sliding seat.

**113.** The fixing set according to claim 111 or 112, further comprising handles, which are located on both sides of the fixing seat.

**114.** The fixing set according to claim 111, wherein:
the body fixing belt comprises a waist belt, and the fixing seat is provided on the waist belt.

**115.** The fixing set according to claim 114, wherein the body fixing belt further comprises a shoulder belt, a back belt and/or a hip belt connected to the waist belt.

**116.** The fixing set according to claim 115, wherein there are at least two waist belts, and front sides of the two waist belts are connected to each other via a connecting belt; or
the width of the waist belt is greater than 10cm.

**117.** The fixing set according to any one of claims 111-116, wherein:
the body fixing belt is provided with an adjusting structure, and the adjusting structure is configured to adjust the length of the body fixing belt and lock it; and/or
the body fixing belt is provided with a quick connection structure, and the quick connection structure is configured to quickly disconnect or reconnect the body fixing belt at the connection.

**118.** The fixing set according to claim 1, wherein the second type fixing member comprises:
a first seat provided with a second coupling seat;
a second seat rotatably connected to the first seat;
a first coupling seat provided on the second seat.

**119.** The fixing set according to claim 118, wherein:
first connecting ribs are respectively provided on two sides of a coupling surface of the first seat or the second seat; or
a first connecting groove is provided in the middle of a connecting surface of the first seat or the second seat;
rotating shaft holes are provided on two sides of the first connecting rib or the first connecting groove for rotatably connecting the second seat and the first seat.

**120.** The fixing set according to claim 119, wherein:
second connecting ribs are respectively provided on two sides of the coupling surface of the second seat or the first seat; or
a second connecting groove is provided in the middle of the coupling surface of the second seat or the first seat;
rotating shaft holes are provided on two sides of the second connecting rib or the second connecting groove, which are configured to cooperate with the rotating shaft holes of the first connecting rib or the first connecting groove to rotatably connect the second seat and the first seat.

**121.** The fixing set according to claim 119, wherein:
the first seat and the second seat are further rotatably connected in the middle via a revolute pair, and a rotating shaft of the revolute pair is coaxial with the rotating shaft hole of the first connecting rib or the first connecting groove.

**122.** The fixing set according to claim 118, wherein:
the first seat and the second seat are rotatably connected via a damping rotating shaft.

**123.** The fixing set according to claim 122, wherein:
the damping rotating shaft comprises a damping sheet, which is fixedly connected to one of the second seat or the first seat in a rotation direction and is in frictional contact with the other; or
there are two damping sheets, which are respectively fixedly connected to the first seat or the second seat in a rotation direction, and the two damping sheets are in frictional contact with each other.

**124.** The fixing set according to claim 118, wherein an angle locking device is arranged between the first seat and the second seat for locking or unlocking the relative rotation angle between them.

**125.** The fixing set according to claim 124, wherein the angle locking apparatus comprises a locking disc and a pin shaft, the locking disc and the pin shaft are respectively fixedly connected to the first seat and the second seat in the rotation direction, and several locking holes are distributed on the locking disc along the rotation direction for the pin shaft to be inserted.

**126.** The fixing set according to claim 125, wherein the angle locking device further comprises a cam wrench, which is connected to the pin shaft and is configured to drive the pin shaft to expand or contract along its axial direction and achieve frictional locking.

**127.** The fixing set according to claim 118, wherein the second coupling seat is provided with a hook and a first elastic member, the hook is configured to snap-fit onto the first coupling seat, and the first elastic member applies an elastic force for the hook to snap-fit onto the first coupling seat.

**128.** The fixing set according to claim 127, wherein the rotating fixing member further comprises a latching member movably disposed on the first seat, the latching member includes a first state in which the latching member limits the rotation angle of the hook when the hook is clamped, and a second state in which it does not interfere with the hook to allow the hook to rotate freely.

**129.** The fixing set according to claim 128, wherein the latching member is driven by a handle, and the first seat is provided with a channel for the handle to extend out and move.

**130.** The fixing set according to claim 129, wherein the latching member or the handle is provided with a first locking part, the first seat is provided with a second locking part, and the first locking part and the second locking part are locked with each other along a first direction when in contact;
the fixing set further comprises a second elastic member, which acts on the latching member, the handle, the first locking part or the second locking part, and is configured to apply an elastic force to make the first locking part and the second locking part contact;
the handle is movably disposed in the channel, which is configured to move along the first direction and an opposite direction to drive the latching member, and move along a second direction to make the first locking part contact with or separate from the second locking part.

**131.** The fixing set according to claim 130, wherein the first locking part and the second locking part are locked to each other in a one-way locking manner along a first direction.

**132.** The fixing set according to claim 1, wherein the third type fixing member comprises:
an extension base, the extension base being provided with the second coupling seat for connecting with the first type fixing member;
an extension rod, an end of which is provided on the extension base;
wherein the extension rod is configured for mounting the first type fixing member; or
the extension rod is provided with a mounting hole, and the mounting hole is configured for mounting the first type fixing member.

**133.** The fixing set according to claim 1, wherein the second type fixing member comprises:
an extension base, the extension base being provided with the second coupling seat for connecting with the first type fixing member;
an extension rod, an end of which is provided on the extension base;
wherein the extension rod is provided with the first coupling seat; or
the extension rod is provided with the first coupling seat via an adjusting apparatus, and the adjusting apparatus is configured to adjust the position of the first coupling seat along an axial direction of the extension rod.

**134.** The fixing set according to claim 1, wherein the second type fixing member comprises:
an extension base, which is configured to establish a connection with the installation environment;
an extension rod, an end of which is provided on the extension base, and the extension rod is provided with the first coupling seat.

**135.** The extension fixing module according to claim 132, 133 or 134, further comprising a protective plate, an end of the protective plate is fixed to the extension base, and a side surface of the protective plate is fixed to a side surface of the extension rod;
there are at least three protective plates, and their side edges are connected in sequence.

**136.** The extension fixing module according to claim 135, wherein a cross-section of the extension rod is rectangular or square, and there are four protective plates, which are respectively fixedly connected to four sides of the extension rod.

**137.** The extension fixing module according to claim 136, wherein an end portion of the extension rod is provided with a through hole, at least one pair of the protective plates is provided with connecting holes, and the side surface of the protective plate and the side surface of the extension rod are fixed by a connecting pin passing through the connecting holes of the protective plates and the through hole; or
an end portion of the extension rod is provided with through holes in two directions, the through holes in the two directions are arranged in a staggered manner, two pairs of the protective plates are provided with connecting holes, the connecting holes on the two pairs of protective plates are arranged in a staggered manner, and the side surface of the protective plate and the side surface of the extension rod are fixed by a connecting rod passing through the connecting holes of the opposite protective plates and the through hole.

**138.** The extension fixing module according to claim 137, wherein there are at least two through holes on one protective plate.

**139.** The extension fixing module according to claim 138, 133 or 134, wherein the extension rod is hollow; and/or
a plurality of first through holes are equidistantly provided on the side surface of the extension rod; and/or
a plurality of second through holes are equidistantly provided on the side surface of the extension rod, and the first through holes and the second through holes are opened in different directions.

**140.** The extension fixing module according to claim 139, wherein the first through holes and
the second through holes are arranged in a staggered manner;
a distance between adjacent first through holes is no less than a diameter of the second through hole, and a distance between adjacent second through holes is no less than a diameter of the first through hole.

**141.** The extension fixing module according to claim 132, wherein there are a plurality of first coupling seats on the extension rod, which are provided at different positions of the extension rod.

**142.** The fixing set according to claim 1, wherein the first type fixing member, the second type fixing member and/or the third type fixing member are provided with a fixing and clamping apparatus and/or anchor points for the fitness device or massage device.

**143.** The fixing set according to claim 1, wherein the first type fixing member, the second type fixing member and/or the third type fixing member are provided with a sliding apparatus or a walking apparatus.
